# EUROPEAN PATENT SPECIFICATION

(11) **EP 4 227 272 B1**
(45) Date of publication and mention of the grant of the patent: **12.11.2025**
(21) Application number: 22802859.3
(22) Date of filing: 24.08.2022
(51) Int. Cl.: C03B 33/033, B26F 3/00, B28D 5/00, C03B 33/10, B65G 49/06, B28D 1/22, C03B 33/03, C03B 33/04, C03B 33/027

(54) **BEND-BREAKING JIG AND BEND-BREAKING PROCESS METHOD**
BIEGUNGSBRECHENDE SPANNVORRICHTUNG UND BIEGUNGSBRECHENDES VERFAHREN
GABARIT DE FRACTURE, ET PROCÉDÉ D'USINAGE PAR FRACTURE

(30) Priority: 22.12.2021 JP 2021207866; 23.08.2022 JP 2022132172
(43) Date of publication of application: 16.08.2023
(73) Proprietor: BANDO KIKO CO., LTD., Tokushima 770-0871 (JP)
(72) Inventor: BANDO Kazuaki, Tokushima-shi Tokushima 7700871 (JP)
(74) Representative: J A Kemp LLP
(86) International application number: PCT/JP2022/031844
(87) International publication number: WO 2023/119728

(56) References cited:
- JP-A- 2013 237 236
- JP-A- 2013 237 236
- JP-A- 2015 140 290
- JP-A- 2015 140 290
- JP-A- H08 217 476
- JP-A- H08 217 476

## Description

### Technical Field

The present invention relates to a bend-breaking jig installed in a bend-breaking device that bend-breaks an edge part of a glass plate to be processed, such as a window glass plate or a liquid crystal glass plate of an automobile, and also relates to a bend-breaking processing method that bend-breaks the edge part of the glass plate to be processed using the bend-breaking device in which the bend-breaking jig is installed.

### Background Art

There is disclosed a glass plate processing system including: a loading conveyor that carries in a glass plate; a cutting processing area located in front of the loading conveyor; a bend-breaking processing area located in front of the cutting processing area; a grinding processing area located in front of the bend-breaking processing area; an unloading conveyor located in front of the grinding processing area; and a conveyance mechanism that conveys the glass plate from the loading conveyor to each processing area (see Patent Literature 1).

JPH08217476 discloses moderating an impact force in the contact of a cutter wheel with the plate glass by a moderating means on processing a cutting line by thrusting and transferring the cutter wheel on the plate glass, and also moderating the variation of thrusting force of cutter wheel caused by the alteration of conditions of cutting line processing during that processing by the moderating means.

JP 2013/237236 discloses a scribe treatment system which scribes a brittle material substrate by relatively moving a scribe head to the brittle material substrate while bringing a wheel tip into contact with the brittle material substrate, includes: a restoration means for restoring a control number of the wheel tip by using a code printed on a tip holder; a use history data holding means for holding a history of twist frequencies of the wheel tip when scribe treatment has been performed; and a recipe data holding means for holding recipe data in each of which scribe treatment contents, the twist frequencies and an exchange recommendation value are described. The scribe treatment according with one of the recipe data selected through an input means is performed by using the code-read wheel tip.

When an integrated value of the twist frequencies exceeds the exchange recommendation value, it is reported that the wheel tip is in an exchange-recommended state.

JP 2015/140290 discloses break apparatus which comprises a conveyor including a conveyance belt for conveying a stuck substrate placed thereon, a press member which is disposed over the conveyance belt and can move up and down, a first receiving member which comes into contact with the reverse side of the conveyance belt, and a press member which is disposed over the conveyance belt upstream from the press member in a substrate conveying direction and can move up and down. The conveyance belt is formed of an elastic raw material which flexes with pressing force of the press member, and the first receiving member has an edge on a substrate conveying-direction downstream side formed extending in a direction orthogonal to the substrate conveying direction.

The present invention is defined in the claims.

### Citation List

### Patent Literature

Patent Literature 1: JP 2020-040877 A

### Summary of Invention

### Technical Problem

As illustrated in Fig. 31, the bend-breaking device 125 of the glass plate processing system disclosed in Patent Literature 1 is formed of a bend-breaking jig 126, a first lifting mechanism 127 (air cylinder), a pressing roller 128, and a second lifting mechanism 129 (air cylinder). The bend-breaking jig 126 includes a bend-breaking cutter wheel 130 that forms an end cut line at an edge part of a glass plate, and a bend-breaking cutter holder 131 that is positioned above the bend-breaking cutter wheel 130 and supports the bend-breaking cutter wheel 130. The bend-breaking cutter holder 131 includes a holder main body having a connecting part, and a holder head attached to a tip of the holder main body. The bend-breaking cutter holder 131 rotates in a circumferential direction (around an axis) with respect to a cutter holder center axis extending in an up-down direction by the rotation of a θ-axis servomotor 132.

The holder head is connected to the holder body via a bearing, and is rotatable in the circumferential direction (θ direction) with respect to the cutter holder center axis of the bend-breaking cutter holder 131. A rotation angle regulating pin that regulates rotation of the holder head in the circumferential direction of the cutter holder center axis is inserted into the holder main body. The rotation angle regulating pin regulates the rotation of the holder head in the circumferential direction of the cutter holder center axis to 5° to 10°. The bend-breaking cutter wheel 130 is rotatably attached to a tip of the holder head via a rolling shaft. A cutter wheel axis extending in the up-down direction of the bend-breaking cutter wheel 130 is eccentric radially outward with respect to the cutter holder center axis of the holder main body.

The bend-breaking processing in the glass plate processing system disclosed in Patent Literature 1 is as follows. The bend-breaking jig 126 and the pressing roller 128 of the bend-breaking device 125 are moved in the front-back direction (X direction) and the width direction (Y direction) by an X-axis actuator and a Y-axis actuator, the bend-breaking cutter wheel 130 of the bend-breaking jig 126 is located in the vicinity of the outline cutting line of the glass plate, and the pressing roller 128 is located at an outer edge part of the outline cutting line of the glass plate. Next, as the θ-axis servomotor 132 rotates, the bend-breaking cutter holder 131 rotates in the circumferential direction of the cutter holder center axis (θ-direction), and a rolling direction of the bend-breaking cutter wheel 130 changes to a direction in which a virtual end cut line of the edge part of the glass plate extends (a moving direction of the bend-breaking jig 126).

After the rolling direction of the bend-breaking cutter wheel 130 becomes the same as the direction in which the virtual end cut line extends (the moving direction of the bend-breaking jig 126), the bend-breaking jig 126 is lowered toward an upper surface of the glass plate by the first lifting mechanism 127, and the bend-breaking cutter wheel 130 abuts on the upper surface of the glass plate. Next, the bend-breaking device 125 moves toward an edge of the edge part of the glass plate, and forms an end cut line on the edge part of the glass plate by the bend-breaking cutter wheel 130. After the end cut line is formed on the edge part of the glass plate, the bend-breaking jig 126 of the bend-breaking device 125 moves to a predetermined position on the edge part of the glass plate. Next, the pressing roller 128 is lowered toward the upper surface of the glass plate by the second lifting mechanism 129, and the pressing roller 128 in contact with the upper surface of the glass plate presses the edge part of the glass plate downward, thereby bend-breaking and breaking the edge part of the glass plate from the main body of the glass plate.

In the bend-breaking processing in the glass plate processing system disclosed in Patent Literature 1, the rotation of the θ-axis servomotor 132 changes the rolling direction of the bend-breaking cutter wheel 130 to the direction in which the virtual end cut line of the edge part of the glass plate extends (the moving direction of the bend-breaking jig). However, it is necessary to install the θ-axis servomotor 132 and a transmission member (such as a pulley and a belt) for transmitting a rotational force thereof to the bend-breaking cutter holder 131 in the glass plate processing system, and it is not possible to achieve downsizing, energy saving, and cost reduction of the system. Furthermore, in the bend-breaking processing, the rolling direction of the bend-breaking cutter wheel 130 needs to be made the same as the direction in which the virtual end cut line of the edge part of the glass plate extends (the moving direction of the bend-breaking jig) by rotating the θ-axis servomotor 132, and the rolling direction of the bend-breaking cutter wheel 130 needs to be changed using the θ-axis servomotor 132 every time the end cut line is formed, so that it is not possible to shorten the time and improve the efficiency of the bend-breaking processing.

An object of the present invention is to provide a bend-breaking jig and a bend-breaking processing method capable of easily changing a rolling direction of a bend-breaking cutter wheel in bend-breaking processing to a direction in which a virtual end cut line of an edge part of a glass plate extends (a moving direction of the bend-breaking jig) without using a θ-axis servomotor or a transmission member (a pulley, a belt, or the like), and capable of achieving downsizing, energy saving, and cost reduction. Another object of the present invention is to provide a bend-breaking jig and a bend-breaking processing method capable of reducing the time and improving the efficiency of bend-breaking processing.

### Solution to Problem

A first premise of the present invention for solving the above problems is a bend-breaking jig installed in a bend-breaking device that bend-breaks an edge part of a glass plate to be processed.

A feature of a bend-breaking jig according to the present invention in the first premise is that the bend-breaking jig includes: a bend-breaking cutter wheel that forms an end cut line (scribe) on an edge part of a glass plate; and a bend-breaking cutter holder that is positioned above the bend-breaking cutter wheel and supports the bend-breaking cutter wheel, said bend-breaking cutter holder includes a holder main body including a connecting part, and a holder head attached to a distal end of the holder main body, said holder head is connected to the holder main body via a bearing, wherein a cutter wheel axis extending in an up-down direction of the bend-breaking cutter wheel is eccentric radially outward with respect to a cutter holder center axis extending in an up-down direction of the bend-breaking cutter holder, and the bend-breaking cutter wheel is rotatable by 360° in a direction around the cutter wheel axis with respect to the bend-breaking cutter holder, and when the bend-breaking jig travels in a predetermined direction on an upper surface of the edge part of the glass plate in parallel with the upper surface, the bend-breaking cutter wheel abutting on the upper surface of the edge part of the glass plate rotates in the direction around the cutter wheel axis, and a rolling direction of the bend-breaking cutter wheel becomes identical with a traveling direction of the bend-breaking jig, said bend-breaking jig further comprising: a pressing member that presses the edge part of the glass plate on which the end cut line is formed; and a second lifting mechanism that lifts and lowers the pressing member, wherein after the end cut line is formed on the edge part of the glass plate by the bend-breaking cutter wheel, the pressing member is lowered toward the upper surface of the edge part of the glass plate by the second lifting mechanism, and the pressing member presses the edge part of the glass plate downward to bend-break the edge part of the glass plate from a main body of the glass plate, and wherein the pressing member includes a penetrating part opened at a center of the pressing member, said bend-breaking cutter wheel is positioned at the penetrating part of the pressing member, and in the bend-breaking jig, when the bend-breaking cutter holder is lowered toward the upper surface of the edge part of the glass plate by the second lifting mechanism, the bend-breaking cutter wheel is exposed downward from the penetrating part of the pressing member.

As an example of the bend-breaking jig of the present invention, the bend-breaking jig includes a first lifting mechanism that lifts and lowers the bend-breaking cutter holder in an up-down direction, in which when an end cut line is formed on the edge part of the glass plate, the bend-breaking cutter holder is lowered toward the upper surface of the edge part of the glass plate by the first lifting mechanism and the bend-breaking cutter wheel abuts on the upper surface of the edge part of the glass plate, and after the bend-breaking jig travels in the predetermined direction and the rolling direction of the bend-breaking cutter wheel becomes identical with the traveling direction of the bend-breaking jig, the bend-breaking jig travels in the predetermined direction so that the bend-breaking cutter wheel forms the end cut line on the edge part of the glass plate along the traveling direction of the bend-breaking jig.

As another example of the bend-breaking jig of the present invention, the bend-breaking jig repeats: a lifting operation in which the bend-breaking cutter holder is lifted from the upper surface of the edge part of the glass plate by the first lifting mechanism after the end cut line is formed for a first time in a predetermined area of the edge part of the glass plate; a moving operation in which the bend-breaking jig is moved to a next end cut line forming area of the edge part of the glass plate after the bend-breaking cutter holder is lifted; a lowering operation in which the bend-breaking cutter holder is lowered toward the upper surface of the edge part of the glass plate by the first lifting mechanism after the bend-breaking jig is moved to the next end cut line forming area; a rolling direction changing operation in which the bend-breaking jig travels in a predetermined direction and a rolling direction of the bend-breaking wheel cutter changes to a traveling direction of the bend-breaking jig after the bend-breaking cutter holder is lowered; and an end cut line forming operation in which the bend-breaking jig travels in the predetermined direction so that the bend-breaking cutter wheel forms the end cut line on the edge part of the glass plate along the traveling direction of the bend-breaking jig after the rolling direction of the bend-breaking cutter wheel becomes identical with the traveling direction of the bend-breaking jig.

As another example of the bend-breaking jig of the present invention, the rolling direction changing operation changes the rolling direction of the bend-breaking cutter wheel to a direction in which a virtual end cut line of the edge part of the glass plate extends by causing the bend-breaking jig to travel toward a direction of a start point of the end cut line at a rolling direction changing position in a vicinity of the edge part of the glass plate including an outline cutting line of a main body of the glass plate or a rolling direction changing position in a vicinity of the edge part of the glass plate including an edge of the glass plate.

As another example of the bend-breaking jig of the present invention, the rolling direction changing operation changes the rolling direction of the bend-breaking cutter wheel to the direction in which the virtual end cut line of the edge part of the glass plate extends by causing the bend-breaking jig to draw a circular trajectory from a rolling direction change start point toward the start point of the end cut line at the rolling direction changing position.

As another example of the bend-breaking jig of the present invention, the rolling direction changing operation causes the bend-breaking jig to travel in a straight line from a rolling direction change start point toward the start point of the end cut line at the rolling direction changing position so that an angle formed by a direction in which the end cut line of the edge part of the glass plate extends and the traveling direction of the bend-breaking jig toward the start point of the end cut line becomes 90° or less, and after the rolling direction of the bend-breaking cutter wheel is changed to the direction in which the virtual end cut line extends, the traveling direction of the bend-breaking jig is changed to the direction in which the end cut line extends at an angle of 90° or less at the start point of the end cut line, and the bend-breaking jig is caused to travel in the direction in which the end cut line extends.

As another example of the bend-breaking jig of the present invention, the rolling direction changing operation causes the bend-breaking jig to travel along the end cut line of the edge part of the glass plate at the rolling direction changing position from a rolling direction change start point toward the start point of the end cut line, or causes the bend-breaking jig to travel on the end cut line from the rolling direction change start point toward the start point of the end cut line at the rolling direction changing position, and after the rolling direction of the bend-breaking cutter wheel is changed to the direction in which the virtual end cut line extends, reverses the bend-breaking jig (360° U-turn) at the start point of the end cut line to change the traveling direction of the bend-breaking jig to the direction in which the end cut line extends, and causes the bend-breaking jig to travel in the direction in which the end cut line extends.

As another example of the bend-breaking jig of the present invention, the pressing member is formed of: a plate parallel to an upper surface of the glass plate; and a pressing rubber molded in a truncated hemispherical shape with a head cut off from a surface parallel to a bottom surface and fixed to a lower surface of the plate, and the penetrating part is formed at a center of the plate and a center of the pressing rubber.

A second premise of the present invention for solving the above problems is a bend-breaking processing method of bend-breaking an edge part of a glass plate to be processed using a bend-breaking device in which a bend-breaking jig is installed.

A feature of the bend-breaking processing method according to the present invention in the second premise is a method as defined in claim 9.

As an example of the bend-breaking processing method of the present invention, the bend-breaking jig includes a first lifting mechanism that lifts and lowers the bend-breaking cutter holder in an up-down direction, the bend-breaking processing method includes a holder lowering step of lowering the bend-breaking cutter holder toward the upper surface of the edge part of the glass plate by the first lifting mechanism and causing the bend-breaking cutter wheel to abut on the upper surface of the edge part of the glass plate before the rolling direction changing step, and in the rolling direction changing step, the bend-breaking jig is caused to travel on the upper surface of the edge part of the glass plate in a predetermined direction parallel to the upper surface to change the rolling direction of the bend-breaking cutter wheel to the traveling direction of the bend-breaking jig after the bend-breaking cutter wheel is caused to abut on the upper surface of the edge part of the glass plate in the holder lowering step.

As another example of the bend-breaking processing method of the present invention, the bend-breaking processing method includes: a holder lifting step of lifting the bend-breaking cutter holder from the upper surface of the glass plate by the first lifting mechanism after the end cut line is formed for a first time in a predetermined area of the edge part of the glass plate in the end cut line forming step; and a jig moving step of moving the bend-breaking jig to a next end cut line forming area of the edge part of the glass plate after the bend-breaking cutter holder is lifted in the holder lifting step, wherein in the holder lowering step, the bend-breaking cutter holder is lowered toward the upper surface of the edge part of the glass plate extending to the next end cut line forming area by the first lifting mechanism after the bend-breaking jig is moved to the next end cut line forming area in the jig moving step, in the rolling direction changing step, the bend-breaking jig is caused to travel in a predetermined direction on the upper surface of the edge part of the glass plate in the next end cut line forming area, and the rolling direction of the bend-breaking cutter wheel is changed to the traveling direction of the bend-breaking jig after the bend-breaking cutter holder is lowered in the holder lowering step, and in the end cut line forming step, the bend-breaking jig is caused to travel in a predetermined direction in the next end cut line forming area, and an end cut line is formed on the edge part of the glass plate in the next end cut line forming area by the bend-breaking cutter wheel after the rolling direction of the bend-breaking cutter wheel is changed to the traveling direction of the bend-breaking jig in the rolling direction changing step.

As another example of the bend-breaking processing method of the present invention, in the rolling direction changing step, the rolling direction of the bend-breaking cutter wheel is changed to a direction in which a virtual end cut line of the edge part of the glass plate extends by causing the bend-breaking jig to travel toward a direction of a start point of the end cut line in a rolling direction changing area in a vicinity of the edge part of the glass plate including an outline cutting line of a main body of the glass plate or at a rolling direction changing position in a vicinity of the edge part of the glass plate including an edge of the glass plate.

As another example of the bend-breaking processing method of the present invention, in the rolling direction changing step, the rolling direction of the bend-breaking cutter wheel is changed to the direction in which the virtual end cut line of the edge part of the glass plate extends by causing the bend-breaking jig to draw a circular trajectory from a rolling direction change start point toward the start point of the end cut line at the rolling direction changing position.

As another example of the bend-breaking processing method of the present invention, in the rolling direction changing step, the bend-breaking jig is caused to travel in a straight line from a rolling direction change start point toward the start point of the end cut line at the rolling direction changing position so that an angle formed by a direction in which the end cut line of the edge part of the glass plate extends and the traveling direction of the bend-breaking jig toward the start point of the end cut line becomes 90° or less, and after the rolling direction of the bend-breaking cutter wheel is changed to the direction in which the virtual end cut line extends, the traveling direction of the bend-breaking jig is changed to the direction in which the end cut line extends at an angle of 90° or less at the start point of the end cut line, and the bend-breaking jig is caused to travel in the direction in which the end cut line extends.

As another example of the bend-breaking processing method of the present invention, in the rolling direction changing step, the bend-breaking jig is caused to travel along the end cut line of the edge part of the glass plate at the rolling direction changing position from a rolling direction change start point toward the start point of the end cut line, or is caused to travel on the end cut line from the rolling direction change start point toward the start point of the end cut line at the rolling direction changing position, and after the rolling direction of the bend-breaking cutter wheel is changed to the direction in which the virtual end cut line extends, the bend-breaking jig is reversed (360° U-turn) at the start point of the end cut line to change the traveling direction of the bend-breaking jig to the direction in which the end cut line extends, and is caused to travel in the direction in which the end cut line extends.

As another example of the bend-breaking processing method of the present invention, the pressing member is formed of: a plate parallel to an upper surface of the glass plate; and a pressing rubber molded in a truncated hemispherical shape with a head cut off from a surface parallel to a bottom surface and fixed to a lower surface of the plate, and the penetrating part is formed at a center of the plate and a center of the pressing rubber. Advantageous Effects of Invention

According to the bend-breaking jig according to the present invention, since the cutter wheel axis of the bend-breaking cutter wheel is eccentric radially outward with respect to the cutter holder center axis of the bend-breaking cutter holder, the bend-breaking cutter wheel rotates in a direction around the cutter wheel axis (around the axis) only by running (moving) the bend-breaking jig in a predetermined direction, and the rolling direction of the bend-breaking cutter wheel can be quickly and easily changed. In the bend-breaking jig, when the bend-breaking jig travels on the upper surface of the edge part of the glass plate in a predetermined direction in parallel with the upper surface, the bend-breaking cutter wheel abutting on the upper surface of the edge part of the glass plate rotates in the direction around the cutter wheel axis, and the rolling direction of the bend-breaking cutter wheel becomes the same as the traveling (moving) direction of the bend-breaking jig. Therefore, the rolling direction of the bend-breaking cutter wheel can be made to coincide with the traveling direction of the bend-breaking jig (the direction in which the virtual end cut line of the edge part of the glass plate extends), and the rolling direction of the bend-breaking cutter wheel and the traveling direction of the bend-breaking jig can be made to be the same in the initial movement of the series of the end cut line formation in the edge part of the glass plate. When the bend-breaking jig is used in the glass plate processing system disclosed in Patent Literature 1, it is not necessary to install a θ-axis servomotor or a transmission member (a pulley, a belt, or the like) that transmits a rotational force of the θ-axis servomotor to the bend-breaking cutter holder in the system, and it is possible to achieve downsizing, energy saving, and cost reduction of the system. Moreover, since it is not necessary to make the rolling direction of the bend-breaking cutter wheel the same as an extending direction of the virtual end cut line of the edge part of the glass plate (the traveling direction of the bend-breaking jig) by rotating the θ-axis servomotor in the bend-breaking processing, and it is not necessary to change the rolling direction of the bend-breaking cutter wheel using the θ-axis servomotor every time the end cut line is formed, it is possible to shorten the time and improve the efficiency of the bend-breaking processing in the glass plate processing system.

The bend-breaking jig includes the first lifting mechanism that moves the bend-breaking cutter holder up and down in an up-down direction, the first lifting mechanism lowers the bend-breaking cutter holder toward the upper surface of the edge part of the glass plate and causes the bend-breaking cutter wheel abut on the upper surface of the edge part of the glass plate at a time of forming an end cut line with respect to the edge part of the glass plate, the bend-breaking jig travels (moves) in a predetermined direction to make the rolling direction of the bend-breaking cutter wheel the same as the traveling (moving) direction of the bend-breaking jig, and then the bend-breaking jig travels (moves) in the predetermined direction to form the end cut line on the edge part of the glass plate along the traveling direction of the bend-breaking jig, wherein the bend-breaking jig forms the end cut line on the edge part of the glass plate after the bend-breaking cutter holder abuts on the upper surface of the edge part of the glass plate by the first lifting mechanism, by making the bend-breaking jig travel in a predetermined direction, the rolling direction of the bend-breaking cutter wheel can be made the same as the traveling direction of the bend-breaking jig, and the rolling direction of the bend-breaking cutter wheel can be reliably matched with the traveling direction of the bend-breaking jig (the direction in which the virtual end cut line of the edge part of the glass plate extends).

The bend-breaking jig repeats a lifting operation in which the bend-breaking cutter holder is lifted from the upper surface of the edge part of the glass plate by the first lifting mechanism after an end cut line is formed for a first time in a predetermined area of the edge part of the glass plate, a moving operation in which the bend-breaking jig moves to a next end cut line forming area of the edge part of the glass plate after the bend-breaking cutter holder is lifted, a lowering operation in which the bend-breaking cutter holder is lowered toward the upper surface of the edge part of the glass plate by the first lifting mechanism after the bend-breaking jig moves to the next end cut line forming area, a rolling direction changing operation in which the bend-breaking jig travels (moves) in a predetermined direction and a rolling direction of the bend-breaking cutter wheel changes to a traveling (moving) direction of the bend-breaking jig after the bend-breaking cutter holder is lowered, and an end cut line forming operation in which the bend-breaking jig travels in a predetermined direction and the bend-breaking cutter wheel forms an end cut line on the edge part of the glass plate along the traveling direction of the bend-breaking jig after the rolling direction of the bend-breaking cutter wheel becomes the same as the traveling direction of the bend-breaking jig, and then, in each end cut line forming area in the edge part of the glass plate to be processed, it is possible to make the end cut line in the end cut line forming areas while making the rolling direction of the bend-breaking cutter wheel coincide with the traveling direction of the bend-breaking jig (the direction in which the virtual end cut line of the edge part of the glass plate extends), and to efficiently form a plurality of the end cut lines on the edge part of the glass plate in a short time.

By causing the bend-breaking jig to travel toward the direction of the start point of the end cut line in the rolling direction changing position in the vicinity of the edge part of the glass plate including an outline cutting line of a main body of the glass plate or at the rolling direction changing position in the vicinity of the edge part of the glass plate including an edge of the glass plate, the bend-breaking jig that changes the rolling direction of the bend-breaking cutter wheel to the direction in which the virtual end cut line of the edge of the glass plate extends is caused to travel toward the direction of the start point of the end cut line at the rolling direction changing position of each end cut line forming area of the edge of the glass plate to be processed, whereby the rolling direction of the bend-breaking cutter wheel is caused to coincide with the traveling direction of the bend-breaking jig (the direction of the virtual end cut line of the edge of the glass plate extends), and therefore, the end cut line can be easily inserted into the end cut line forming areas, and a plurality of the end cut lines can be efficiently formed at the edge of the glass plate in a short time.

By causing the bend-breaking jig to draw a circular trajectory from the rolling direction change start point toward the start point of the end cut line at the rolling direction changing position, the bend-breaking jig that changes the rolling direction of the bend-breaking cutter wheel to the direction in which the virtual end cut line of the edge part of the glass plate extends can reliably rotate the bend-breaking cutter wheel in the direction around the cutter wheel axis (around the axis) by causing the bend-breaking jig to draw the circular trajectory toward the start point of the end cut line at the rolling direction changing position of each end cut line forming area of the edge part of the glass plate to be processed, and the rolling direction of the bend-breaking cutter wheel can be accurately matched with the traveling direction of the bend-breaking jig (the direction in which the virtual end cut line of the edge part of the glass plate extends). In the bend-breaking jig, the bend-breaking cutter wheel itself is rotated around a rotation center of the bend-breaking cutter holder, a rotation control axis for rotating the bend-breaking cutter wheel itself is set as a cutter holder center axis of the bend-breaking cutter holder, and an angle of the rotation control axis is aligned with the rolling direction of the bend-breaking cutter wheel (moving direction of the bend-breaking jig), whereby an error due to eccentricity can be minimized.

The bend-breaking jig is caused to travel in a straight line from the rolling direction change start point toward the start point of the end cut line at the rolling direction changing position so that an angle formed by the direction in which the end cut line of the edge part of the glass plate extends and the traveling direction of the bend-breaking jig toward the start point of the end cut line becomes 90° or less, and after the rolling direction of the bend-breaking cutter wheel is changed to the direction in which the virtual end cut line extends, the traveling direction of the bend-breaking jig is changed to the direction in which the end cut line extends at an angle of 90° or less at the start point of the end cut line, and the bend-breaking jig that causes the bend-breaking jig to travel in the direction in which the end cut line extends causes the bend-breaking jig to travel in a straight line from the rolling direction change start point toward the start point of the end cut line at an angle of 90° or less with respect to the direction in which the end cut line of the edge part of the glass plate extends, and after the rolling direction of the bend-breaking cutter wheel is changed to the direction in which the virtual end cut line extends, the traveling direction of the bend-breaking jig is changed to the direction in which the end cut line extends at an angle of 90° or less at the start point of the end cut line, and the bend-breaking jig is caused to travel in the direction in which the virtual end cut line extends, whereby the bend-breaking cutter wheel can be reliably rotated in the direction around the cutter wheel axis (around the axis), and the rolling direction of the bend-breaking cutter wheel can be accurately matched with the traveling direction of the bend-breaking jig (the direction in which the end cut line of the edge part of the glass plate extends). In the bend-breaking jig, the bend-breaking cutter wheel itself is rotated around a rotation center of the bend-breaking cutter holder, a rotation control axis for rotating the bend-breaking cutter wheel itself is set as a cutter holder center axis of the bend-breaking cutter holder, and an angle of the rotation control axis is aligned with the rolling direction of the bend-breaking cutter wheel (moving direction of the bend-breaking jig), whereby an error due to eccentricity can be minimized.

The bend-breaking jig is caused to travel along the end cut line of the edge part of the glass plate at the rolling direction changing position from the rolling direction change start point toward the start point of the end cut line, or is caused to travel on the end cut line from the rolling direction change start point toward the start point of the end cut line at the rolling direction changing position, and after the rolling direction of the bend-breaking cutter wheel is changed to the direction in which the virtual end cut line extends, the bend-breaking jig is reversed at the start point of the end cut line to change the traveling direction of the bend-breaking jig to the direction in which the end cut line extends, and the bend-breaking jig that causes the bend-breaking jig to travel in the direction in which the end cut line extends causes the bend-breaking jig to travel along the virtual end cut line from the rolling direction change start point toward the start point of the end cut line, or to travel on the virtual end cut line from the rolling direction change start point toward the start point of the end cut line, and after the rolling direction of the bend-breaking cutter wheel is changed to the direction in which the virtual end cut line extends, the bend-breaking jig is reversed at the start point of the end cut line to change the traveling direction of the bend-breaking jig to the direction in which the end cut line extends, and the bend-breaking jig is caused to travel in the direction on which the end cut line extends, whereby the bend-breaking cutter wheel can be reliably rotated in the direction around the cutter wheel axis (around the axis), and the rolling direction of the bend-breaking cutter wheel can be accurately matched with the traveling direction of the bend-breaking jig (the direction in which the end cut line of the edge part of the glass plate extends). In the bend-breaking jig, the bend-breaking cutter wheel itself is rotated around a rotation center of the bend-breaking cutter holder, a rotation control axis for rotating the bend-breaking cutter wheel itself is set as a cutter holder center axis of the bend-breaking cutter holder, and an angle of the rotation control axis is aligned with the rolling direction of the bend-breaking cutter wheel (moving direction of the bend-breaking jig), whereby an error due to eccentricity can be minimized.

The bend-breaking jig includes a pressing member that presses the edge part of the glass plate on which an end cut line is formed, and a second lifting mechanism that lifts and lowers the pressing member. After the end cut line is formed on the edge part of the glass plate by the bend-breaking cutter wheel, the pressing member is lowered toward the upper surface of the edge part of the glass plate by the second lifting mechanism, and the pressing member presses the edge part of the glass plate downward. In the bend-breaking jig that bend-breaks the edge part of the glass plate from a main body of the glass plate, the pressing member abutting on the upper surface of the edge part of the glass plate by the second lifting mechanism presses the edge part of the glass plate downward, so that the edge part of the glass plate on which the end cut line is formed can be reliably bend-broken by the pressing member, and the bend-breaking processing can be efficiently performed in a short time.

In the bend-breaking jig in which the pressing member includes the penetrating part opened at the center thereof, the bend-breaking cutter wheel is located at the penetrating part of the pressing member, and the bend-breaking cutter wheel is exposed downward from the penetrating part of the pressing member when the bend-breaking cutter holder is lowered toward the upper surface of the edge part of the glass plate by the second lifting mechanism, the pressing member is disposed in the vicinity of the bend-breaking cutter holder in the direction around the bend-breaking cutter holder, and the pressing member is lowered from the vicinity of the bend-breaking cutter holder in the direction around the bend-breaking cutter holder toward the upper surface of the edge part of the glass plate, whereby the edge part of the glass plate can be reliably pressed by the pressing member, and the edge part of the glass plate on which the end cut line is formed can be reliably bend-broken by the pressing member. After the end cut line is formed on the edge part of the glass plate by the bend-breaking cutter wheel, the bend-breaking jig can bend-break the edge part of the glass plate on which the end cut line is formed by lowering the pressing member without largely traveling (moving) the bend-breaking jig, and the bend-breaking processing can be efficiently performed in a short time.

In a bend-breaking jig in which the pressing member is formed of the plate parallel to the upper surface of the glass plate and the pressing rubber formed in a truncated hemispherical shape with a head cut off by a surface parallel to a bottom surface and fixed to a lower surface of the plate, and the penetrating part is formed at a center of the plate and a center of the pressing rubber, the pressing rubber of the pressing member is disposed in the vicinity of the direction around the bend-breaking cutter holder, and the pressing rubber is lowered from the vicinity of the direction around the bend-breaking cutter holder toward the upper surface of the edge part of the glass plate, whereby the edge part of the glass plate can be reliably pressed by the pressing rubber, and the edge part of the glass plate on which the end cut line is formed can be reliably bend-broken by the pressing rubber. In the bend-breaking jig, after the end cut line is formed on the edge part of the glass plate by the bend-breaking cutter wheel, the pressing rubber of the pressing member is lowered without largely traveling (moving) the bend-breaking jig, so that the edge part of the glass plate on which the end cut line is formed can be bend-broken, and the bend-breaking processing can be efficiently performed in a short time.

A bend-breaking processing method according to the present invention includes: a rolling direction changing step of causing the bend-breaking jig to travel (move) in a predetermined direction on the upper surface of the edge part of the glass plate in parallel with the upper surface, rotating the bend-breaking cutter wheel abutting on the upper surface of the edge part of the glass plate in the direction around the cutter wheel axis, and changing the rolling direction of the bend-breaking cutter wheel to a traveling (moving) direction of the bend-breaking jig; and an end cut line forming step of forming an end cut line on the edge part of the glass plate along the traveling direction of the bend-breaking jig by the bend-breaking cutter wheel after changing the rolling direction of the bend-breaking cutter wheel to the traveling direction of the bend-breaking jig. Therefore, by causing the bend-breaking jig to travel in a predetermined direction and rotating the bend-breaking cutter wheel in the direction around the cutter wheel axis, the rolling direction of the bend-breaking cutter wheel can be quickly and easily changed. In the bend-breaking processing method, by making the bend-breaking jig travel in a predetermined direction in parallel with the upper surface of the edge part of the glass plate, the bend-breaking cutter wheel abutting on the upper surface of the edge part of the glass plate can be rotated in the direction around the cutter wheel axis. Therefore, the rolling direction of the bend-breaking cutter wheel can be made coincident with the traveling direction of the bend-breaking jig (the direction in which the virtual end cut line of the edge part of the glass plate extends), and the rolling direction of the bend-breaking cutter wheel and the traveling direction of the bend-breaking jig can be made the same in the initial movement of the series of the end cut line formation in the edge part of the glass plate. When the bend-breaking processing method is used in the glass plate processing system disclosed in Patent Literature 1, it is not necessary to install a θ-axis servomotor and a transmission member (a pulley, a belt, or the like) that transmits a rotational force of the θ-axis servomotor to the bend-breaking cutter holder in the system, and it is possible to reduce the size, energy saving, and cost of the system. Moreover, since it is not necessary to make the rolling direction of the bend-breaking cutter wheel the same as an extending direction of the virtual end cut line of the edge part of the glass plate (the traveling direction of the bend-breaking jig) by rotating the θ-axis servomotor in the bend-breaking processing, and it is not necessary to change the rolling direction of the bend-breaking cutter wheel using the θ-axis servomotor every time the end cut line is formed, it is possible to shorten the time and improve the efficiency of the bend-breaking processing in the glass plate processing system.

In the bend-breaking processing method, the bend-breaking jig includes the first lifting mechanism that lifts and lowers the bend-breaking cutter holder in an up-down direction, the bend-breaking processing method includes a holder lowering step of lowering the bend-breaking cutter holder toward the upper surface of the edge part of the glass plate by the first lifting mechanism and causing the bend-breaking cutter wheel to abut on the upper surface of the edge part of the glass plate before the rolling direction changing step, and in the rolling direction changing step, the bend-breaking jig is caused to travel on the upper surface of the edge part of the glass plate in a predetermined direction parallel to the upper surface to change the rolling direction of the bend-breaking cutter wheel to the traveling direction of the bend-breaking jig after the bend-breaking cutter wheel is caused to abut on the upper surface of the edge part of the glass plate in the holder lowering step. Therefore, after the bend-breaking cutter holder abuts on the upper surface of the edge part of the glass plate by the first lifting mechanism, the bend-breaking jig is caused to travel in the predetermined direction, whereby the rolling direction of the bend-breaking cutter wheel can be made the same as the traveling direction of the bend-breaking jig, and the rolling direction of the bend-breaking cutter wheel can be reliably matched with the traveling direction of the bend-breaking jig (the direction in which the virtual end cut line of the edge part of the glass plate extends).

The bend-breaking processing method includes: a holder lifting step of lifting the bend-breaking cutter holder from the upper surface of the glass plate by the first lifting mechanism after the end cut line is formed for a first time in a predetermined area of the edge part of the glass plate in the end cut line forming step; and a jig moving step of moving the bend-breaking jig to a next end cut line forming area of the edge part of the glass plate after the bend-breaking cutter holder is lifted in the holder lifting step, and in the holder lowering step, the bend-breaking cutter holder is lowered toward the upper surface of the edge part of the glass plate extending to the next end cut line forming area by the first lifting mechanism after the bend-breaking jig is moved to the next end cut line forming area in the jig moving step, and in the rolling direction changing step, the bend-breaking jig is caused to travel (move) in a predetermined direction on the upper surface of the edge part of the glass plate in the next end cut line forming area, and the rolling direction of the bend-breaking cutter wheel is changed to the traveling (moving) direction of the bend-breaking jig after the bend-breaking cutter holder is lowered in the holder lowering step, and in the end cut line forming step, the bend-breaking jig is caused to travel in a predetermined direction in the next end cut line forming area, and an end cut line is formed on the edge part of the glass plate in the next end cut line forming area by the bend-breaking cutter wheel after the rolling direction of the bend-breaking cutter wheel is changed to the traveling direction of the bend-breaking jig in the rolling direction changing step. Therefore, in each end cut line forming area of the edge part of the glass plate to be processed, while the rolling direction of the bend-breaking cutter wheel is caused to coincide with the traveling direction of the bend-breaking jig (the direction in which the virtual end cut line of the edge part of the glass plate extends), the end cut line can be formed in the end cut line forming areas, and a plurality of the end cut lines can be efficiently formed in the edge part of the glass plate in a short time.

In the rolling direction changing step of the bend-breaking processing method, the rolling direction of the bend-breaking cutter wheel is changed to a direction in which the virtual end cut line of the edge part of the glass plate extends by causing the bend-breaking jig to travel toward a direction of the start point of the end cut line in a rolling direction changing area in a vicinity of the edge part of the glass plate including an outline cutting line of a main body of the glass plate or at a rolling direction changing position in a vicinity of the edge part of the glass plate including an edge of the glass plate. By causing the bend-breaking jig to travel toward the direction of the start point of the end cut line at the rolling direction changing position of each end cut line forming area of the edge part of the glass plate to be processed, since the rolling direction of the bend-breaking cutter wheel can coincide with the travel direction of the bend-breaking jig (the direction in which the virtual end cut line of the edge part of the glass plate extends), the end cut line can be easily formed in the end cut line forming areas, and a plurality of the end cut lines can be efficiently formed on the edge part of the glass plate in a short time.

In the rolling direction changing step of the bend-breaking processing method, the rolling direction of the bend-breaking cutter wheel is changed to the direction in which the virtual end cut line of the edge part of the glass plate extends by causing the bend-breaking jig to draw a circular trajectory from a rolling direction change start point toward the start point of the end cut line at the rolling direction changing position. Therefore, since the bend-breaking jig is caused to draw the circular trajectory toward the start point of the end cut line at the rolling direction changing position of each end cut line forming area of the edge part of the glass plate to be processed, the bend-breaking cutter wheel can be reliably rotated in the direction around the cutter wheel axis (around the axis), and the rolling direction of the bend-breaking cutter wheel can be accurately matched with the traveling direction of the bend-breaking jig (the direction in which the virtual end cut line of the edge part of the glass plate extends). In the bend-breaking processing method, the bend-breaking cutter wheel itself is rotated around the rotation center of the bend-breaking cutter holder, the rotation control axis for rotating the bend-breaking cutter wheel itself is set as the cutter holder center axis of the bend-breaking cutter holder, and the angle of the rotation control axis is aligned with the rolling direction of the bend-breaking cutter wheel (the moving direction of the bend-breaking jig), whereby an error due to eccentricity can be minimized.

In the rolling direction changing step of the bend-breaking processing method, the bend-breaking jig is caused to travel in a straight line from a rolling direction change start point toward the start point of the end cut line at the rolling direction changing position so that an angle formed by a direction in which the end cut line of the edge part of the glass plate extends and the traveling direction of the bend-breaking jig toward the start point of the end cut line becomes 90° or less, and after the rolling direction of the bend-breaking cutter wheel is changed to the direction in which the virtual end cut line extends, the traveling direction of the bend-breaking jig is changed to the direction in which the end cut line extends at an angle of 90° or less at the start point of the end cut line, and the bend-breaking jig is caused to travel in the direction in which the end cut line extends. Therefore, the bend-breaking jig is caused to travel in a straight line from the rolling direction change start point toward the start point of the end cut line at an angle of 90° or less with respect to the direction in which the end cut line of the edge part of the glass plate extends, and after the rolling direction of the bend-breaking cutter wheel is changed to the direction in which the virtual end cut line extends, the traveling direction of the bend-breaking jig is changed to the direction in which the end cut line extends at an angle of 90° or less at the start point of the end cut line, and the bend-breaking jig is caused to travel in the direction in which the end cut line extends, the traveling direction of the bend-breaking jig is changed to the direction in which the virtual end cut line extends at an angle of 90° or less, and by causing the bend-breaking jig to travel in the direction in which the virtual end cut line extends, the bend-breaking cutter wheel can be reliably rotated in the direction around the cutter wheel axis (around the axis), and the rolling direction of the bend-breaking cutter wheel can be accurately matched with the traveling direction of the bend-breaking jig (the direction in which the end cut line of the edge part of the glass plate extends). In the bend-breaking processing method, the bend-breaking cutter wheel itself is rotated around the rotation center of the bend-breaking cutter holder, the rotation control axis for rotating the bend-breaking cutter wheel itself is set as the cutter holder center axis of the bend-breaking cutter holder, and the angle of the rotation control axis is aligned with the rolling direction of the bend-breaking cutter wheel (the moving direction of the bend-breaking jig), whereby an error due to eccentricity can be minimized.

In the rolling direction changing step of the bend-breaking processing method, the bend-breaking jig is caused to travel along the end cut line of the edge part of the glass plate at the rolling direction changing position from a rolling direction change start point toward the start point of the end cut line, or is caused to travel on the end cut line from the rolling direction change start point toward the start point of the end cut line at the rolling direction changing position, and after the rolling direction of the bend-breaking cutter wheel is changed to the direction in which the virtual end cut line extends, the bend-breaking jig is reversed at the start point of the end cut line to change the traveling direction of the bend-breaking jig to the direction in which the end cut line extends, and is caused to travel in the direction in which the end cut line extends. Therefore, by causing the bend-breaking jig to travel on the virtual end cut line from the rolling direction change start point toward the start point of the end cut line, changing the rolling direction of the bend-breaking cutter wheel to the direction in which the virtual end cut line extends, reversing the bend-breaking jig at the start point of the end cut line to change the traveling direction of the bend-breaking jig to the direction in which the end cut line extends, and causing the bend-breaking jig to travel in the direction in which the end cut line extends, the bend-breaking cutter wheel can be reliably rotated in the direction around the cutter wheel axis (around the axis), and the rolling direction of the bend-breaking cutter wheel can be accurately matched with the traveling direction of the bend-breaking jig (the direction in which the end cut line of the edge part of the glass plate extends). In the bend-breaking processing method, the bend-breaking cutter wheel itself is rotated around the rotation center of the bend-breaking cutter holder, the rotation control axis for rotating the bend-breaking cutter wheel itself is set as the cutter holder center axis of the bend-breaking cutter holder, and the angle of the rotation control axis is aligned with the rolling direction of the bend-breaking cutter wheel (the moving direction of the bend-breaking jig), whereby an error due to eccentricity can be minimized.

In the bend-breaking processing method, the bend-breaking jig includes a pressing member that presses the edge part of the glass plate on which the end cut line is formed, and a second lifting mechanism that lifts and lowers the pressing member, and the bend-breaking processing method includes a bend-breaking processing step of, after forming the end cut line on the edge part of the glass plate by the bend-breaking cutter wheel, lowering the pressing member toward the upper surface of the edge part of the glass plate by the second lifting mechanism and pressing the edge part of the glass plate downward by the pressing member to bend-break the edge part of the glass plate from a main body of the glass plate. Therefore, the pressing member that abuts on the upper surface of the edge part of the glass plate by the second lifting mechanism presses the edge part of the glass plate downward, so that the edge part of the glass plate on which the end cut line is formed can be reliably bend-broken by the pressing member, and the bend-breaking processing can be efficiently performed in a short time.

In the bend-breaking processing method in which the pressing member includes the penetrating part opened at the center thereof, the bend-breaking cutter wheel is positioned at the penetrating part of the pressing member, and in the holder lowering step, when the bend-breaking cutter holder is lowered toward the upper surface of the edge part of the glass plate by the first lifting mechanism, the bend-breaking cutter wheel is exposed downward from the penetrating part of the pressing member, the pressing member is disposed in the vicinity of the direction around the bend-breaking cutter holder, and the pressing member is lowered from the vicinity of the direction around the bend-breaking cutter holder toward the upper surface of the edge part of the glass plate, so that the edge part of the glass plate can be reliably pressed by the pressing member, and the edge part of the glass plate on which the end cut line is formed can be reliably bend-broken by the pressing member. In the bend-breaking processing method, after the end cut line is formed on the edge of the glass plate by the bend-breaking cutter wheel, the pressing member is lowered without largely traveling (moving) the bend-breaking jig, so that the edge of the glass plate on which the end cut line is formed can be bend-broken, and the bend-breaking processing can be efficiently performed in a short time.

In the bend-breaking processing method in which the pressing member is formed of a plate parallel to the upper surface of the glass plate and a pressing rubber formed in a truncated hemispherical shape with a head cut off by a surface parallel to a bottom surface and fixed to the lower surface of the plate, and the penetrating part is formed at the center of the plate and the center of the pressing rubber, the pressing rubber of the pressing member is disposed in the vicinity of the direction around the bend-breaking cutter holder, and the pressing rubber is lowered from the vicinity of the direction around the bend-breaking cutter holder toward the upper surface of the edge part of the glass plate, so that the edge of the glass plate can be reliably pressed by the pressing rubber, and the edge part of the glass plate on which the end cut line is formed can be reliably bend-broken by the pressing rubber. In the bend-breaking processing method, after the end cut line is formed on the edge part of the glass plate by the bend-breaking cutter wheel, the pressing rubber of the pressing member is lowered without largely traveling (moving) the bend-breaking jig, so that the edge part of the glass plate on which the end cut line is formed can be bend-broken, and the bend-breaking processing can be efficiently performed in a short time.

### Brief Description of Drawings

Fig. 1 is a side view of a glass plate processing system using a bend-breaking jig.
Fig. 2 is a top view of the glass plate processing system using the bend-breaking jig.
Fig. 3 is a top view illustrating an example of a glass plate to be processed by the glass plate processing system.
Fig. 4 is a side view of a loading area.
Fig. 5 is a top view of the loading area.
Fig. 6 is a front view of the loading area.
Fig. 7 is a top view of a cutting table and a grinding table.
Fig. 8 is a side view of the cutting table and the grinding table.
Fig. 9 is a diagram for explaining movement of the cutting table and the grinding table.
Fig. 10 is a side view of a cutting device as an example installed in a cutting processing area.
Fig. 11 is a front view of the cutting device.
Fig. 12 is a top view of the cutting device.
Fig. 13 is a top view of a bend-breaking table.
Fig. 14 is a side view of the bend-breaking table.
Fig. 15 is a side view of a bend-breaking device.
Fig. 16 is a front view of the bend-breaking device.
Fig. 17 is a top view of the bend-breaking device.
Fig. 18 is an enlarged front view of the bend-breaking device.
Fig. 19 is an enlarged side view of the bend-breaking device.
Fig. 20 is a partially broken side view of first and second bend-breaking jigs.
Fig. 21 is a front view of the first and second bend-breaking jigs.
Fig. 22 is a front view of a grinding device as an example installed in a grinding processing area.
Fig. 23 is a side view of the grinding device.
Fig. 24 is a top view of the grinding device.
Fig. 25 is a view illustrating an example of a bend-breaking procedure in bend-breaking processing.
Fig. 26 is a view illustrating an example of a change in a rolling direction of a bend-breaking cutter wheel.
Fig. 27 is a view illustrating another example of the change of the rolling direction of the bend-breaking cutter wheel.
Fig. 28 is a view illustrating another example of the change of the rolling direction of the bend-breaking cutter wheel.
Fig. 29 is a view illustrating another example of the change of the rolling direction of the bend-breaking cutter wheel.
Fig. 30 is a view illustrating another example of the change of the rolling direction of the bend-breaking cutter wheel.

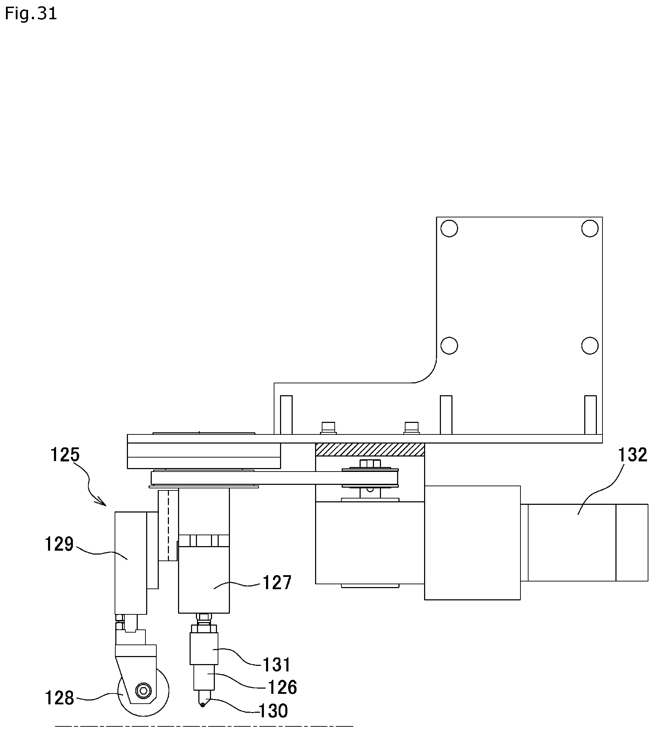

Fig. 31 is a side view of a conventional bend-breaking device.

### Description of Embodiments

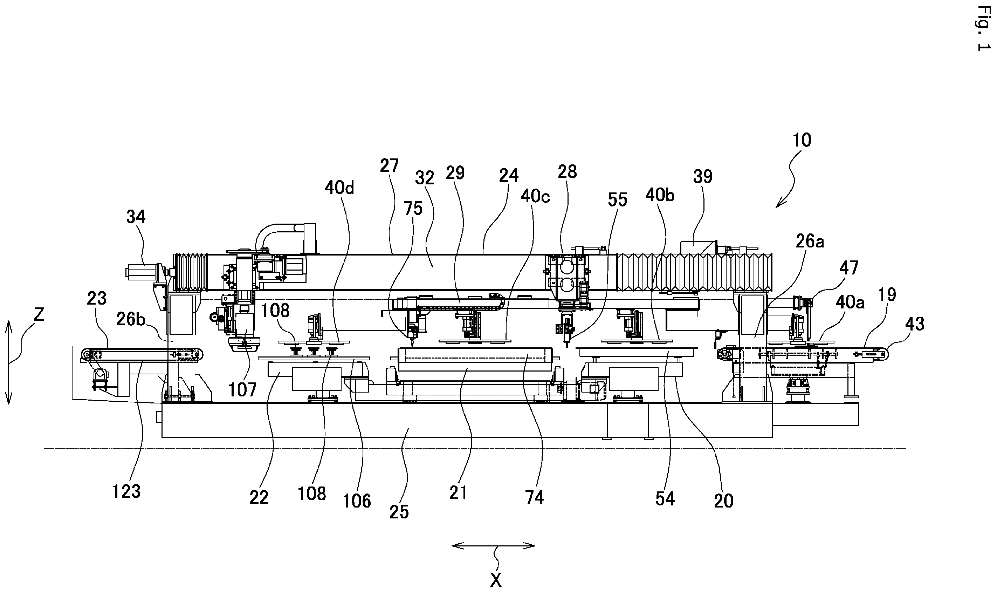

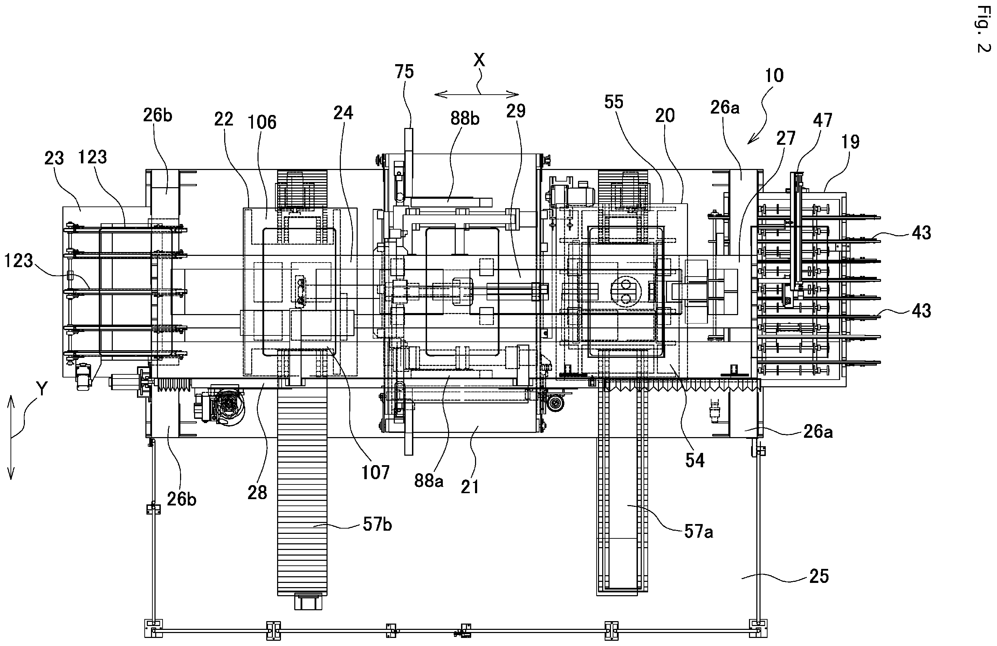

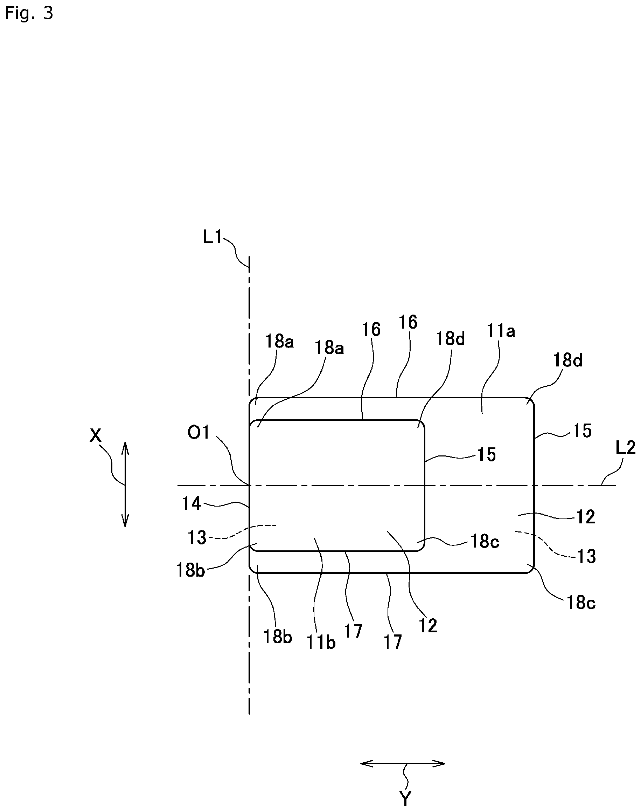

Referring to the accompanying drawings such as Fig. 1 which is a side view of a glass plate processing system 10 using bend-breaking jigs 83a, 83b, details of a bend-breaking jig according to the present invention and a bend-breaking processing method using the bend-breaking jig will be described as follows. Fig. 2 is a top view of the glass plate processing system 10 using the bend-breaking jigs 83a, 83b, and Fig. 3 is a top view illustrating an example of the glass plates 11a, 11b to be processed by the glass plate processing system 10. In Fig. 3, the glass plates 11a, 11b are illustrated in a state of being positioned in a loading area 19. In Figs. 1 and 2, a front-back direction (X-axis direction) is indicated by an arrow X, a width direction (Y-axis direction) is indicated by an arrow Y, and an up-down direction (Z-axis direction) is indicated by an arrow Z.

As illustrated in Fig. 3, the glass plates 11a, 11b (glass plates 11a, 11b before processing) to be processed in the glass plate processing system 10 have an upper surface 12 having a predetermined area and a lower surface 13 having a predetermined area, have a predetermined thickness, and are formed into a rectangle (quadrangle) whose planar shape is long in the width direction. The glass plates 11a, 11b to be processed have a first side edge 14 (one side edge) and a second side edge 15 (the other side edge) that face each other with a distance in the width direction and extend in the front-rear direction, a front end edges 16 and a rear end edge 17 that face each other with a distance in the front-rear direction and extend in the width direction, and first to fourth corner parts 18a to 18d. Note that the planar shape of the glass plate to be processed may be formed into a polygon other than a rectangle (quadrangle), and may be formed so that each edge of the glass plate draws a curved curve, and the shape of the glass plate includes any shape.

The glass plate processing system 10 performs cutting processing, bend-breaking processing, and grinding processing on the glass plates 11a, 11b (plate-shaped glass) to be processed having different sizes in which the areas of the upper and lower surfaces 12, 13 are different from each other, from a large-sized (large-area) glass plate 11a having a large area of the upper surface 12 and the lower surface 13 to a small-sized (small-area) glass plate 11b having a small area of the upper surface 12 and the lower surface 13. The glass plate processing system 10 is controlled by a controller (control device) (not illustrated).

The controller is a computer that includes a central processing unit (CPU or MPU) and a memory (a main memory and a cache memory) and is operated by an independent operating system (virtual OS), and has a large-capacity hard disk (mass storage area) built therein. An input device (not illustrated) such as a keyboard and a numeric keypad unit, and an output device (not illustrated) such as a monitor, a display, and a touch panel are connected to the controller.

In the large-capacity hard disk (large-capacity storage area) of the controller, a plurality of pieces of coordinate data (side edge coordinates and coordinates of front and rear end edges of the glass plates 11a, 11b, coordinates of the first to fourth corner parts 18a to 18d, coordinates of centers of the glass plates 11a, 11b, and the like) of the glass plates 11a, 11b, which are different depending on the name and the product number of each of the glass plates 11a, 11b to be processed, and the size (area) and the shape of each of the glass plates 11a, 11b to be processed, and image data (planar image (6-plane image) and a stereoscopic image (3D image)) of the glass plates 11a, 11b to be processed are stored (saved) in association with glass plate specifying information (glass plate specifying identifier) for specifying the glass plates 11a, 11b. As the glass plate specifying information, production numbers, serial numbers, and the like of the glass plates 11a, 11b are used, and the controller generates a unique identifier for specifying the glass plates 11a, 11b, and the generated identifier can be used as the glass plate specifying information.

In cutting processing in a cutting processing area 20, bend-breaking processing in a bend-breaking processing area 21, and grinding processing in a grinding processing area 22, which will be described later, the controller NC-controls a cutting device 55, a bend-breaking device 75, and a grinding device 107, which will be described later, using the coordinate data of the glass plates 11a, 11b stored in the large-capacity hard disk. In the NC control, the controller quantifies a position where coordinate machining (XY plane coordinates) is started and a change position in a machining direction by coordinates, and quantifies an operation direction, a distance, and a speed of two axes of an X axis (front-rear direction) and a Y axis (width direction). Signals obtained by quantifying the command coordinates and the axes are transmitted (input) to the cutting device 55, the bend-breaking device 75, and the grinding device 107. In the NC control, a shape to be machined is accurately represented by repeating "coordinate → axis → command".

The glass plate processing system 10 includes: the loading area 19 (processing start area) into which the glass plates 11a, 11b to be processed (before processing) are loaded; an unloading area 23 (processing end area) from which the processed glass plates 11a, 11b are unloaded; processing areas 20 to 22 which are disposed (installed) between the loading area 19 and the unloading area 23 and process the glass plates 11a, 11b; and a conveyance mechanism 24 which sequentially conveys the glass plates 11a, 11b from a rear side (upstream) toward a front side (downstream) in the front-rear direction to the loading area 19, the processing areas 20 to 22, and the unloading area 23, and moves the cutting device 55 and the grinding device 107 in the front-rear direction. The processing areas 20 to 22 are disposed in the front-rear direction while facing each other with a space therebetween in the front-rear direction between the loading area 19 and the unloading area 23.

The processing areas 20 to 22 include a cutting processing area 20 located forward (downstream) in the front-rear direction of the loading area 19 and separated forward from the loading area 19 by a predetermined dimension, a bend-breaking processing area 21 located forward (downstream) in the front-rear direction of the cutting processing area 20 and separated forward from the cutting processing area 20 by a predetermined dimension, and a grinding processing area 22 located forward (downstream) in the front-rear direction of the bend-breaking processing area 21 and separated forward from the bend-breaking processing area 21 by a predetermined dimension. The cutting processing area 20, the bend-breaking processing area 21, and the grinding processing area 22 are formed on a system base 25 (machine base) formed in a rectangular shape elongated in the front-rear direction.

The conveyance mechanism 24 includes a pair of first pillars 26a located in the rear part of the system base 25 and extending in the up-down direction, a pair of second pillars 26b located in the front part of the system base 25 and extending in the up-down direction, a fixed frame 27 located between the first and second pillars 26a, 26b and extending in the front-rear direction, a first moving unit 28 (first moving means) installed on one side part of the fixed frame 27, and a second moving unit 29 (second moving means) installed on a lower part of the fixed frame 27.

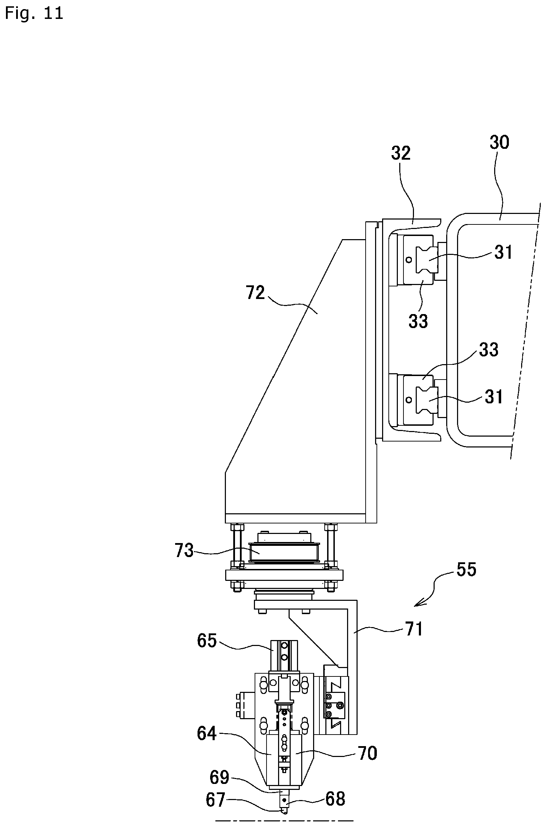

The first moving unit 28 moves the cutting device 55 and the grinding device 107 forward and backward (linearly) in the front-rear direction (X-axis direction). The first moving unit 28 includes a first guide frame 30, a pair of first guide rails 31, a first feed screw (ball screw) (not illustrated), a first traveling frame 32, first slide blocks (housing nuts) (not illustrated), a pair of first guide shoes 33, and a first servomotor 34 (see Fig. 11).

The first guide frame 30 is installed on the fixed frame 27 and extends in the front-rear direction. The first guide rails 31 are spaced apart from and face each other in the up-down direction, are fixed to one side part of the first guide frame 30 by predetermined fixing means, and extend in the front-rear direction. The first feed screw (ball screw) is located between the first guide rails 31, is rotatably supported by a plurality of bearings (not illustrated) fixed to one side of the first guide frame 30, and extends in the front-rear direction.

The first traveling frame 32 is located on one side part of the first guide frame 30 and extends in the front-rear direction. The first slide blocks (housing nuts) are arranged side by side at a predetermined interval in the front-rear direction, and are fixed to the facing surface of the first traveling frame 32 facing the first guide frame 30 by predetermined fixing means. The first guide shoes 33 face each other with a distance therebetween in the up-down direction, are fixed to a facing surface of the first traveling frame 32 facing the first guide frame 30 by predetermined fixing means, and extend in the front-rear direction.

The first servomotor 34 is located at a front end part of the first guide frame 30 and is connected to the second pillars 26b via a bracket. A shaft of the first servomotor 34 is coupled and fixed to the other end part of the first feed screw. The first feed screw is rotated by the rotation of the first servomotor 34, and the cutting device 55 and the grinding device 107 are moved forward and backward (linearly moved) in the front-rear direction (X-axis direction) by the rotation of the first feed screw.

When the shaft of the first servomotor 34 rotates in a counterclockwise direction, the first feed screw rotates in the counterclockwise direction, the first slide blocks move in the front-rear direction from the front to the rear of the first guide frame 30 by the rotation of the first feed screw in the counterclockwise direction, and the first traveling frame 32 moves in the front-rear direction from the front to the rear of the first guide frame 30 by the movement of the first slide blocks. Conversely, when the shaft of the first servomotor 34 rotates in a clockwise direction, the first feed screw rotates in the clockwise direction, the first slide blocks move in the front-rear direction from the rear side toward the front side of the first guide frame 30 by the rotation of the first feed screw in the clockwise direction, and the first traveling frame 32 moves in the front-rear direction from the rear side toward the front side of the first guide frame 30 by the movement of the first slide blocks.

The second moving unit 29 moves glass plate first holder 40a to fourth holder 40d described later forward and backward (linearly) in the front-rear direction (X-axis direction). The second moving unit 29 includes a second guide frame 35, a pair of second guide rails 36, a second feed screw (ball screw) (not illustrated), a second traveling frame 37, second slide blocks (housing nuts) (not illustrated), a pair of second guide shoes 38, a second servomotor 39, and glass plate first to fourth holders 40a to 40d (glass plate first to fourth lifters).

The second guide frame 35 is installed on the fixed frame 27 and extends in the front-rear direction. The second guide rails 36 face each other with a distance therebetween in the width direction, are fixed to a lower part of the second guide frame 35 by predetermined fixing means, and extend in the front-rear direction. The second feed screw (ball screw) is located between the second guide rails 36, is rotatably supported by a plurality of bearings (not illustrated) fixed to a lower part of the second guide frame 35, and extends in the front-rear direction.

The second traveling frame 37 is located below the second guide frame 35 and extends in the front-rear direction. The second slide blocks (housing nuts) are arranged side by side at a predetermined interval in the width direction, and are fixed to the facing surface of the second traveling frame 37 facing the second guide frame 35 by predetermined fixing means. The second guide shoes 38 face each other with a distance therebetween in the width direction, are fixed to the facing surface of the second traveling frame 37 facing the second guide frame 35 by predetermined fixing means, and extend in the front-rear direction.

The second servomotor 39 is located at a rear end part of the second guide frame 35 and is fixed to the fixed frame 27. A shaft of the second servomotor 39 is coupled and fixed to one end part of the second feed screw via a timing belt (and/or a gear). The second feed screw is rotated by the rotation of the second servomotor 39, and the glass plate first to fourth holders 40a to 40d are moved forward and backward (linearly moved) in the front-rear direction (X-axis direction) by the rotation of the second feed screw.

When the shaft of the second servomotor 39 rotates in the clockwise direction, the second feed screw rotates in the clockwise direction, the second slide blocks move in the front-rear direction from the rear side to the front side of the second guide frame 35 by the rotation of the second feed screw in the clockwise direction, and the second traveling frame 37 (glass plate first to fourth holders 40a to 40d) moves in the front-rear direction from the rear side to the front side of the second guide frame 35 by the movement of the second slide blocks. Conversely, when the shaft of the second servomotor 39 rotates in the counterclockwise direction, the second feed screw rotates in the counterclockwise direction, the second slide blocks move in the front-rear direction from the front side to the rear side of the second guide frame 35 by the rotation of the second feed screw in the counterclockwise direction, and the second traveling frame 37 (glass plate first to fourth holders 40a to 40d) moves in the front-rear direction from the front side to the rear side of the second guide frame 35 by the movement of the second slide blocks.

Control units that control start and stop, a number of rotation, and rotational speed of the first and second servomotors 34, 39 are connected to the controller via an interface (wired or wireless) (not illustrated). The control unit of the first servomotor 34 drives the first servomotor 34 at a predetermined number of rotation and rotational speed when receiving a drive signal from the controller, and stops the drive of the first servomotor 34 when receiving a stop signal from the controller. The control unit of the second servomotor 39 drives the second servomotor 39 at a predetermined number of rotation and rotational speed when receiving a drive signal from the controller, and stops the drive of the second servomotor 39 when receiving a stop signal from the controller.

The glass plate first to fourth holders 40a to 40d are attached to a lower part of the second traveling frame 37, extend downward from the traveling frame 37, and are arranged at equal intervals in the front-rear direction. The glass plate first holder 40a to fourth holder 40d include a pad mounting plate 41 extending in the front-rear direction, a suction pad 42 that is mounted on the pad mounting plate 41 and sucks and holds the glass plates 11a, 11b, a vacuum mechanism (air suction device) (air vacuum pump) (not illustrated), and a pad lifting mechanism (not illustrated). An air cylinder is used for the pad lifting mechanism. A control unit that controls start and stop of the vacuum mechanism and the pad lifting mechanism (air cylinder) is connected to the controller via an interface (wired or wireless) (not illustrated).

The glass plate first holder 40a reciprocates in the front-rear direction between the loading area 19 and the cutting processing area 20, moves forward from the loading area 19 toward the cutting processing area 20, and moves backward from the cutting processing area 20 toward the loading area 19. The glass plate second holder 40b reciprocates in the front-rear direction between the cutting processing area 20 and the bend-breaking processing area 21, moves forward from the cutting processing area 20 toward the bend-breaking processing area 21, and moves backward from the bend-breaking processing area 21 toward the cutting processing area 20. The glass plate third holder 40c reciprocates in the front-rear direction between the bend-breaking processing area 21 and the grinding processing area 22, moves forward from the bend-breaking processing area 21 toward the grinding processing area 22, and moves backward from the grinding processing area 22 toward the bend-breaking processing area 21. The glass plate fourth holder 40d reciprocates in the front-rear direction between the grinding processing area 22 and the unloading area 23, moves forward from the grinding processing area 22 toward the unloading area 23, and moves backward from the unloading area 23 toward the grinding processing area 22.

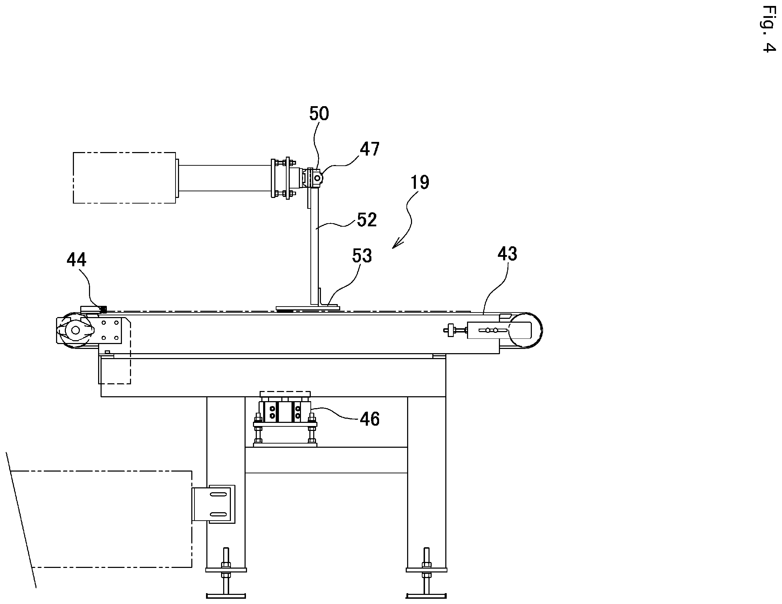

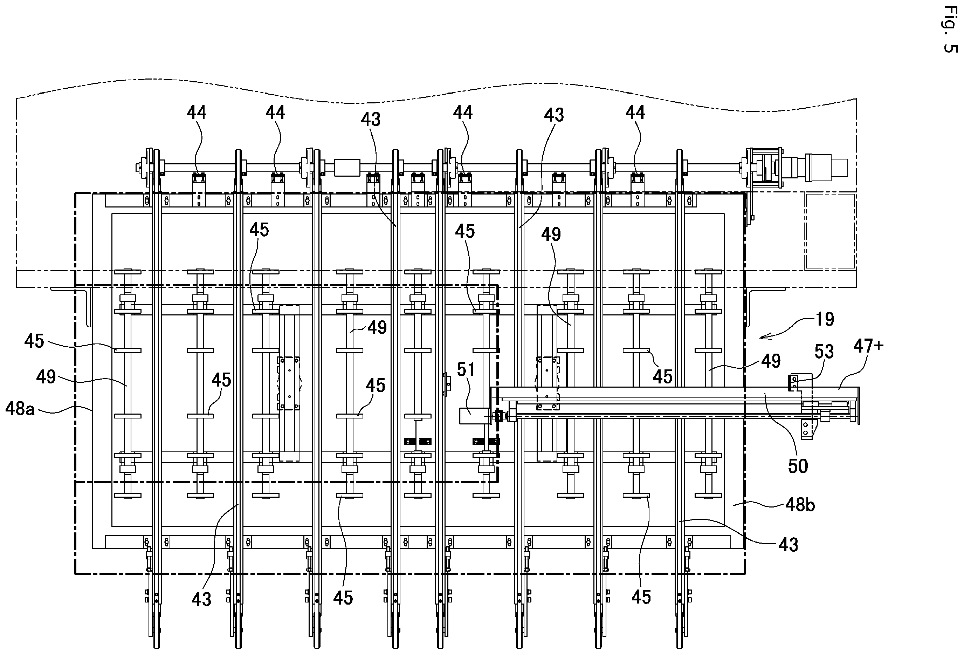

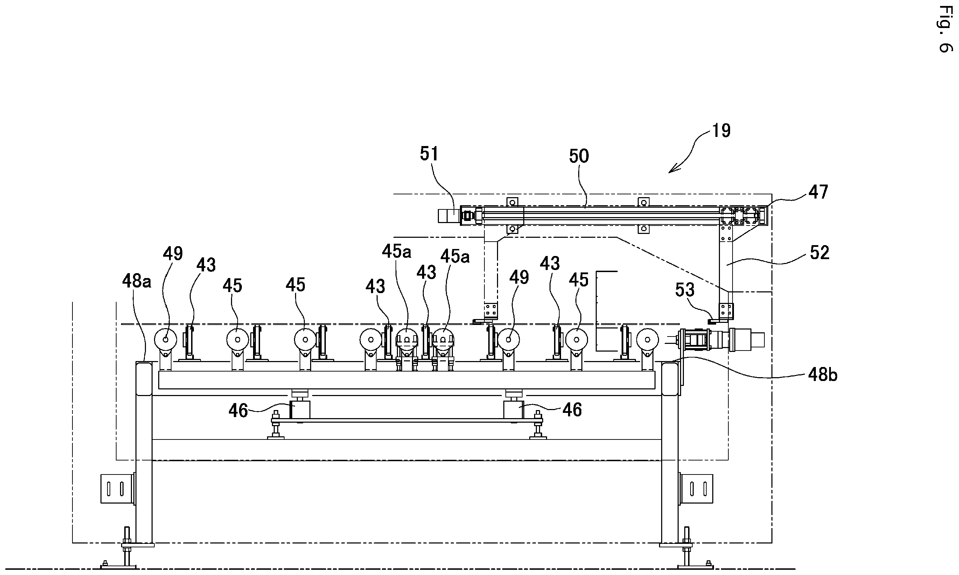

Fig. 4 is a side view of the loading area 19, and Fig. 5 is a top view of the loading area 19. Fig. 6 is a front view of the loading area 19. The loading area 19 includes a loading conveyor 43, stoppers 44, rollers 45, a pair of roller lifting mechanisms 46, and a moving mechanism 47. The loading area 19 is supported by legs extending upward from a floor surface of the system base 25. In the loading area 19, first positioning means (first positioning step) and second positioning means (second positioning step) are performed to position the glass plates 11a, 11b toward each of the processing areas 20 to 22.

A positioning first reference L1 (virtual positioning first reference line) extending in the front-rear direction and a positioning second reference L2 (virtual positioning second reference line) extending in the width direction are set in one side edge part 48a of the loading area 19. The positioning first reference L1 is a virtual line linearly extending in the front-rear direction, which is assumed based on an outermost edge located on an outermost side in the width direction among the first side edges 14 extending in the front-rear direction on one side in the width direction of the large-sized (large-area) glass plate 11a (the glass plate 11a to be processed first). For example, when the first side edge 14 (one side edge) of each of the glass plates 11a, 11b draws a curved curve, the outermost side edge is a vertex of a curve located most outward in the width direction. When the first side edge 14 (one side edge) of each of the glass plates 11a, 11b extends straight in the front-rear direction, the side edge 14 is an outermost edge.

In the positioning first reference L1, the outermost edge located on the outermost side in the width direction among the first side edges 14 (one side edge) extending in the front-rear direction on one side in the width direction of the glass plates 11a, 11b is positioned. Here, positioning the outermost edge at the positioning first reference L1 includes not only a case where the outermost edge completely matches the positioning first reference L1, but also a case where the outermost edge is positioned in the vicinity (nearest) of the inner side in the width direction of the positioning first reference L1, or a case where the outermost edge is positioned in the vicinity (nearest) of the outer side in the width direction of the positioning first reference L1.

In the positioning second reference L2, a center O1 (center line L2 extending in the width direction by dividing the dimension of the glass plates 11a, 11b in the front-rear direction by 2) in the front-rear direction of the first side edge 14 (one side edge) extending in the front-rear direction on one side in the width direction of the glass plates 11a, 11b is positioned. Here, positioning the front-rear direction center O1 (center line L2) at the positioning second reference L2 includes not only a case where the front-rear direction center O1 (center line L2) completely coincides with the positioning second reference L2, but also a case where the front-rear direction center O1 (center line L2) is positioned in the vicinity (nearest) of the front in the front-rear direction of the positioning second reference L2, or a case where the front-rear direction center O1 (center line L2) is positioned in the vicinity (nearest) of the rear in the front-rear direction of the positioning second reference L2.

The controller (glass plate processing system 10) calculates the dimension in the width direction of each of the glass plates 11a, 11b using the coordinate data of each of the glass plates 11a, 11b stored in the large-capacity hard disk, determines the first movement dimension (first movement distance) in the width direction for positioning the first side edge 14 (one side edge) of each of the glass plates 11a, 11b in the positioning first reference L1 (virtual positioning first reference line) according to a difference in the calculated dimensions in the width direction (Y-axis direction) of the glass plates 11a, 11b, and determines the rotational speed (the number of rotation of a shaft for moving the glass plates 11a, 11b by first moving dimension (first moving distance) in width direction) of a shaft of a third servomotor 51 to be described later based on the determined first movement dimension. The controller (glass plate processing system 10) stores (saves) the determined first movement dimension and the determined rotational speed of the shaft of the third servomotor 51 in the large-capacity hard disk in a state of being associated with the glass plate specifying information (glass plate specifying identifier) of each of the glass plates 11a, 11b.

The controller (glass plate processing system 10) calculates the dimension in the front-rear direction (X-axis direction) of each of the glass plates 11a, 11b using the coordinate data of each of the glass plates 11a, 11b stored in the large-capacity hard disk, and determines the second movement dimension toward the rear side in the front-rear direction of the loading conveyor 43 for positioning the center O1 in the front-rear direction of one side edge 14 of each of the glass plates 11a, 11b at the positioning second reference line L2 (virtual positioning second reference line) according to a difference in the calculated dimensions in the front-rear direction of the glass plates 11a, 11b. The controller (glass plate processing system 10) stores (saves) the determined second movement dimension in the large-capacity hard disk in a state of being associated with the glass plate specifying information (glass plate specifying identifier) of each of the glass plates 11a, 11b.

The controller (glass plate processing system 10) calculates a moving dimension (moving distance) of the cutting device 55 and the grinding device 107 in the front-rear direction based on the calculated dimension of each of the glass plates 11a, 11b in the front-rear direction, and determines the rotational speed (the number of rotation of the shaft that moves the cutting device 55 and the grinding device 107 in the front-rear direction by the moving dimension (moving distance)) of the shaft of the first servomotor 34 based on the calculated moving dimension. The controller (glass plate processing system 10) stores (saves) the determined movement dimension and the determined rotational speed of the shaft of the first servomotor 34 in the large-capacity hard disk in a state of being associated with the glass plate specifying information (glass plate specifying identifier) of each of the glass plates 11a, 11b. Note that the moving dimensions (moving distances) of the glass plate first holder 40a to the fourth holder 40d in the front-rear direction are stored (saved) in the large-capacity hard disk in a state of being associated with the glass plate specifying information (glass plate specifying identifier) of each of the glass plates 11a, 11b.

As illustrated in Figs. 4 to 6, the loading conveyor 43 is a plurality of endless tracks extending in the front-rear direction (X direction), and a plurality of the loading conveyors 43 are arranged at predetermined intervals in the width direction (Y direction). A control unit that controls start and stop and a conveyance distance of the loading conveyors 43 is connected to the controller via an interface (wired or wireless) (not illustrated). The loading conveyors 43 convey the glass plates 11a, 11b from the rear side to the front side in the front-rear direction from the rear end part (loading port) toward the front end part (unloading port) of the loading area 19. The stoppers 44 are provided at the front end part of the loading area 19 and are spaced apart in the width direction. The front end edges 16 of the glass plates 11a, 11b moving forward from the rear end part toward the front end part of the loading area 19 by the loading conveyors 43 abut on the stoppers 44. Each of the stoppers 44 is provided with contact sensors (not illustrated). Each of the contact sensors is connected to the controller, detects abutment (contact) of the front end edge 16 of each of the glass plates 11a, 11b with the stopper 44, and transmits an abutment signal to the controller when the front end edge 16 abuts on the stopper 44.

The rollers 45 are rotatably attached to a plurality of shafts 49 extending in the front-rear direction, and are installed between the loading conveyors 43 together with the shafts 49. The rollers 45 are arranged at a predetermined distance in the front-back direction and are arranged at a predetermined distance in the width direction. The rollers 45 rotate clockwise and counterclockwise in the width direction, and abut on the lower surfaces 13 of the glass plates 11a, 11b to hold the glass plates 11a, 11b so as to be movable in the width direction. The shafts 49 are attached to a pedestal positioned below the shafts via bearings.

A resistance plate (rubber ring) (not illustrated) that increases the rotation resistance of a roller 45a is attached between the roller 45a of the rollers 45 and the shaft 49. In the roller 45a, resistance with the shaft 49 is increased by a resistance plate (rubber ring), the roller 45a does not rotate unless a rotational force exceeding the rotation resistance is applied to the roller 45a, and free rotation of the roller 45a is prevented by the resistance plate. When the glass plates 11a, 11b are placed on the rollers 45, free movement of the glass plates 11a, 11b in the width direction is prevented by the roller 45a having a large rotation resistance. Note that a resistance plate (rubber ring) may be attached between at least one roller 45 of the rollers 45 and the shaft 49.

The roller lifting mechanisms 46 are installed below the pedestal to which the shafts 49 are attached, and are arranged side by side at a predetermined distance in the width direction. An air cylinder is used as each of the roller lifting mechanisms 46, and the shafts 49 and the rollers 45 are lifted and lowered in the up-down direction together with the pedestal by the roller lifting mechanism 46 (air cylinder). A lifting dimension and a lowering dimension of the roller lifting mechanism 46 (air cylinder) are set in advance. A control unit that controls start and stop of the roller lifting mechanism 46 (air cylinder) is connected to the controller via an interface (wired or wireless) (not illustrated). When receiving a raising/lowering signal from the controller, the control unit of the roller lifting mechanism 46 (air cylinder) raises and lowers the rollers 45 (pedestal and shafts 49) using the roller lifting mechanism 46.

Note that, while the loading conveyor 43 is conveying the glass plates 11a, 11b, the rollers 45 (the pedestal and the shafts 49) are lowered below the loading conveyor 43 by the roller lifting mechanism 46 (air cylinder), and the rollers 45 do not abut on the lower surfaces 13 of the glass plates 11a, 11b. When the rollers 45 (the pedestal and the shafts 49) are raised by the roller lifting mechanism 46 (air cylinder), a part of the peripheral edge part of the roller 45 is exposed to the upper side of the loading conveyor 43, and the glass plates 11a, 11b are lifted up to the upper side of the loading conveyor 43 by the rollers 45.

The moving mechanism 47 includes a rod 50 positioned above the loading conveyors 43 and the rollers 45, a third servomotor 51 installed (built in) on the rod 50, a feed screw (feed screw mechanism) (not illustrated) installed (built in) on the rod 50 and connected to the shaft of the third servomotor 51, a moving arm 52 extending downward from the rod 50, and an abutting member 53 installed at a lower end part of the moving arm 52.

The rod 50 is attached to the rear surface of the first pillar 26a and extends in the width direction. The moving arm 52 is movably installed on the feed screw, and linearly moves to one side and the other side in the width direction along the rod 50 by the rotation of the feed screw due to the rotation of the shaft of the third servomotor 51. The abutting member 53 linearly moves to one side and the other side in the width direction together with the moving arm 52 along with the movement of the moving arm 52 in the width direction. The abutting member 53 abuts on the other side edge 15 of the glass plates 11a, 11b in a state where the roller 45 raised by the roller lifting mechanism 46 (air cylinder) abuts on the lower surfaces 13 of the glass plates 11a, 11b, and presses the glass plates 11a, 11b in the width direction so that the glass plates 11a, 11b move in the width direction.

A control unit that controls start and stop, a number of rotation, and a rotational speed of the third servomotor 51 is connected to the controller via an interface (wired or wireless) (not illustrated). The control unit of the third servomotor 51 drives the third servomotor 51 at a predetermined number of rotation and rotational speed when receiving a drive signal from the controller, and stops the drive of the third servomotor 51 when receiving a stop signal from the controller.

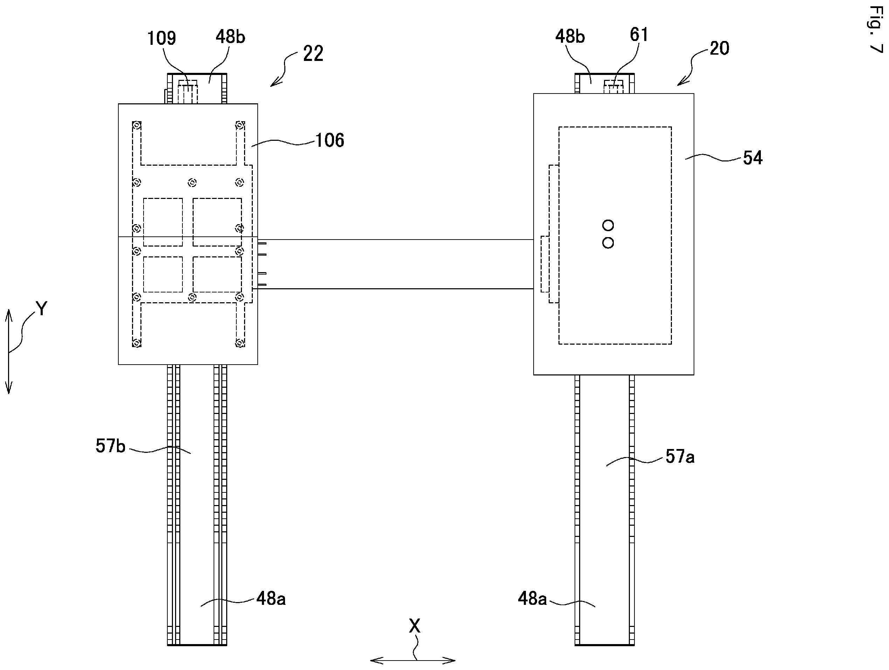

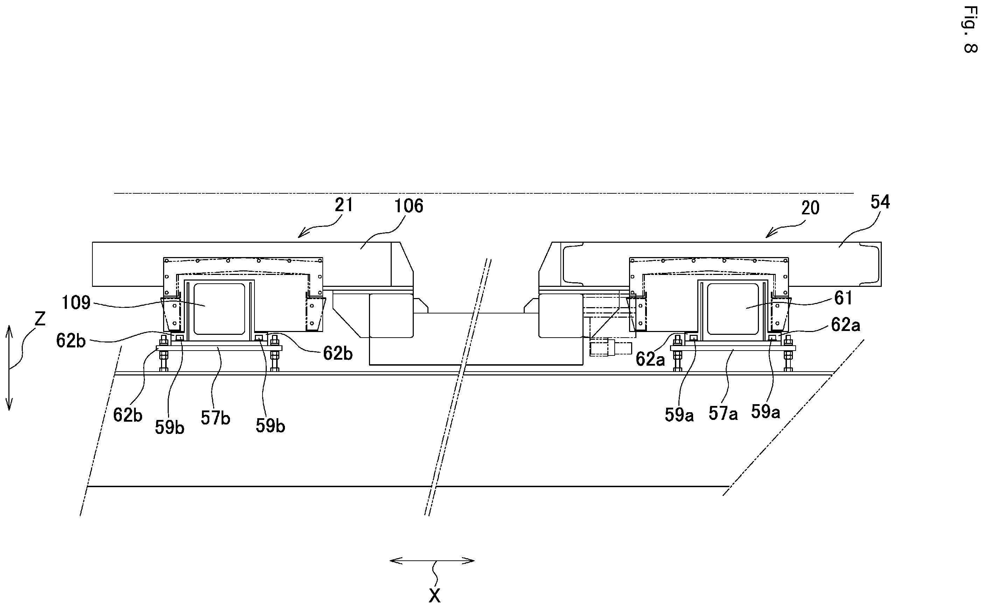

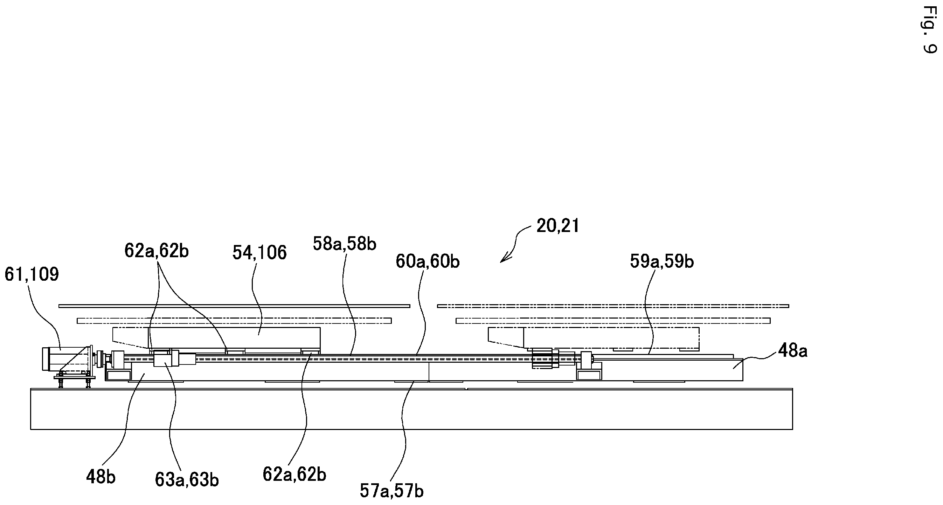

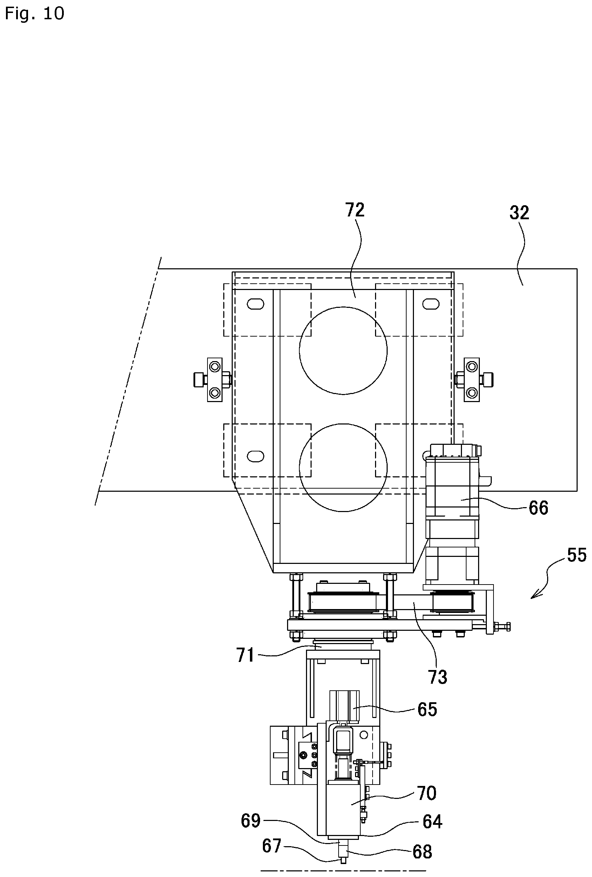

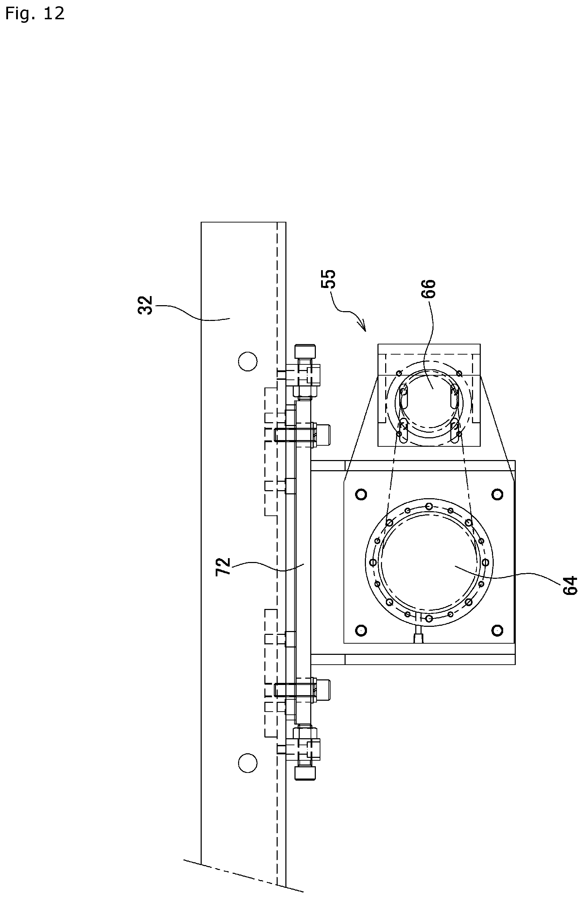

Fig. 7 is a top view of a cutting processing table 54 and a grinding processing table 106, and Fig. 8 is a side view of the cutting processing table 54 and the grinding processing table 106. Fig. 9 is a view for explaining the movement of the cutting processing table 54 and the grinding processing table 106, and Fig. 10 is a side view of the cutting device 55 installed in the cutting processing area 20 as an example. Fig. 11 is a front view of the cutting device 55, and Fig. 12 is a top view of the cutting device 55.

The cutting processing area 20 includes the cutting processing table 54 on which the glass plates 11a, 11b positioned in the loading area 19 are placed, and the cutting device 55 that puts an outline cutting line K1 (cut line) into the edge parts 56 (peripheral edge parts) of the glass plates 11a, 11b placed on the cutting processing table 54. In Figs. 7 and 8, the front-back direction (X-axis direction) is indicated by an arrow X, the width direction (Y-axis direction) is indicated by an arrow Y, and the up-down direction (Z-axis direction) is indicated by an arrow Z.

The cutting processing table 54 is installed on a base lane 57a long in the width direction fixed to the floor surface of the system base 25. The cutting processing table 54 uses a first moving mechanism 58a to move in the width direction in a state where the positioned glass plates 11a, 11b are placed. The first moving mechanism 58a includes traveling guide rails 59a, a feed screw 60a (ball screw), a fourth servomotor 61, guide shoes 62a, and a slide block 63a (housing nut).

The traveling guide rails 59a are installed on the upper surface of the base lane 57a and extend in the width direction. The feed screw 60a (ball screw) is installed on the upper surface of the base lane 57a and on the side of the traveling guide rails 59a, and extends in the width direction. The fourth servomotor 61 is installed in the base lane 57a and reciprocates the cutting processing table 54 in the width direction. The other end part of the feed screw 60a is connected to a shaft of the fourth servomotor 61.

The feed screw 60a is rotatably supported by a bearing (not illustrated) fixed to the base lane 57a. The guide shoes 62a are attached to the lower surface of the cutting processing table 54 and extends in the width direction. The guide shoes 62a are slidably fitted to the traveling guide rails 59a. The slide block 63a (housing nut) is attached to the lower surface of the cutting processing table 54 and between the guide shoes 62a. The slide block 63a is rotatably screwed to the feed screw 60a.

When the shaft of the fourth servomotor 61 rotates in the clockwise direction, the feed screw 60a rotates in the clockwise direction, the rotation of the feed screw 60a in the clockwise direction causes the slide block 63a to move the feed screw 60a in the width direction from the second side edge part 48b (the other side edge) of the cutting processing area 20 toward the first side edge part 48a (one side edge), and the movement of the slide block 63a causes the cutting processing table 54 to move in the width direction from the second side edge part 48b toward the first side edge 48a of the cutting processing area 20. Conversely, when the shaft of the fourth servomotor 61 rotates in the counterclockwise direction, the feed screw 60a rotates in the counterclockwise direction, the rotation of the feed screw 60a in the counterclockwise direction causes the slide block 63a to move the feed screw 60a in the width direction from the first side edge part 48a (one side edge) toward the second side edge part 48b (the other side edge) of the cutting processing area 20, and the movement of the slide block 63a causes the cutting processing table 54 to move in the width direction from the first side edge part 48a toward the second side edge part 48b of the cutting processing area 20.

The cutting device 55 includes a cutting jig 64, an air cylinder 65, and a fifth servomotor 66. The cutting jig 64 includes a cutting cutter wheel 67, a cutting cutter holder 68 (cutting holder), a cutter lifting shaft 69, and a cutter lifting guide 70. The cutting cutter wheel 67 is connected to the cutting cutter holder 68 via a bearing (not illustrated), and freely rotates along an axis of the interposed bearing. The cutting cutter wheel 67 forms the outline cutting line K1 at the edge parts 56 (peripheral edge parts) of the glass plates 11a, 11b.

The cutting cutter holder 68 is located immediately above the cutting cutter wheel 67 and connected to the cutter wheel 67 to support the cutter wheel 67. The cutter lifting shaft 69 is positioned directly above the cutting cutter holder 68 and connected to the cutter holder 68 to support the cutter holder 68. The cutter lifting guide 70 is positioned immediately above the cutter lifting shaft 69 and connected to the cutter lifting shaft 69 to support the cutter lifting shaft 69. The cutting jig 64 (including the air cylinder 65) is connected to a support shaft 71 that is located immediately above the air cylinder 65 and rotatably supports the cutting jig 64. The support shaft 71 is attached to a bracket 72 located immediately above the support shaft. The bracket 72 (cutting device 55) is connected to the first moving unit 28 of the conveyance mechanism 24 that moves forward and backward (linearly moves) in the front-rear direction (X-axis direction).

The air cylinder 65 is installed immediately above the cutter lifting shaft 69. The air cylinder 65 raises and lowers (vertically moves) the cutting cutter wheel 67 (cutting cutter holder 68) in the up-down direction (Z-axis direction), and lowers the cutter wheel 67 toward the upper surfaces 12 of the glass plates 11a, 11b to apply (provide) a cutting pressure (downward pressing force) to the cutter wheel 67 at the time of forming the outline cutting line K1 (cut line) on the edge parts 56 of the glass plates 11a, 11b. A shaft of the fifth servomotor 66 is connected to the support shaft 71 via a timing belt 73. The fifth servomotor 66 adjusts a direction of a cutting direction of the cutting jig 64 (cutting cutter wheel 67) (an angle around an axis orthogonal to an XY plane).

In the cutting device 55, the control unit of the fifth servomotor 66 rotates the shaft of the motor 66 based on an NC control signal transmitted from the controller, NC-controls the cutting jig 64 (cutting cutter wheel 67), and the cutting jig 64 (cutting cutter wheel 67) forms (puts) the outline cutting line K1 according to the shape desired to be processed on the edge parts 56 (peripheral edge parts) of the glass plates 11a, 11b according to the NC control.

Control units that control start and stop, a number of rotation, and rotational speed of the fourth and fifth servomotors 61, 66 are connected to the controller via an interface (wired or wireless) (not illustrated). The control unit of the fourth servomotor 61 drives the fourth servomotor 61 at a predetermined number of rotation and rotational speed when receiving a drive signal from the controller, and stops the drive of the fourth servomotor 61 when receiving a stop signal from the controller. The control unit of the fifth servomotor 66 drives the fifth servomotor 66 at a predetermined number of rotation and rotational speed when receiving a drive signal from the controller, and stops the drive of the fifth servomotor 66 when receiving a stop signal from the controller.

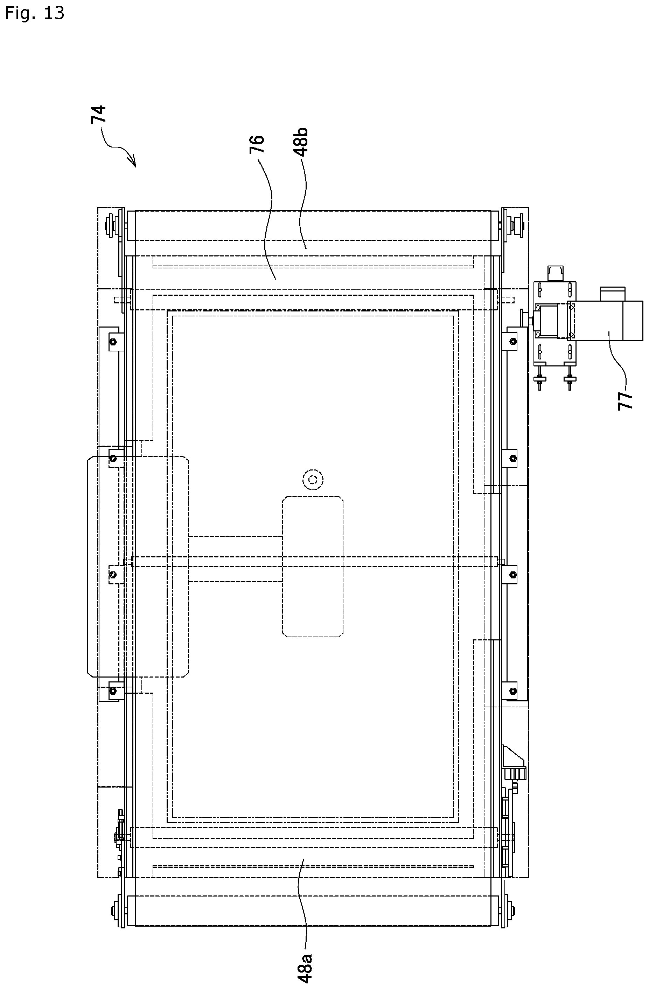

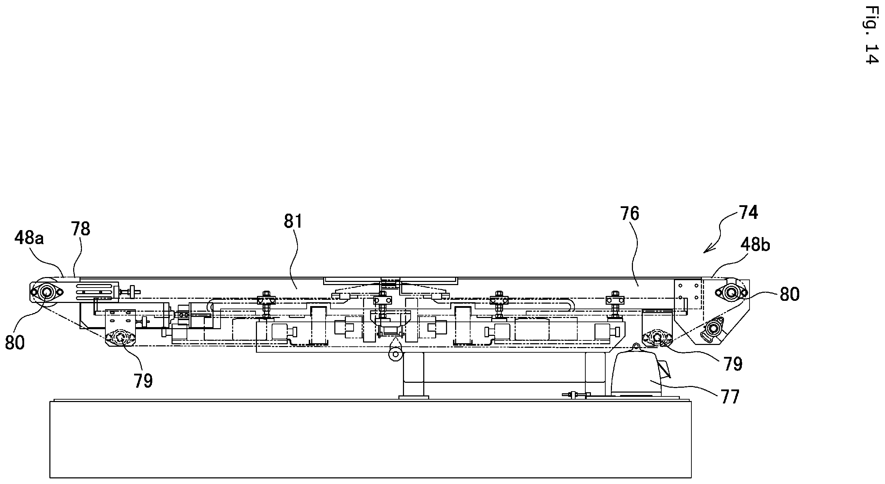

Fig. 13 is a top view of the bend-breaking processing table 74, and Fig. 14 is a side view of the bend-breaking processing table 74. The bend-breaking processing area 21 includes the bend-breaking processing table 74 on which the glass plates 11a, 11b positioned in the loading area 19 and subjected to cutting processing in the cutting processing area 20 are placed, and a bend-breaking device 75 that bend-breaks the edge part 56 (peripheral edge part) located outside the outline cutting line K1 (cut line) of the glass plates 11a, 11b placed on the bend-breaking processing table 74.

The bend-breaking processing table 74 includes a belt conveyor 76 that travels in the width direction (Y-axis direction) and a conveyor drive motor 77 that causes the belt conveyor 76 to travel, and is installed on a base board fixed to a floor surface of the system base 25. The belt conveyor 76 includes a belt 78 extending in the width direction, a plurality of pulleys 79 and carrier rollers 80 that support the belt 78, and a conveyor frame 81 that supports the belt 78, the pulleys 79, and the carrier rollers 80. The glass plates 11a, 11b subjected to the cutting processing are placed on the belt conveyor 76. The belt conveyor 76 conveys the edge parts 56 of the glass plates 11a, 11b bend-broken by the bend-breaking device 75 to the other side (from the first side edge part 48a to the second side edge part 48b) in the width direction, and discards the bend-broken edge parts 56 of the glass plates 11a, 11b to a dust box (not illustrated).

A shaft of the conveyor drive motor 77 is connected to the pulley 79 by a timing belt. A control unit that controls start and stop of the conveyor drive motor 77 is connected to the controller via an interface (wired or wireless) (not illustrated). The rotational speed (running speed of the belt) of the shaft of the conveyor drive motor 77 is set in advance, and is stored (saved) in the large-capacity hard disk of the controller in a state where the rotational speed (running speed of the belt) is associated with specific information of the conveyor drive motor 77. The control unit of the conveyor drive motor 77 drives the drive motor 77 at a predetermined rotation speed when receiving a drive signal from the controller, and stops the drive of the drive motor 77 when receiving a stop signal from the controller. When the shaft of the conveyor drive motor 77 rotates in the clockwise direction, the rotation is transmitted to the pulley 79 via the timing belt, the pulley 79 rotates in the clockwise direction, and the belt 78 travels toward the other side in the width direction by the rotation of the pulley 79.

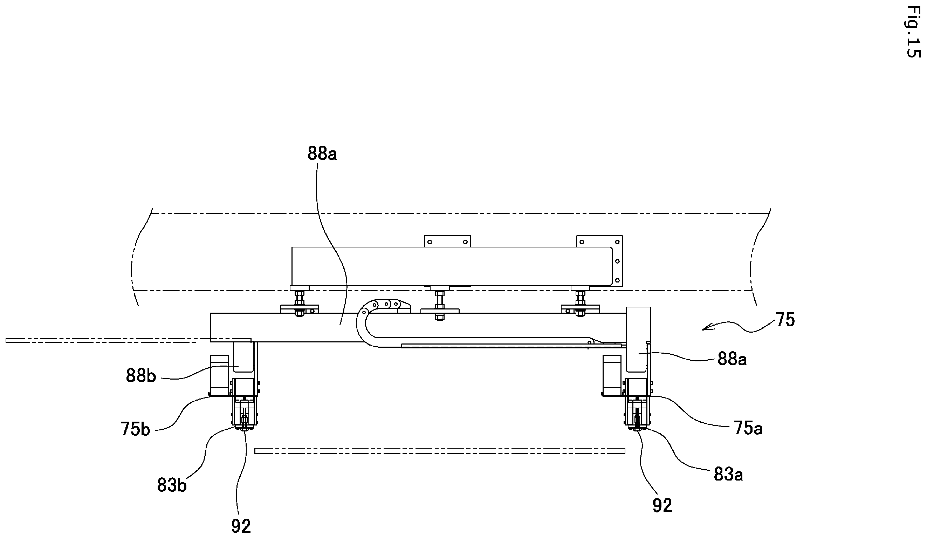

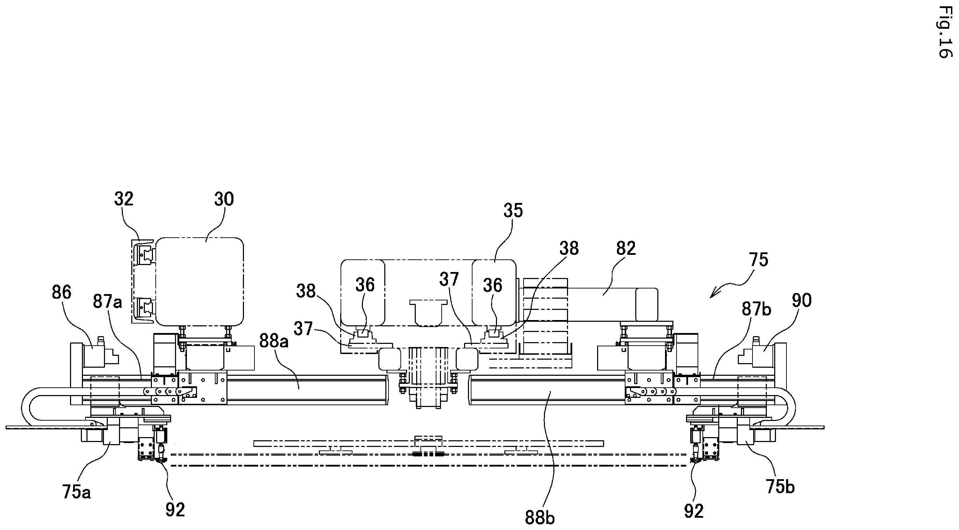

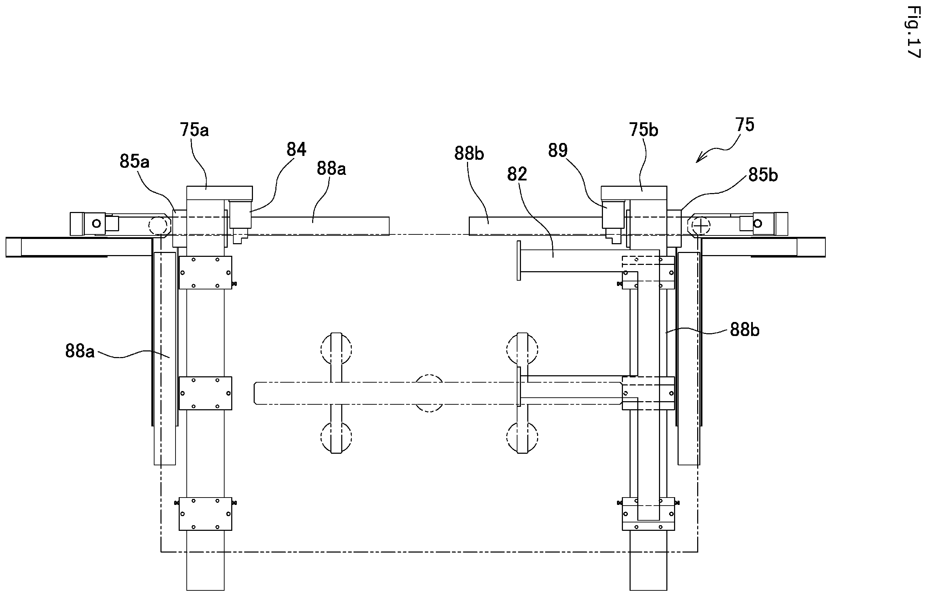

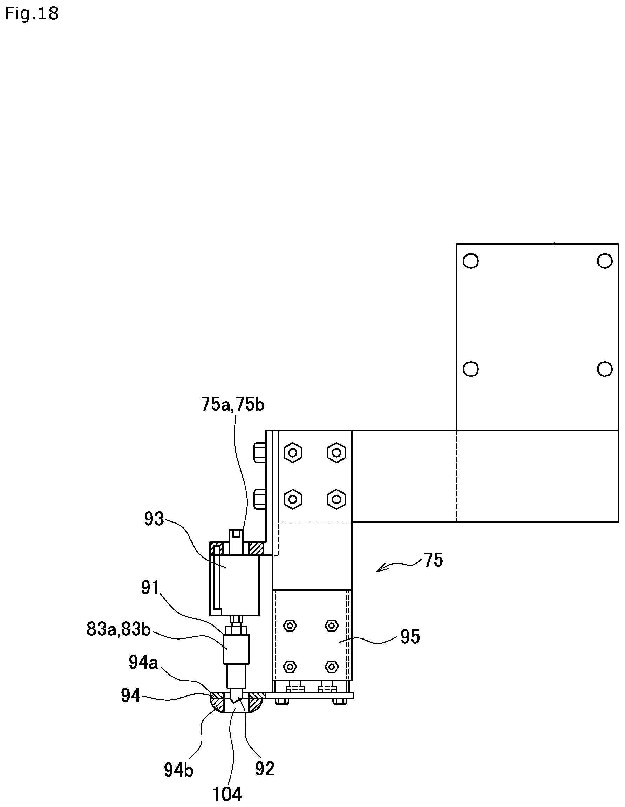

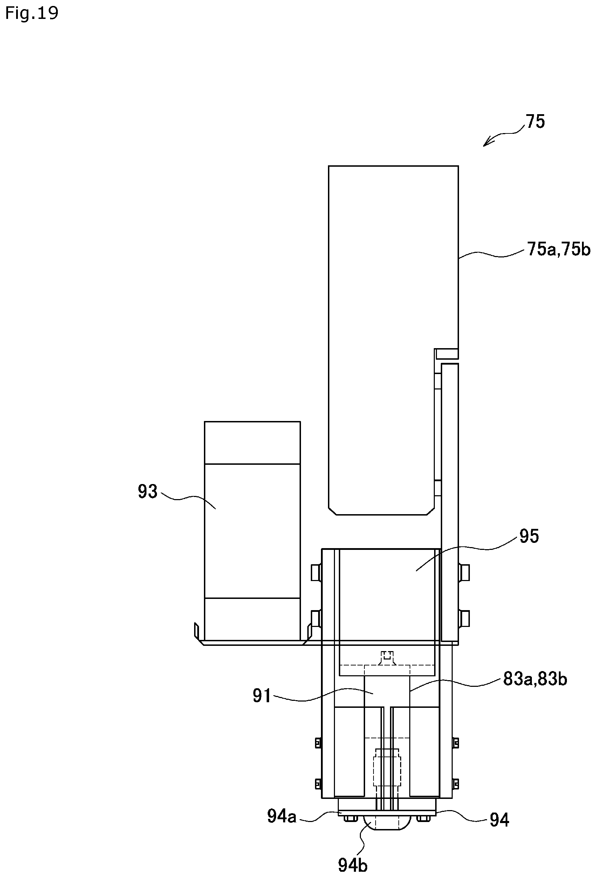

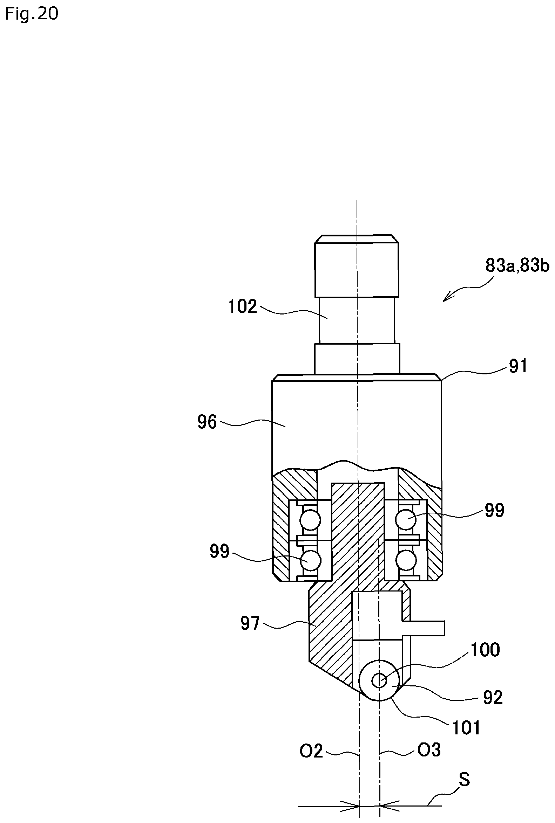

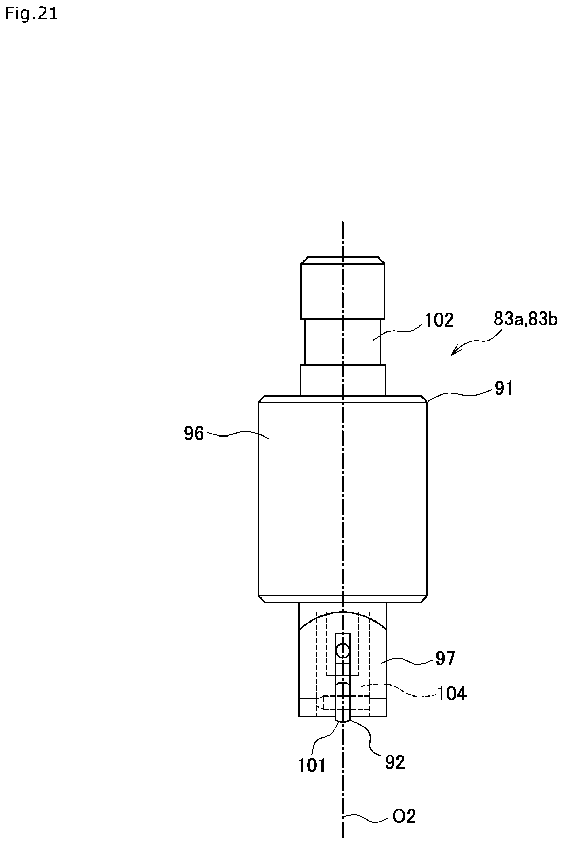

Fig. 15 is a side view of the bend-breaking device 75, and Fig. 16 is a front view of the bend-breaking device 75. Fig. 17 is a top view of the bend-breaking device 75, and Fig. 18 is an enlarged front view of the bend-breaking device 75. Fig. 19 is an enlarged side view of the bend-breaking device 75, and Fig. 20 is a partially broken side view of the first and second bend-breaking jigs 83a, 83b. Fig. 21 is a front view of the first and second bend-breaking jigs 83a, 83b.

The bend-breaking device 75 is formed of two of a first bend-breaking device 75a and a second bend-breaking device 75b spaced apart in the width direction. The first bend-breaking device 75a is coupled to the first guide frame 30, and the second bend-breaking device 75b is coupled to a suspension frame 82. The suspension frame 82 is connected to a side part of the second guide frame 35. The first bend-breaking device 75a includes a first bend-breaking jig 83a (bend-breaking jig), a sixth servomotor 84 (X-axis servomotor) and an X-axis first actuator 85a, a seventh servomotor 86 (Y-axis servomotor) and a Y-axis first actuator 87a, and a first actuator frame 88a.

The second bend-breaking device 75b includes a second bend-breaking jig 83b (bend-breaking jig), an eighth servomotor 89 (X-axis servomotor) and an X-axis second actuator 85b, a ninth servomotor 90 (Y-axis servomotor) and a Y-axis second actuator 87b, and a second actuator frame 88b. The first actuator frame 88a and the second actuator frame 88b are connected in series at their front end parts.

As illustrated in Figs. 18 and 19, the first and second bend-breaking jigs 83a, 83b of the first and second bend-breaking devices 75a, 75b are formed of a bend-breaking cutter holder 91, a bend-breaking cutter wheel 92, a holder lifting mechanism 93 (first lifting mechanism), a pressing member 94 that presses the edge parts 56 of the glass plates 11a, 11b on which the end cut lines K2 are formed, and a pressing member lifting mechanism 95 (second lifting mechanism) that lifts and lowers the pressing member 94. The bend-breaking cutter holder 91 is positioned above the bend-breaking cutter wheel 92 and supports the bend-breaking cutter wheel 92. As illustrated in Figs. 20 and 21, the bend-breaking cutter holder 91 includes a holder main body 96 including a connecting part, and a holder head 97 attached to a distal end of the holder main body 96. The holder head 97 is connected to the holder main body 96 via a bearing 99.

The bend-breaking cutter wheel 92 forms (inserts) an end cut line K2 (scribe) in the edge parts 56 (edge parts 56 of the glass plates 11a, 11b extending outside the outline cutting line K1) of the glass plates 11a, 11b to be processed. The bend-breaking cutter wheel 92 is rotatably (rollably) attached to a distal end of the holder head 97 via a rolling shaft 100, and a peripheral edge 101 thereof rolls about the rolling shaft 100. A cutter wheel axis O3 extending in the up-down direction of the bend-breaking cutter wheel 92 is eccentric (displaced) radially outward with respect to a cutter holder center axis O2 extending in the up-down direction of the bend-breaking cutter holder 91 (holder main body 96). A separation dimension S (eccentric dimension) in the width direction of the cutter wheel axis O3 with respect to the cutter holder center axis O2 is in a range of 0.5 mm to 2 mm.

The holder head 97 is connected to the holder main body 96 via the bearing 99, freely rotates along an axis of the interposed bearing 99, and is rotatable by 360° in a direction (θ direction) around the cutter holder center axis O2 of the bend-breaking cutter holder 91. The holder head 97 rotates in the clockwise direction and the counterclockwise direction about the cutter holder center axis O2. When the holder head 97 rotates, the bend-breaking cutter wheel 92 (the bend-breaking cutter wheel 92 having the cutter wheel axis O3 that is eccentric with respect to the cutter holder center axis O2.) is rotatable by 360° around the cutter wheel axis O3 with respect to the bend-breaking cutter holder 91. The bend-breaking cutter wheel 92 rotates in the clockwise direction and the counterclockwise direction about the cutter holder center axis O2.

Since the cutter wheel axis O3 of the bend-breaking cutter wheel 92 is eccentric outward in the radial direction with respect to the cutter holder center axis O2, when the first and second bend-breaking jigs 83a, 83b (bend-breaking cutter holder 91) travel (move) on the upper surfaces 12 of the glass plates 11a, 11b in a predetermined direction, the bend-breaking cutter wheel exerts a caster effect in which the rolling (moving) direction of the peripheral edge 101 of the bend-breaking cutter wheel 92 faces the traveling (moving) direction (direction in which the virtual end cut line extends) of the first and second bend-breaking jigs 83a, 83b (bend-breaking cutter holder 91).

The holder lifting mechanism 93 (first lifting mechanism) is installed immediately above the holder main body 96, and is connected to the connecting part 102 of the bend-breaking cutter holder 91 (holder main body 96). The holder lifting mechanism 93 is fixed to a bracket 103 by a fixing member. An air cylinder is used for the holder lifting mechanism 93 (first lifting mechanism). The holder lifting mechanism 93 (air cylinder) lifts and lowers (moves up and down) the bend-breaking cutter holder 91 (bend-breaking cutter wheel 92) of the first and second bend-breaking jigs 83a, 83b in the up-down direction (Z-axis direction). The holder lifting mechanism 93 (air cylinder) lowers the cutter wheel 92 toward the upper surfaces 12 of the glass plates 11a, 11b at the time of bend-breaking the edge parts 56 of the glass plates 11a, 11b, and applies (provides) an end cutting pressure (downward pressing force) to the cutter wheel 92. A lifting dimension and a lowering dimension of the holder lifting mechanism are set in advance.

The pressing member 94 is formed of a plate 94a and a pressing rubber 94b. The pressing member 94 may be a plate 94a (pressing plate). The plate 94a is made of a metal plate or a synthetic resin plate having a predetermined thickness. The pressing rubber 94b is made of rubber having rubber elasticity, and is molded in a truncated hemispherical shape in which a head is cut off in a plane parallel to a bottom surface. The bottom surface of the pressing rubber 94b is fixed to a lower surface of the plate 94a in a vertically inverted state, and the head of the pressing rubber is directed downward. The pressing rubber 94b (pressing member 94) presses the edge parts 56 downward (edge parts 56 of the glass plates 11a, 11b extending outside the outline cutting line K1) of the glass plates 11a, 11b where the end cut lines K2 are formed by the head. The plate 94a and the pressing rubber 94b (pressing member 94) are perforated (formed) with a penetrating part 104 (through hole) opened at the center thereof. The bend-breaking cutter wheel 92 (holder head 97) is positioned in the penetrating part 104 of the plate 94a and the pressing rubber 94b (pressing member 94). The plate 94a is connected to the pressing member lifting mechanism 95 (second lifting mechanism) via a connecting member 105.

The pressing member lifting mechanism 95 (second lifting mechanism) is located on the side in the width direction of the plate 94a and the pressing rubber 94b (pressing member 94), and is fixed to the bracket 103 by a fixing member. An air cylinder is used for the pressing member lifting mechanism 95 (second lifting mechanism). The pressing member lifting mechanism 95 (air cylinder) lifts (vertically moves) the plates 94a and the pressing rubber 94b (pressing members 94) of the first and second bend-breaking jigs 83a, 83b in the up-down direction (Z-axis direction).

The pressing member lifting mechanism 95 (air cylinder) lowers the pressing rubber 94b (pressing member 94) toward the upper surfaces 12 of the glass plates 11a, 11b at the time of performing the bend-breaking processing on the edge parts 56 of the glass plates 11a, 11b, and applies (provides) a downward pressing force to the pressing rubber 94b (pressing member 94). A lifting dimension and a lowering dimension of the pressing rubber 94b (pressing member 94) are set in advance. The bracket 103 is slidably attached to the first actuator frame 88a and slidably attached to the second actuator frame 88b.

A control unit that controls start and stop of the holder lifting mechanism 93 (first lifting mechanism) and a control unit that controls start and stop of the pressing member lifting mechanism 95 (second lifting mechanism) are connected to the controller via an interface (wired or wireless) (not illustrated). When receiving a lifting signal from the controller, the control unit of the holder lifting mechanism 93 moves the bend-breaking cutter holder 91 (bend-breaking cutter wheel 92) up and down using the holder lifting mechanism 93 (air cylinder). When receiving a lifting signal from the controller, the control unit of the pressing member lifting mechanism 95 lifts the plate 94a and the pressing rubber 94b (pressing member 94) using the pressing member lifting mechanism 95 (air cylinder).

The sixth servomotor 84 (X-axis servomotor) is installed on the X-axis first actuator frame 88a, and an axis thereof is connected to the X-axis first actuator 85a. The first X-axis actuator 85a includes a screw part and a guide part (not illustrated). When a shaft of the sixth servomotor 84 rotates in the clockwise direction, the screw part of the X-axis first actuator 85a rotates in the clockwise direction. When the screw part rotates in the clockwise direction, the bend-breaking jig 83a of the first bend-breaking device 75a moves forward in the front-rear direction along the X-axis first actuator frame 88a together with the bracket 103. When the shaft of the sixth servomotor 84 rotates in the counterclockwise direction, the screw part of the X-axis first actuator 85a rotates in the counterclockwise direction. When the screw part rotates in the counterclockwise direction, the bend-breaking jig 83a of the first bend-breaking device 75a moves backward in the front-rear direction along the X-axis first actuator frame 88a together with the bracket 103.

The seventh servomotor 86 (Y-axis servomotor) is installed on the Y-axis first actuator frame 88a, and a shaft thereof is connected to the Y-axis first actuator 87a. The Y-axis first actuator 87a includes a screw part and a guide part (not illustrated). When the shaft of the seventh servomotor 86 rotates in the clockwise direction, the screw part of the Y-axis first actuator 87a rotates in the clockwise direction. When the screw part rotates in the clockwise direction, the bend-breaking jig 83a of the first bend-breaking device 75a moves in one direction in the width direction along the Y-axis first actuator frame 88a together with the bracket 103. When the shaft of the seventh servomotor 86 rotates in the counterclockwise direction, the screw part of the Y-axis first actuator 87a rotates in the counterclockwise direction. When the screw part rotates in the counterclockwise direction, the bend-breaking jig 83a of the first bend-breaking device 75a moves in the other direction in the width direction along the Y-axis first actuator frame 88a together with the bracket 103.

Control units that control start and stop, a number of rotation, and rotational speed of the sixth and seventh servomotors 84, 86 are connected to the controller via an interface (wired or wireless) (not illustrated). The control unit of the sixth servomotor 84 drives the sixth servomotor 84 at a predetermined number of rotation and rotational speed when receiving a drive signal from the controller, and stops the drive of the sixth servomotor 84 when receiving a stop signal from the controller. The control unit of the seventh servomotor 86 drives the seventh servomotor 86 at a predetermined number of rotation and rotational speed when receiving a drive signal from the controller, and stops the drive of the seventh servomotor 86 when receiving a stop signal from the controller.

The eighth servomotor 89 (X-axis servomotor) is installed on the X-axis second actuator frame 88b, and a shaft thereof is connected to the X-axis second actuator 85b. The X-axis second actuator 85b includes a screw part and a guide part (not illustrated). When the shaft of the eighth servomotor 89 rotates in the clockwise direction, the screw part of the X-axis second actuator 85b rotates in the clockwise direction. When the screw part rotates in the clockwise direction, the bend-breaking jig 83b of the second bend-breaking device 75b moves forward in the front-rear direction along the X-axis second actuator frame 88b together with the bracket 103. When the axis of the eighth servomotor 89 rotates in the counterclockwise direction, the screw part of the X-axis second actuator 85b rotates in the counterclockwise direction. When the screw part rotates in the counterclockwise direction, the bend-breaking jig 83b of the second bend-breaking device 75b moves backward in the front-rear direction along the X-axis second actuator frame 88b together with the bracket 103.

The ninth servomotor 90 (Y-axis servomotor) is installed on the Y-axis second actuator frame 88b, and the axis thereof is connected to the Y-axis second actuator 87b. The Y-axis second actuator 87b includes a screw part and a guide part (not illustrated). When the shaft of the ninth servomotor 90 rotates in the clockwise direction, the screw part of the Y-axis second actuator 87b rotates in the clockwise direction. When the screw part rotates in the clockwise direction, the bend-breaking jig 83b of the second bend-breaking device 75b together with the bracket 103 moves in one direction in the width direction along the second actuator frame 88b. When the shaft of the ninth servomotor 90 rotates in the counterclockwise direction, the screw part of the Y-axis second actuator 87b rotates in the counterclockwise direction. When the screw part rotates in the counterclockwise direction, the bend-breaking jig 83b of the second bend-breaking device 75b together with the bracket 103 moves in the other direction in the width direction along the second actuator frame 88b.

Control units that control start and stop, a number of rotation, and rotational speed of the eighth and ninth servomotors 89, 90 are connected to the controller via an interface (wired or wireless) (not illustrated). The control unit of the eighth servomotor 89 drives the eighth servomotor 89 at a predetermined number of rotation and rotational speed when receiving a drive signal from the controller, and stops the drive of the eighth servomotor 89 when receiving a stop signal from the controller. The control unit of the ninth servomotor 90 drives the ninth servomotor 90 at a predetermined number of rotation and rotational speed when receiving a drive signal from the controller, and stops the drive of the ninth servomotor 90 when receiving a stop signal from the controller.

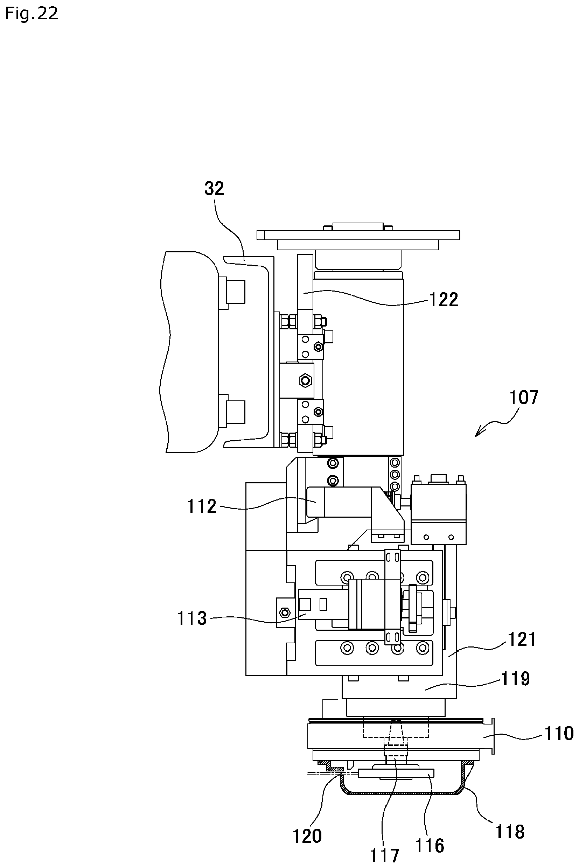

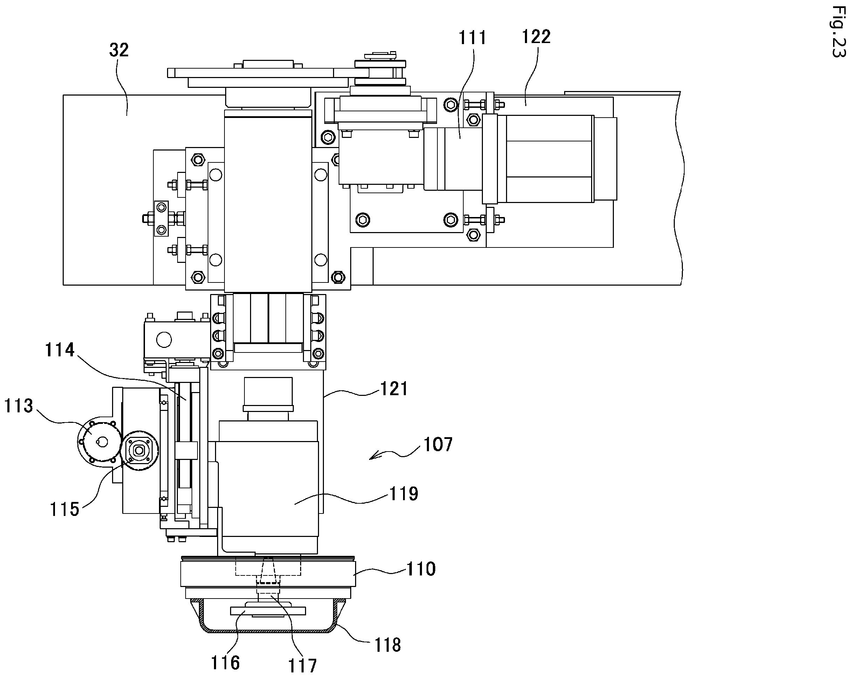

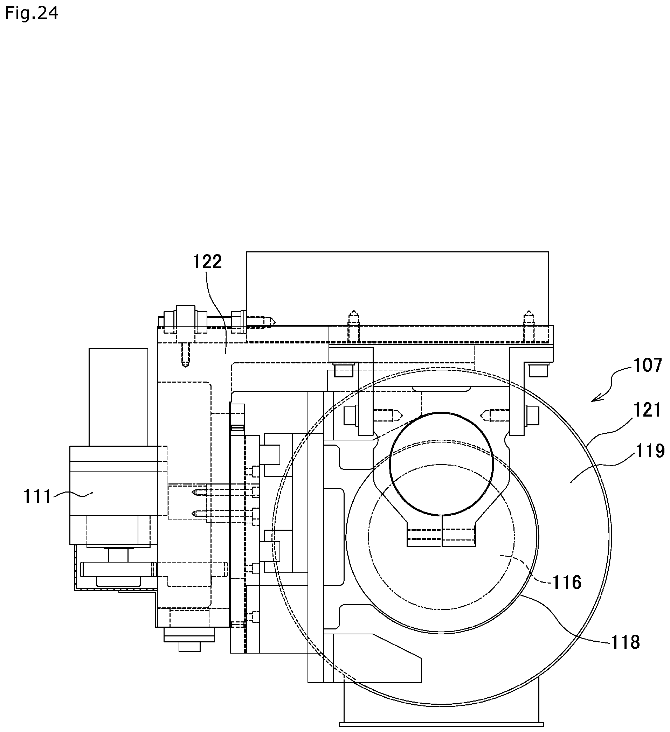

Fig. 22 is a front view of the grinding device 107 illustrated as an example installed in the grinding processing area 22, and Fig. 23 is a side view of the grinding device 107. Fig. 24 is a top view of the grinding device 107. The grinding processing area 22 includes a grinding processing table 106 that is positioned in the loading area 19, performs cutting processing in the cutting processing area 20, and places the glass plates 11a, 11b subjected bend-breaking processing in the bend-breaking processing area 21, and a grinding device 107 that grinds the edge parts 56 (peripheral edge parts) of the glass plates 11a, 11b placed on the grinding processing table 106.

The grinding processing table 106 is installed on a base lane 57b long in the width direction fixed to the floor surface of the system base 25 (see Fig. 7). The grinding processing table 106 includes a plurality of suction pads 108 that suck and hold the glass plates 11a, 11b, and a vacuum mechanism (air suction device) (air vacuum pump) (not illustrated) that applies a suction force to the suction pads 108 by setting the suction pads 108 to a negative pressure. A control unit that controls start and stop of the vacuum mechanism is connected to the controller via an interface (wired or wireless) (not illustrated).

The grinding processing table 106 moves in the width direction using the second moving mechanism 58b in a state where the positioned glass plates 11a, 11b are placed. The second moving mechanism 58b includes traveling guide rails 59b, a feed screw 60b (ball screw), a tenth servomotor 109, guide shoes 62b, and a slide block 63b (housing nut). The traveling guide rails 59b are installed on the upper surface of the base lane 57b and extend in the width direction. The feed screw 60b (ball screw) is installed on the upper surface of the base lane 57b and on the side of the traveling guide rails 59b, and extends in the width direction. The tenth servomotor 109 is installed in the base lane 57b and reciprocates the grinding processing table 106 in the width direction. The other end part of the feed screw 60b is connected to a shaft of the tenth servomotor 109.

A control unit that controls start and stop, a number of rotation, and a rotational speed of the tenth servomotor 109 is connected to the controller via an interface (wired or wireless) (not illustrated). The control unit of the tenth servomotor 109 drives the tenth servomotor 109 at a predetermined number of rotation and rotational speed when receiving a drive signal from the controller, and stops the drive of the tenth servomotor 109 when receiving a stop signal from the controller.

The feed screw 60b is rotatably supported by a bearing (not illustrated) fixed to the base lane 57b. The guide shoes 62b are attached to the lower surface of the grinding processing table 106 and extends in the width direction. The guide shoes 62b are slidably fitted to the traveling guide rails 59b. The slide block 63b (housing nut) is attached to the lower surface of the grinding processing table 106 and between the guide shoes 62b. The slide block 63b is rotatably screwed to the feed screw 60b.

When the shaft of the tenth servomotor 109 rotates in the clockwise direction, the feed screw 60b rotates in the clockwise direction, the rotation of the feed screw 60b in the clockwise direction causes the slide block 63b to move the feed screw 60b in the width direction from the other side edge 48b of the grinding processing area 22 toward the one side edge 48a, and the movement of the slide block 63b causes the grinding processing table 106 to move in the width direction from the other side edge 48b of the grinding processing area 22 toward the one side edge 48a. When the shaft of the tenth servomotor 109 rotates in the counterclockwise direction, the feed screw 60b rotates in the counterclockwise direction, and the rotation of the feed screw 60b in the counterclockwise direction causes the slide block 63b to move the feed screw 60b in the width direction from one side edge 48a toward the other side edge 48b of the grinding processing area 22, and the movement of the slide block 63b causes the grinding processing table 106 to move in the width direction from one side edge 48a toward the other side edge 48b of the grinding processing area **22.**

Note that the tenth servomotor 109 is driven in synchronization with the fourth servomotor 61 in the cutting processing area 20, and the cutting processing table 54 moves from the other side edge 48b to the one side edge 48a of the cutting processing area 20 in the grinding processing table 106 in synchronization with movement from the other side edge 48b to the one side edge 48a of the cutting processing area 22, or the cutting processing table 54 moves from the one side edge 48a to the other side edge 48b of the cutting processing area 20 in the grinding processing table 106 in synchronization with movement from the one side edge 48a to the other side edge 48b of the grinding processing area 22.

The grinding device 107 includes a grinding jig 110, an eleventh servomotor 111 (grinding Z-axis servomotor), a twelfth servomotor 112 (lifting and lowering servomotor), a thirteenth servomotor 113 (cutting servomotor), a grinding wheel lifting and lowering screw 114, and a grinding wheel cutting screw 115. The grinding jig 110 includes a grinding wheel 116, a grinding holder 117, a cover 118, and a spindle motor 119. The grinding wheel 116 is formed in a disk shape having a predetermined diameter, and grinds the edge parts 56 (peripheral edge parts) of the glass plates 11a, 1b by the outer peripheral surface thereof.

The grinding holder 117 is located immediately above the grinding wheel 116 and rotatably supports the grinding wheel 116. The cover 118 is located immediately below the grinding wheel 116 and covers the entire grinding wheel 116. The cover 118 is detachably attached to the grinding holder 117. A slit 120 into which the edge parts 56 of the glass plates 11a, 11b are inserted is formed in the cover 118. The spindle motor 119 is located immediately above the grinding wheel 116 (grinding holder 117), and is installed and housed in a motor housing 121. The spindle motor 119 has an axis connected to the center of the grinding wheel 116.

The rotation of the spindle motor 119 rotates the grinding wheel 116. The motor housing 121 is fixed to the traveling frame 32 via a bracket 122. A control unit that controls start and stop, a number of rotation, and a rotational speed of the spindle motor 119 is connected to the controller via an interface (wired or wireless) (not illustrated). The control unit of the spindle motor 119 drives the spindle motor 119 at a predetermined number of rotation and rotational speed when receiving a drive signal from the controller, and stops the drive of the spindle motor 119 when receiving a stop signal from the controller.

The eleventh servomotor 111 (grinding Z-axis servomotor) is located in the vicinity of the rear of the grinding jig 110, and is coupled and fixed to the traveling frame 32 via the bracket 122. A shaft of the eleventh servomotor 111 is connected to a support shaft of the motor housing 121. The eleventh servomotor 111 finely adjusts the attitude (angle around the axis) of the grinding wheel 116 in the axial direction such that the outer peripheral surface of the grinding wheel 116 abuts on the edge parts of the glass plates 11a, 11b in parallel.

The twelfth servomotor 112 (lifting servomotor) is located in the vicinity of the outer side in the width direction of the motor housing 121 (spindle motor 119), and is coupled and fixed to the motor housing 121. A shaft of the twelfth servomotor 112 is connected to the grinding wheel lifting screw 114, and rotates the grinding wheel lifting screw 114. The twelfth servomotor 112 moves the grinding wheel 116 (motor housing 121) up and down according to the thickness dimensions of the glass plates 11a, 11b, and finely adjusts a height of the grinding wheel 116 such that the height of the grinding wheel 116 coincides with the height of the edge parts 56 of the glass plates 11a, 11b and the outer peripheral surface of the grinding wheel 116 abuts on the edge parts 56 of the glass plates 11a, 11b.

Note that, in an initial setting for starting processing of the glass plates 11a, 11b, a distance from an attachment reference surface of the grinding wheel 116 to a center of a groove is input to the controller. The controller calculates the number of rotation of the shaft of the twelfth servomotor 112 based on the input distance, and transmits the calculated number of rotation to the controller of the twelfth servomotor 112. The control unit of the twelfth servomotor 112 rotates the shaft of the twelfth servomotor 112 at the number of rotation received from the controller. When the shaft of the twelfth servomotor 112 rotates in the clockwise direction at a predetermined number of rotation, the grinding wheel lifting screw 114 rotates in the clockwise direction and the screw 114 is lowered, whereby the grinding wheel 116 (motor housing 121) is lowered. When the shaft of the twelfth servomotor 112 rotates in the counterclockwise direction at a predetermined number of rotation, the grinding wheel lifting screw 114 rotates in the counterclockwise direction and the screw 114 rises, whereby the grinding wheel 116 (motor housing 121) rises. As long as the thickness dimensions of the glass plates 11a, 11b to be processed are the same, once fine adjustment of the height of the grinding wheel 116 is set, no subsequent adjustment is performed.

The thirteenth servomotor 113 (cutting servomotor) is located immediately below the twelfth servomotor 112 (lifting and lowering servomotor) and in the vicinity of the outer side of the motor housing 121 (spindle motor 119) in the width direction, and is coupled and fixed to the motor housing 121. The shaft of the thirteenth servomotor 113 is connected to the grinding wheel cutting screw 115, and rotates the grinding wheel cutting screw 115. The thirteenth servomotor 113 moves the grinding wheel 116 (motor housing 121) in the width direction according to the width dimension (size) of the glass plates 11a, 11b, and finely adjusts the position of the grinding wheel 116 in the front-rear direction such that the outer peripheral surface of the grinding wheel 116 abuts on the edge parts 56 of the glass plates 11a, 11b.

Control units that control start and stop, a number of rotation, and a rotational speed of each of the eleventh to thirteenth servomotors 111 to 113 is connected to a controller via an interface (wired or wireless) (not illustrated). The control unit of the eleventh servomotor 111 drives the eleventh servomotor 111 at a predetermined number of rotation and rotational speed when receiving a drive signal from the controller, and stops the drive of the eleventh servomotor 111 when receiving a stop signal from the controller. The control unit of the twelfth servomotor 112 drives the twelfth servomotor 112 at a predetermined number of rotation and rotational speed when receiving a drive signal from the controller, and stops the drive of the twelfth servomotor 112 when receiving a stop signal from the controller. The control unit of the thirteenth servomotor 113 drives the thirteenth servomotor 113 at a predetermined number of rotation and rotational speed when receiving a drive signal from the controller, and stops the drive of the thirteenth servomotor 113 when receiving a stop signal from the controller.

Note that, in the initial setting for starting processing of the glass plates 11a, 11b, a diameter (diameter) of the grinding wheel 116 is input to the controller. The controller calculates the rotational speed of the shaft of the thirteenth servomotor 113 based on the input diameter (diameter) of the grinding wheel 116, and transmits the calculated number of rotation to the control unit of the thirteenth servomotor 113. The control unit of the thirteenth servomotor 113 rotates the shaft of the thirteenth servomotor 113 at the number of rotation received from the controller. When the shaft of the thirteenth servomotor 113 rotates clockwise at a predetermined number of rotation, the grinding wheel cutting screw 115 rotates clockwise and the screw 115 moves rearward in the front-rear direction, whereby the grinding wheel 116 (motor housing 121) moves rearward in the front-rear direction. When the shaft of the thirteenth servomotor 113 rotates counterclockwise at a predetermined number of rotation, the grinding wheel cutting screw 115 rotates counterclockwise and the screw 115 moves forward in the front-rear direction, whereby the grinding wheel 116 (motor housing 121) moves forward in the front-rear direction. As long as the diameter (diameter) of the grinding wheel 116 is the same, once fine adjustment of the position of the grinding wheel 116 in the front-rear direction is set, no subsequent adjustment is performed.

In the unloading area 23, unloading conveyors 123 are installed. The unloading area 23 is supported by legs extending upward from a floor surface of the system base 25. The unloading conveyors 123 are a plurality of endless tracks extending in the front-rear direction (X direction), and are arranged at predetermined intervals in the width direction (Y direction). A control unit that controls start and stop, and a conveyance distance of the unloading conveyors 123 is connected to the controller via an interface (wired or wireless) (not illustrated). The unloading conveyors 123 convey the glass plates 11a, 11b from the rear side to the front side in the front-rear direction from the rear end part (loading port) toward the front end part (unloading port) of the unloading area 23.

Hereinafter, an example of processing (cutting processing, bend-breaking processing, grinding processing) of the glass plates 11a, 11b will be described. At the start of processing, the glass plate first holder 40a stands by above the loading area 19, the glass plate second holder 40b stands by above the cutting processing area 20, the glass plate third holder 40c stands by above the bend-breaking processing area 21, and the glass plate fourth holder 40d stands by above the grinding processing area 22.

Various glass plate images are output (displayed) on a monitor, a display, or a touch panel (output device) connected to the controller. The specific glass plates 11a, 11b to be processed are clicked (tapped) (selected) from the plurality of various glass plate images output (displayed) to the output device. When the specific glass plates 11a, 11b are selected, the controller selects an NC control program for processing to be performed on the glass plates 11a, 11b. The controller outputs (displays) the input area of the distance from the attachment reference surface of the grinding wheel 116 to the center of the groove, the dimension input area of the glass plates 11a, 11b in the front-rear direction, and the diameter (diameter) input area of the grinding wheel 116 to the output device.

After inputting the distance in the input area of the distance from the attachment reference surface of the grinding wheel 116 to the center of the groove and inputting the diameter in the diameter (diameter) input area of the grinding wheel 116, an input button output (displayed) to the output device is clicked (tapped). When the distance and the diameter are input, the controller drives the twelfth servomotor 112 to move the grinding wheel 116 (motor housing 121) up and down to finely adjust the height of the grinding wheel 116, and drives the thirteenth servomotor 113 to move the grinding wheel 116 (motor housing 121) in the width direction to finely adjust the position of the grinding wheel 116 in the front-rear direction. After the fine adjustment is completed, the controller outputs (displays) a processing start button to the output device. When the processing start button is clicked (tapped), processing of the glass plates 11a, 11b is started.

The selected glass plates 11a, 11b to be processed (before processing) are carried into the loading area 19. In the loading area 19, first positioning means (first positioning step) and second positioning means (second positioning step) are performed. The glass plates 11a, 11b to be processed are automatically supplied to the loading conveyor 43 in the loading area 19 by an automatic supply device (not illustrated). In the automatic supply device, the plurality of glass plates 11a, 11b to be processed having the same (same size) areas of the upper surface 12 and the lower surface 13 are stacked in the up-down direction, and the glass plates 11a, 11b are supplied from the automatic supply device to the loading conveyor 43 one by one.

An example of a procedure of positioning the glass plates 11a, 11b in the loading area 19 is as follows. The controller transmits an advance signal (ON signal) to the control unit of the loading conveyor 43, and the control unit of the loading conveyor 43 that has received the advance signal (ON signal) drives the loading conveyor 43. The glass plates 11a, 11b carried in the loading area 19 are placed on the loading conveyor 43 in a state where the lower surfaces 13 thereof abuts on the loading conveyor 43. In the glass plates 11a, 11b, the first side edge 14 (one side edge 14) (including a case where the side edge 14 is curved (curved)) is parallel to one side edge 48a of the loading area 19, and the other side edge 15 is parallel to the other side edge 48b of the loading area 19.

The glass plates 11a, 11b placed on the loading conveyor 43 are gradually moved forward in the front-rear direction from the rear to the front of the loading area 19 by the loading conveyor 43. When the glass plates 11a, 11b move from the rear toward the front of the loading area 19 and the front end edges 16 of the glass plates 11a, 11b abut on the stopper 44, the contact sensor installed in the stopper 44 detects the abutment of the front end edges 16 of the glass plates 11a, 11b on the stopper 44, and transmits a contact (abutment) signal to the controller.

The controller that has received the contact signal transmits a stop signal (OFF signal) to the control unit of the loading conveyor 43, and the control unit of the loading conveyor 43 that has received the stop signal (OFF signal) stops driving of the loading conveyor 43. Next, the controller transmits, to the control unit of the loading conveyor 43, the second movement dimension of the loading conveyor 43 to the rear side in the front-rear direction for positioning the center O (center line L2 extending in the width direction by dividing the dimension of the glass plates 11a, 11b in the front-rear direction by 2.) in the front-rear direction of the first side edge 14 of the glass plates 11a, 11b at the positioning second reference L2 (virtual positioning second reference line) of the loading area 19, and transmits a retreat signal (ON signal) to the control unit of the loading conveyor 43.

The control unit of the loading conveyor 43 that has received the second movement dimension and the retreat signal (ON signal) drives the loading conveyor 43 to move the glass plates 11a, 11b rearward in the front-rear direction by the second movement dimension by the loading conveyor 43. When the loading conveyor 43 moves the glass plates 11a, 11b rearward in the front-rear direction by the second movement dimension, the center O1 (center line L2 of glass plates 11a, 11b) in the front-rear direction of one side edge in the width direction of the glass plates 11a, 11b is located at the positioning second reference L2 (virtual positioning second reference line) in the loading area 19 (second positioning means).

After moving the glass plates 11a, 11b backward in the front-rear direction by the second movement dimension, the controller transmits a stop signal (OFF signal) to the control unit of the loading conveyor 43, and the control unit of the loading conveyor 43 that has received the stop signal (OFF signal) stops driving of the loading conveyors 43. Next, the controller transmits a lifting signal (ON signal) to the control unit of the roller lifting mechanism 46 (air cylinder). The control unit of the roller lifting mechanism 46 that has received the lifting signal (ON signal) lifts the roller lifting mechanism 46 (air cylinder). The rollers 45 are lifted by lifting of the roller lifting mechanism 46, a part of the peripheral edge part of the rollers 45 is exposed to the upper side of the loading conveyor 43, and in a state where the lifted rollers 45 abut on the lower surfaces 13 of the glass plates 11a, 11b, the rollers 45 lift the glass plates 11a, 11b to the upper side of the loading conveyor 43.

After the lifting of the roller lifting mechanism 46 (air cylinder) is completed, the controller transmits the number of rotation of the third servomotor 51 calculated from the first movement dimension (first movement distance) in the width direction of the moving mechanism 47 for positioning the first side edge 14 of the glass plates 11a, 11b to the positioning first reference L1 (virtual positioning first reference line) to the control unit of the third servomotor 51, and transmits a forward rotation signal (ON signal) to the control unit of the third servomotor 51. The control unit that has received the number of rotation of the third servomotor 51 and the forward rotation signal (ON signal) drives the third servomotor 51 to rotate the shaft of the third servomotor 51 clockwise by a predetermined number of rotation.

The rotation of the feed screw by the rotation of the shaft of the third servomotor 51 in the clockwise direction gradually moves the abutting member 53 together with the moving arm 52 from the movement start point to one side in the width direction. The abutting member 53 moving in one direction in the width direction abuts on the second side edges 15 (the other side edges) of the glass plates 11a, 11b, and the abutting member 53 presses the second side parts 15 of the glass plates 11a, 11b in the width direction so as to move the glass plates 11a, 11b from the other side to the one side in the width direction. The glass plates 11a, 11b pressed by the abutting member 53 move in the width direction from the other side toward one side in the width direction on the roller 45, and the outermost edge located on the outermost side in the width direction among the first side edges 14 of the glass plates 11a, 11b in the width direction is located at the positioning first reference L1 (virtual positioning first reference line) in the loading area 19 (first positioning means (first positioning step)).

When the movement of the abutting member 53 in one direction in the width direction is finished and the outermost edge located on the outermost side in the width direction among the first side edges 14 in the width direction of the glass plates 11a, 11b is located at the positioning first reference L1 in the loading area 19, the controller transmits a stop signal (OFF signal) to the control unit of the third servomotor 51. The control unit of the third servomotor 51 that has received the stop signal (OFF signal) stops driving of the third servomotor 51. After the third servomotor 51 stops being driven, the controller transmits a reverse rotation signal (ON signal) to the control unit of the third servomotor 51. The control unit of the third servomotor 51 that has received the reverse rotation signal (ON signal) drives the third servomotor 51 to rotate the axis of the third servomotor 51 counterclockwise by a predetermined number of rotation.

Due to the rotation of the feed screw by the rotation of the shaft of the third servomotor 51 in the counterclockwise direction, the abutting member 53 gradually moves to the other side in the width direction together with the moving arm 52, and the abutting member 53 returns to the movement start point. After the abutting member 53 returns to the movement start point, the controller transmits a stop signal (OFF signal) to the control unit of the third servomotor 51, and transmits a lowering signal (ON signal) to the control unit of the roller lifting mechanism 46 (air cylinder). The control unit of the third servomotor 51 that has received the stop signal (OFF signal) stops driving of the third servomotor 51, and the control unit of the roller lifting mechanism 46 that has received the lowering signal (ON signal) lowers the roller lifting mechanism 46 (air cylinder). When the roller lifting mechanism 46 descends, the lower surfaces 13 of the glass plates 11a, 11b positioned by the first positioning means (first positioning step) and the second positioning means (second positioning step) come into contact with the conveyor 43.

The glass plate processing system 10 moves the glass plates 11a, 11b from the rear side to the front side in the loading area 19 by the loading conveyor 43 and brings the front end edges 16 of the glass plates 11a, 11b into contact with the stoppers 44, then moves the glass plates 11a, 11b to the rear side in the front-rear direction by the loading conveyor 43 to position the center O1 (center line L2 of the glass plates 11a, 11b) in the front-rear direction of the first side edges 14 in the width direction of the glass plates 11a, 11b at the positioning second reference L2 in the loading area 19, and moves the center O1 (center line L2 of the glass plates 11a, 11b) in the front-rear direction of one side edge 14 in the width direction of the glass plates 11a, 11b at the positioning second reference L2 by the second positioning means (second positioning step), and then lifts the glass plates 11a, 11b together with the rollers 45 by the roller lifting mechanism 46 (air cylinder), and by pressing and moving the second side edges 15 of the lifted glass plates 11a, 11b in the width direction by the moving mechanism 47, the outermost edge located on the outermost side in the width direction among the first side edges 14 of the glass plates 11a, 11b in the width direction is located at the positioning first reference L1 in the loading area 19. Therefore, the center O1 (the center line L2 of the glass plate 11b) in the front-rear direction of the first side edge 14 extending in the front-rear direction on one side in the width direction of the glass plate 11a to be processed later can be accurately located (matched) at the position of the center O1 (the center line L2 of the glass plate 11a) in the front-rear direction of the first side edge 14 extending in the front-rear direction on one side in the width direction of the glass plate 11b having different areas of the upper and lower surfaces 12 and 13 to be processed later, It is possible to accurately position (match) the outermost edge of the first side edge 14 extending in the front-rear direction on one side in the width direction of the glass plate 11a to be processed later among the first side edges 14 extending in the front-rear direction on one side in the width direction of the glass plate 11b having different sizes in areas of the upper surface 12 and the lower surface 13 to be processed later.

Another example of the procedure of positioning the glass plates 11a, 11b in the loading area 19 is as follows. The controller transmits an advance signal (ON signal) to the control unit of the loading conveyor 43, and the control unit of the loading conveyor 43 that has received the advance signal (ON signal) drives the loading conveyor 43. The glass plates 11a, 11b carried in the loading area 19 are placed on the loading conveyor 43 in a state where the lower surfaces 13 thereof abuts on the loading conveyor 43. The glass plates 11a, 11b placed on the loading conveyor 43 are gradually moved forward in the front-rear direction from the rear side (start position) of the loading area 19 toward the front side by the loading conveyor 43. When the glass plates 11a, 11b move from the rear toward the front of the loading area 19 and the front end edges 16 of the glass plates 11a, 11b abut on the stopper 44, the contact sensor installed in the stopper 44 detects the abutment of the front end edges 16 of the glass plates 11a, 11b on the stopper 44, and transmits a contact signal to the controller.

The controller that has received the contact signal transmits a stop signal (OFF signal) to the control unit of the loading conveyor 43, and the control unit of the loading conveyor 43 that has received the stop signal (OFF signal) stops driving of the loading conveyor 43. Next, the controller transmits a lifting signal (ON signal) to the control unit of the roller lifting mechanism 46 (air cylinder). The control unit of the roller lifting mechanism 46 that has received the lifting signal (ON signal) lifts the roller lifting mechanism 46 (air cylinder). The rollers 45 are lifted by lifting of the roller lifting mechanism 46, a part of the peripheral edge part of the rollers 45 is exposed to the upper side of the loading conveyor 43, and in a state where the lifted rollers 45 abut on the lower surfaces 13 of the glass plates 11a, 11b, the rollers 45 lift the glass plates 11a, 11b to the upper side of the loading conveyor 43.

After the lifting of the roller lifting mechanism 46 (air cylinder) is completed, the controller transmits the number of rotation of the third servomotor 51 calculated from the first movement dimension (first movement distance) in the width direction of the moving mechanism 47 for positioning the first side edge 14 of the glass plates 11a, 11b to the positioning first reference L1 (virtual positioning first reference line) to the control unit of the third servomotor 51, and transmits a forward rotation signal (ON signal) to the control unit of the third servomotor 51. The control unit of the third servomotor 51 that has received the number of rotation and the forward rotation signal (ON signal) drives the third servomotor 51 to rotate the shaft of the third servomotor 51 clockwise by a predetermined number of rotation.

Due to the rotation of the feed screw by the rotation of the shaft of the third servomotor 51 in the clockwise direction, the abutting member 53 and the moving arm 52 gradually move from the movement start point to one side (the side part 48a of the loading area 19) in the width direction. The abutting member 53 moving in one direction in the width direction abuts on the second side edges 15 of the glass plates 11a, 11b, and the abutting member 53 presses the second side edges 15 of the glass plates 11a, 11b in the width direction so as to move the glass plates 11a, 11b from the other side in the width direction to the one side. The glass plates 11a, 11b pressed by the abutting member 53 move in the width direction from the other side toward one side in the width direction on the roller 45, and the outermost edge located on the outermost side in the width direction among the first side edges 14 of the glass plates 11a, 11b in the width direction is located at the positioning first reference L1 (virtual positioning first reference line) in the loading area 19 (first positioning means (first positioning step)).

When the movement of the abutting member 53 in one direction in the width direction is finished and the first side edge 14 in the width direction of the glass plates 11a, 11b is positioned at the positioning first reference L1 in the loading area 19, the controller transmits a stop signal (OFF signal) to the control unit of the third servomotor 51. The control unit of the third servomotor 51 that has received the stop signal (OFF signal) stops driving of the third servomotor 51. After the third servomotor 51 stops being driven, the controller transmits a reverse rotation signal (ON signal) to the control unit of the third servomotor 51. The control unit of the third servomotor 51 that has received the reverse rotation signal (ON signal) drives the third servomotor 51 to rotate the axis of the third servomotor 51 counterclockwise by a predetermined number of rotation.

Due to the rotation of the feed screw by the rotation of the shaft of the third servomotor 51 in the counterclockwise direction, the abutting member 53 gradually moves to the other side (the side part 48b of the loading area 19) in the width direction together with the moving arm 52, and the abutting member 53 returns to the movement start point. After the abutting member 53 returns to the movement start point, the controller transmits a stop signal (OFF signal) to the control unit of the third servomotor 51, and transmits a lowering signal (ON signal) to the control unit of the roller lifting mechanism 46 (air cylinder). The control unit of the third servomotor 51 that has received the stop signal (OFF signal) stops driving of the third servomotor 51, and the control unit of the roller lifting mechanism 46 that has received the lowering signal (ON signal) lowers the roller lifting mechanism 46 (air cylinder). When the roller lifting mechanism 46 is lowered, the lower surfaces 13 of the glass plates 11a, 11b come into contact with the conveyor 43.

After the lower surfaces 13 of the glass plates 11a, 11b abut on the conveyor 43, the controller transmits the second moving dimension to the rear side in the front-rear direction of the loading conveyor 43 for positioning the center O1 in the front-rear direction of the first side edges 14 of the glass plates 11a, 11b at the positioning second reference L2 (virtual positioning second reference line) of the loading area 19 to the control unit of the loading conveyor 43, and transmits a retreat signal (ON signal) to the control unit of the loading conveyor 43.

The control unit of the loading conveyor 43 that has received the second movement dimension and the retreat signal (ON signal) drives the loading conveyor 43 to move the glass plates 11a, 11b rearward in the front-rear direction by the second movement dimension by the loading conveyor 43. When the loading conveyor 43 moves the glass plates 11a, 11b rearward in the front-rear direction by the second movement dimension, the front-rear direction center O1 (center line L2 extending in the width direction by dividing the dimension of the glass plates 11a, 11b in the front-rear direction by 2) of the first side edges 14 of the glass plates 11a, 11b in the width direction is located at the positioning second reference L2 (virtual positioning second reference line) in the loading area 19 (second positioning means (second positioning step)). After moving the glass plates 11a, 11b backward in the front-rear direction by the second movement dimension, the controller transmits a stop signal (OFF signal) to the control unit of the loading conveyor 43, and the control unit of the loading conveyor 43 that has received the stop signal (OFF signal) stops driving of the loading conveyors 43. The glass plates 11a, 11b are positioned by first positioning means (first positioning step) and second positioning means (second positioning step).

In the glass plate processing system, after the glass plates 11a, 11b are moved from the rear side to the front side in the loading area 19 by the loading conveyor 43 and the front end edges 16 of the glass plates 11a, 11b abut on the stopper 44, the glass plates 11a, 11b are lifted together with the roller 45 by the roller lifting mechanism 46 (air cylinder), and the lifted second side edges 15 of the glass plates 11a, 11b are pressed and moved in the width direction by the moving mechanism 47, so that the outermost edge located on the outermost side in the width direction among the first side edges 14 of the glass plates 11a, 11b in the width direction is positioned at the positioning first reference L1 in the loading area 19, and after the outermost edge located on the outermost side in the width direction among the first side edges 14 in the width direction of the glass plates 11a, 11b is positioned at the positioning first reference L1 by the first positioning means (first positioning step), the glass plates 11a, 11b are lowered together with the roller 45 by the roller lifting mechanism 46 (air cylinder), the glass plates 11a, 11b are moved from the rear side to the front side of the loading area 19 by the loading conveyor 43, the front end edges 16 of the glass plates 11a, 11b abut on the stopper 44, and then the glass plates 11a, 11b are moved to the rear side in the front-rear direction by the loading conveyor 43, so that the center O1 (center line L2 of the glass plates 11a, 11b) in the front-rear direction of the first side edges 14 in the width direction of the glass plates 11a, 11b is positioned at the positioning second reference L2 in the loading area 19, the outermost edge of the first side edge 14 extending in the front-rear direction on one side in the width direction of the glass plate 11a processed first can be accurately positioned (matched) at the position of the outermost edge of the first side edge 14 extending in the front-rear direction on one side in the width direction of the glass plate 11b having different sizes in the areas of the upper surface 12 and the lower surface 13 processed later, and the center O1 (the center line L2 of the glass plate 11b) in the front-rear direction of the side edge 14 extending in the front-rear direction on one side in the width direction of the glass plate 11a processed first can be accurately (positioned) at the position of the center O1 (the center line L2 of the glass plate 11a) in the front-rear direction of the side edge 14 extending in the front-rear direction on one side in the width direction of the glass plate 11b having different sizes in the areas of the upper and lower surfaces 12, 13 processed later.

In the glass plate processing system 10, when a large-sized glass plate 11a having large areas of the upper and lower surfaces 12, 13 and a small-sized glass plate 11b having smaller areas of the upper and lower surfaces 12, 13 than the large-sized glass plate 11a are positioned by the first positioning means (first positioning step) and the second positioning means (second positioning step), as illustrated in Fig. 3, a first side edge 14 (one side edge) extending in the front-rear direction of the large-sized glass plate 11a and a first side edge 14 (one side edge) extending in the front-rear direction of the small-sized glass plate 11b are positioned at a positioning first reference L1 (virtual positioning first reference line) of the loading area 19, and, a center O1 in the front-rear direction of the first side edge 14 extending in the front-rear direction of the large-size glass plate 11a and a center O1 in the front-rear direction of the first side edge 14 extending in the front-rear direction of the small-size glass plate 11b are positioned at a positioning second reference L2 (virtual positioning second reference line) of the loading area 19.

In the large-sized glass plate 11a and the small-sized glass plate 11b positioned by the first positioning means (first positioning step) and the second positioning means (second positioning step), the outermost edge (in the illustrated glass plates 11a, 11b, the first side edge 14) located on the outermost side in the width direction among the first side edges 14 of the glass plates 11a, 11b coincides with each other in the positioning first reference L1 (virtual positioning first reference line), and the front-rear direction centers O1 (center line L2 extending in the width direction by dividing the dimension of the glass plates 11a, 11b in the front-rear direction by 2) of the first side edges 14 of the glass plates 11a, 11b coincide with each other in the positioning second reference L2 (virtual positioning second reference line).

After the positioning of the glass plates 11a, 11b is completed by the first positioning means (first positioning step) and the second positioning means (second positioning step), the controller transmits a lowering signal (ON signal) to a control unit of a lifting mechanism (air cylinder) of the glass plate first holder 40a. Upon receiving the lowering signal (ON signal), the control unit of the lifting mechanism (air cylinder) lowers the suction pad 42 toward the upper surfaces 12 of the glass plates 11a, 11b by the lifting mechanism. After the suction pad 42 of the glass plate first holder 40a abuts on the upper surfaces 12 of the glass plates 11a, 11b, the controller transmits a suction signal (ON signal) to the control unit of the vacuum mechanism of the glass plate first holder 40a. The control unit of the vacuum mechanism that has received the suction signal (ON signal) activates the vacuum mechanism.

When the vacuum mechanism is activated, the glass plates 11a, 11b located in the loading area 19 are sucked by the suction pad 42. After starting the vacuum mechanism, the controller transmits a lifting signal (ON signal) to a control unit of a pad lifting mechanism (air cylinder) of the glass plate first holder 40a. The control unit of the pad lifting mechanism (air cylinder) that has received the lifting signal (ON signal) lifts the suction pad 42 by the pad lifting mechanism. The glass plates 11a, 11b positioned by the first positioning means (first positioning step) and the second positioning means (second positioning step) in the loading area 19 are lifted together with the suction pad 42 in a state of being sucked to the suction pad 42.

After the suction pad 42 (glass plates 11a, 11b) is lifted, the controller transmits an advance signal (ON signal) to the control unit of the second servomotor 39. The control unit of the second servomotor 39 that has received the advance signal (ON signal) drives the second servomotor 39. The rotation of the axis of the second servomotor 39 moves the slide block in the front-rear direction from the rear toward the front of the second guide frame 35, whereby the glass plate first holder 40a (glass plates 11a, 11b sucked to suction pad 42) moves from the loading area 19 to the cutting processing area 20 (glass plate moving means (glass plate moving process)). The movement of the slide block causes the glass plate first holder 40a and the glass plate second to fourth holders 40b to 40d to move forward in the front-rear direction.

After the glass plate first holder 40a moves to the cutting processing area 20, the controller transmits a lowering signal (ON signal) to the control unit of the pad lifting mechanism (air cylinder) of the glass plate first holder 40a. Upon receiving the lowering signal (ON signal), the control unit of the pad lifting mechanism (air cylinder) lowers the suction pad 42 (glass plates 11a, 11b) onto the cutting processing table 54 in the cutting processing area 20 by the pad lifting mechanism. After the glass plates 11a, 11b attracted to the suction pad 42 of the glass plate first holder 40a abut on the cutting processing table 54, the controller transmits a stop signal (OFF signal) to the control unit of the vacuum mechanism of the glass plate first holder 40a. The control unit of the vacuum mechanism that has received the stop signal (OFF signal) stops the activation of the vacuum mechanism. When the vacuum mechanism stops, the suction of the suction pad 42 to the glass plates 11a, 11b is released, and the positioned glass plates 11a, 11b are placed on the cutting processing table 54. When the glass plates 11a, 11b are placed on the cutting processing table 54, the lower surfaces 13 of the glass plates 11a, 11b are sucked and held by suction pads (not illustrated) installed on the cutting processing table 54.

Next, the controller transmits a raising signal (ON signal) to the control unit of the pad lifting mechanism (air cylinder) of the glass plate first holder 40a, and the glass plate first holder 40a (pad lifting mechanism) is lifted above the cutting processing table 54 by the lifting signal. After the glass plate first holder 40a is lifted, a retreat signal (ON signal) is transmitted from the controller to the control unit of the second servomotor 39, the glass plate first holder 40a moves from the cutting processing area 20 to the loading area 19 by the rotation of the shaft of the second servomotor 39, and the glass plate first holder 40a stands by above the loading area 19. The glass plate second holder to the glass plate fourth holders 40b to 40d move rearward in the front-rear direction together with the glass plate first holder 40a, the glass plate second holder 40b stands by above the cutting processing area 20, the glass plate third holder 40c stands by above the bend-breaking processing area 21, and the glass plate fourth holder 40d stands by above the grinding processing area 22.

A conveyance procedure from the cutting processing area 20 to the bend-breaking processing area 21 by the glass plate second holder 40b of the glass plates 11a, 11b after the cutting processing (glass plate moving means (glass plate moving step)), a conveyance procedure from the bend-breaking processing area 21 to the grinding processing area 22 by the glass plate third holder 40c of the glass plates 11a, 11b after the bend-breaking processing (glass plate moving means (glass plate moving step)), and a conveyance procedure from the grinding processing area 22 to the unloading area 23 by the glass plate fourth holder 40d of the glass plates 11a, 11b after the grinding processing (glass plate moving means (glass plate moving step)) are the same as those from the loading area 19 to the cutting processing area 20 of the glass plates 11a, 11b by the glass plate first holder 40a. Therefore, description of the conveyance procedure by the glass plate second to fourth holders 40b to 40d will be omitted.

After the glass plates 11a, 11b are placed on the cutting processing table 54, the controller transmits a retreat signal (ON signal) to the control unit of the first servomotor 34. The control unit of the first servomotor 34 that has received the retreat signal (ON signal) drives the first servomotor 34. The rotation of the shaft of the first servomotor 34 causes the first slide block to move in the front-rear direction from the front toward the rear of the first guide frame 30, whereby the cutting device 55 moves together with the first traveling frame 32 to the rear in the front-rear direction in the cutting processing area 20, and the cutting device 55 is located outward in the width direction (cutting processing start position) of the first corner parts 18a (front side edges 16) of the glass plates 11a, 11b.

After the cutting device 55 is positioned outward in the width direction of the first corner part 18a of the glass plates 11a, 11b (cutting start position), the controller transmits a stop signal (OFF signal) to the control unit of the first servomotor 34 and transmits a drive signal (ON signal) to the control unit of the fourth servomotor 61. The control unit of the first servomotor 34 that has received the stop signal (OFF signal) stops the first servomotor 34, and the control unit of the fourth servomotor 61 that has received the drive signal (ON signal) drives the fourth servomotor 61. The rotation of the axis of the fourth servomotor 61 causes the slide block 63a to move the feed screw 60a in the width direction from the other side edge 48b of the cutting processing area 20 toward the one side edge 48a, so that the cutting processing table 54 moves in the width direction from the other side edge 48b of the cutting processing area 20 toward the one side edge 48a, and the cutting cutter wheel 67 of the cutting device 55 is located at the first corner part 18a of the glass plates 11a, 11b.

After the cutting cutter wheel 67 of the cutting device 55 is positioned at the first corner part 18a of the glass plates 11a, 11b, the controller transmits a drive signal (ON signal) and an NC control signal to the control unit of the air cylinder 65 and the fifth servomotor 66 of the cutting device 55, transmits a retreat signal (ON signal) and an NC control signal to the control unit of the first servomotor 34, and transmits an NC control signal to the control unit of the fourth servomotor 61. The control unit of the air cylinder 65, the control unit of the fifth servomotor 66, the control unit of the first servomotor 34, and the control unit of the fourth servomotor 61 of the cutting device 55 that have received the drive signal (ON signal) and the NC control signal drive the air cylinder 65, the fifth servomotor 66, the first servomotor 34, and the fourth servomotor 61 to perform the contour control motion by the NC control on the vicinity of the first side edge 14 (first side edge) of the glass plates 11a, 11b, and the cutting cutter wheel 67 cuts the vicinity of the first side edge 14 (first side edge) of the glass plates 11a, 11b (cutting processing means (cutting processing step)).

The control unit of the first servomotor 34 that has received the retreat signal (ON signal) drives the first servomotor 34 during the cutting to move the cutting device 55 backward in the front-rear direction in the cutting processing area 20, and the control unit of the fourth servomotor 61 drives the fourth servomotor 61 during the cutting to reciprocate the cutting device 55 in the width direction in the cutting processing area 20. The cutting cutter wheel 67 of the cutting device 55 moves from the first corner part 18a of the glass plates 11a, 11b toward the second corner part 18b while forming the outline cutting line K1 in the vicinity of the first side edge 14 (first side edge) of the glass plates 11a, 11b.

After the cutting process of the vicinities (first side edges) of the first side edges 14 of the glass plates 11a, 11b is completed by the cutting cutter wheel 67 of the cutting device 55 and the cutting cutter wheel 67 is positioned at the second corner part 18b of the glass plates 11a, 11b, the cutting processing table 54 moves in the width direction from the side of one side edge 48a of the cutting processing area 20 toward the side of the other side edge 48b, and the cutting cutter wheel 67 performs the cutting process of the vicinities (rear end edges) of the rear end edges 17 of the glass plates 11a, 11b with the movement of the cutting processing table 54 in the width direction (cutting processing means (cutting processing step)).

The control unit of the fourth servomotor 61 drives the fourth servomotor 61 during the cutting to move the cutting processing table 54 in the width direction in the cutting processing area 20, and the control unit of the first servomotor 34 drives the first servomotor 34 during the cutting to reciprocate the cutting device 55 in the front-rear direction in the cutting processing area 20. The cutting cutter wheel 67 of the cutting device 55 moves from the second corner part 18b toward the third corner part 18c of the glass plates 11a, 11b while forming the outline cutting line K1 in the vicinity of the rear end edge 17 (rear end edge) of the glass plates 11a, 11b.

After the cutting processing of the vicinities (rear end edges) of the rear end edges 17 of the glass plates 11a, 11b is completed by the cutting cutter wheel 67 of the cutting device 55 and the cutting cutter wheel 67 is positioned at the third corner part 18c of the glass plates 11a, 11b, the cutting device 55 moves forward in the front-rear direction, and the cutting cutter wheel 67 performs the cutting process of the vicinities (second side edges) of the second side edges 15 of the glass plates 11a, 11b with the movement of the cutting device 55 forward in the front-rear direction (cutting processing means (cutting processing step)).

The control unit of the first servomotor 34 drives the first servomotor 34 during the cutting to move the cutting device 55 forward in the front-rear direction in the cutting processing area 20, and the control unit of the fourth servomotor 61 drives the fourth servomotor 61 during the cutting to reciprocate the cutting processing table 54 in the width direction in the cutting processing area 20. The cutting cutter wheel 67 of the cutting device 55 moves from the third corner part 18c toward the fourth corner part 18d of the glass plates 11a, 11b while forming the outline cutting line K1 in the vicinity of the second side edge 15 (second side edge) of the glass plates 11a, 11b.

After the cutting processing of the vicinities of the second side edges (second side edges) of the glass plates 11a, 11b is completed by the cutting cutter wheel 67 of the cutting device 55 and the cutting cutter wheel 67 is positioned at the fourth corner part 18d of the glass plates 11a, 11b, the cutting processing table 54 moves in the width direction from the side of the other side edge 48b of the cutting processing area 20 toward the side of the one side edge 48a, and the cutting cutter wheel 67 performs the cutting process of the vicinities of the front end edges 16 (front end edges) of the glass plates 11a, 11b with the movement of the cutting processing table 54 in the width direction (cutting processing means (cutting processing step)).

The control unit of the fourth servomotor 61 drives the fourth servomotor 61 during the cutting to move the cutting processing table 54 in the width direction in the cutting processing area 20, and the control unit of the first servomotor 34 drives the first servomotor 34 during the cutting to reciprocate the cutting device 55 in the front-rear direction in the cutting processing area 20. The cutting cutter wheel 67 of the cutting device 55 moves from the fourth corner part 18d of each of the glass plates 11a, 11b toward the first corner part 18a while forming the outline cutting line K1 in the vicinity of the front end edge 16 (front end edge) of each of the glass plates 11a, 11b. When the cutting processing of the vicinities (front end edges) of the front end edges 16 of the glass plates 11a, 11b is completed by the cutting cutter wheel 67 of the cutting device 55, the cutting device 55 moves outward in the width direction (cutting start position) of the first corner parts 18a (front end edges 16) of the glass plates 11a, 11b and stands by.

In the cutting processing area 20, for example, the outermost edge (in the illustrated glass plate 11a, the first side edge 14) (positioning first reference L1 (virtual positioning first reference line)) located on the outermost side in the width direction of the first side edge 14 extending in the front-back direction on one side in the width direction of the large-sized (large-area) glass plate a having a large area of the upper surface 12 and the lower surface 13 to be processed first by the first positioning means (first positioning step) is positioned (matched) at the outermost edge (in the illustrated glass plate 11b, the first side edge 14) located on the outermost side in the width direction of the first side edge 14 extending in the front-back direction on one side in the width direction of the small-sized (small-area) glass plate 11b having a small area of the upper surface 12 and the lower surface 13 to be processed later, and the glass plates 11a, 11b having different sizes in which the areas of the upper surface 12 and the lower surface 13 are different from each other are positioned, a position of the center O1 (the center line L2 extending in the width direction by dividing the dimension of the glass plate 11a in the front-rear direction by 2) in the front-rear direction of a first side edge 14 extending in the front-rear direction on one side in the width direction of the large-sized glass plate 11a processed first by the second positioning means (second positioning step) (positioning second reference L2 (virtual positioning second reference line)), the center O1 in the front-back direction of the first side edge 14 extending in the front-back direction on one side in the width direction of the small-size glass plate 11b to be processed later (center line L2 extending in the width direction by dividing the dimension in the front-back direction of the glass plate 11b by 2) is positioned (matched), and after the glass plates 11a, 11b having different areas of the upper surface 12 and the lower surface are positioned, when cutting is performed on the glass plates 11b having different areas to be processed later, the movement distance of the cutting device 55 (the movement distance in the width direction of the cutting processing table 54) until reaching the side edge 14 of the large-size glass plate 11a and the movement distance of the cutting device 55 (the movement distance in the width direction of the cutting processing table 54) until reaching the side edge 14 of the small-size glass plate 11b are equal, and a movement distance of the cutting device 55 from the outermost edge (first side edge 14) of the large-sized glass plate 11a to returning outward in the width direction of the glass plate 11a is equal to a movement distance from the outermost edge (first side edge 14) of the small-sized glass plate 11b to returning outward in the width direction of the glass plate 11b. The movement distance of the cutting device 55 until reaching the outermost edge (side edge 14) of the small-size glass plate 11b is shortened, the movement distance of the cutting device 55 until returning from the outermost edge (side edge 14) of the small-size glass plate 11b to the outside in the width direction of the glass is shortened, the arrival time (non-processing time) until the cutting device 55 reaches the outermost edge (side edge 14) of the small-size glass plate 11b is shortened, and the return time until the cutting device 55 returns from the outermost edge (side edge 14) of the small-size glass plate 11b to the outside in the width direction of the glass plate 11b is shortened.

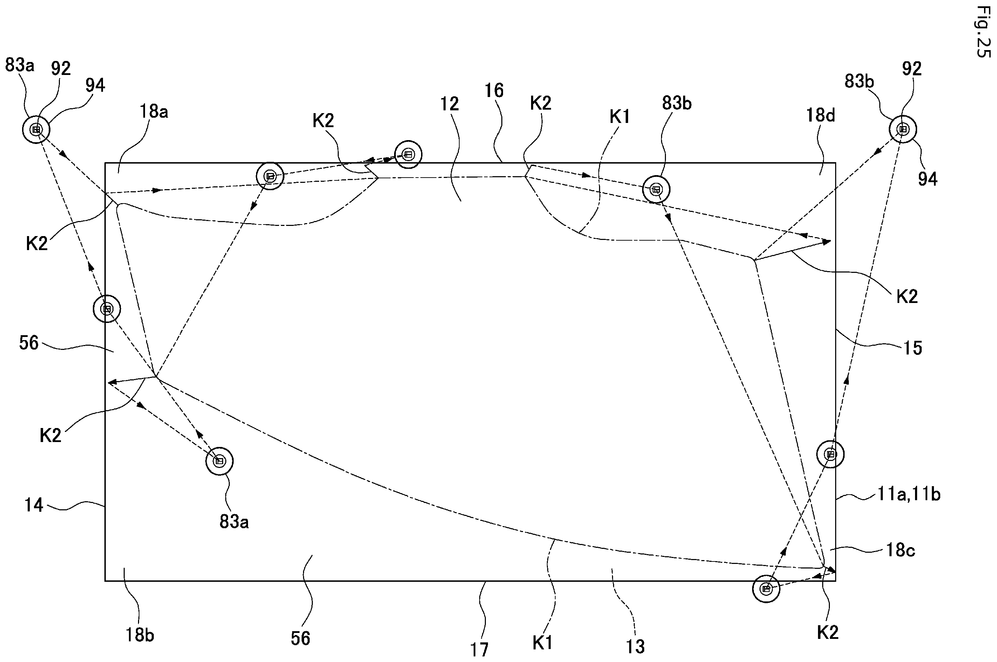

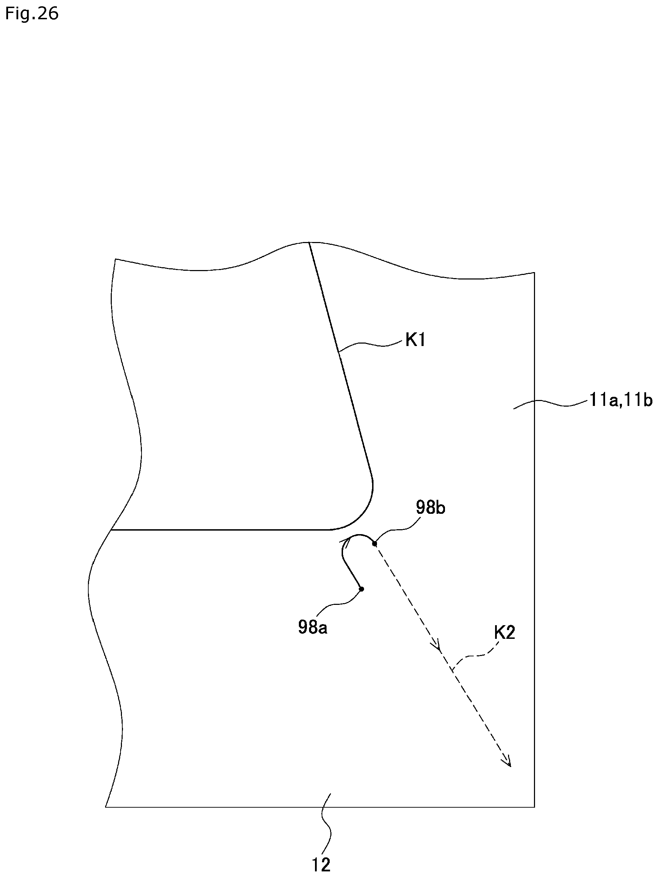

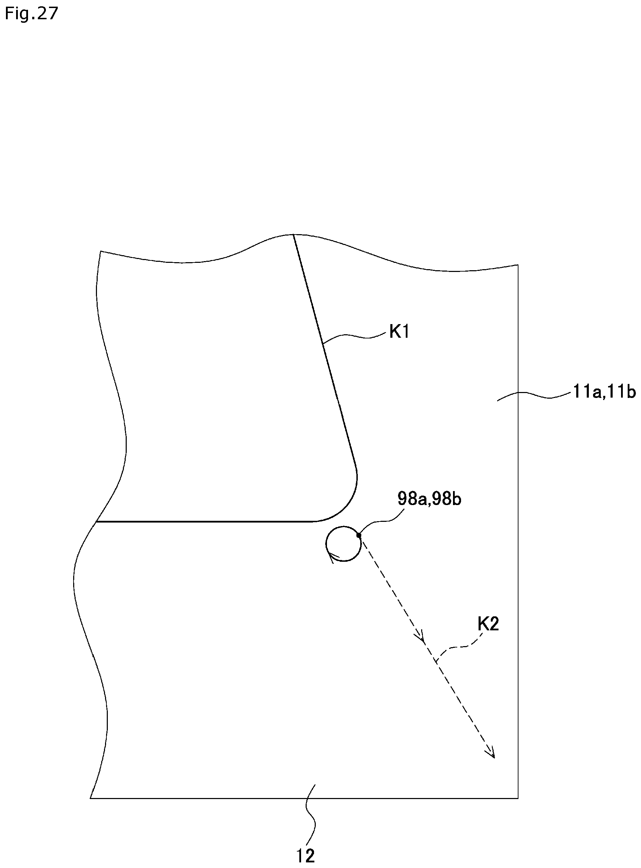

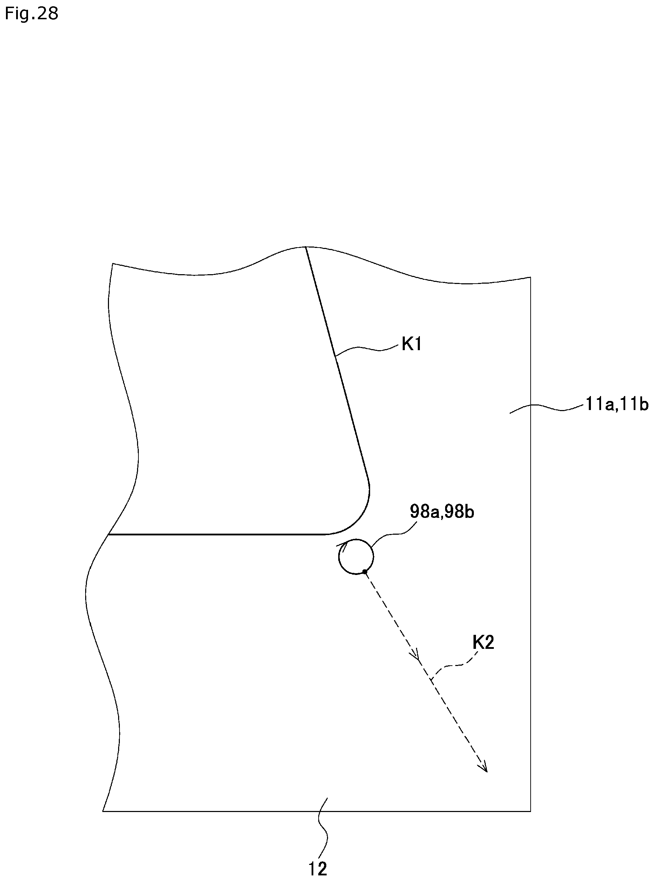

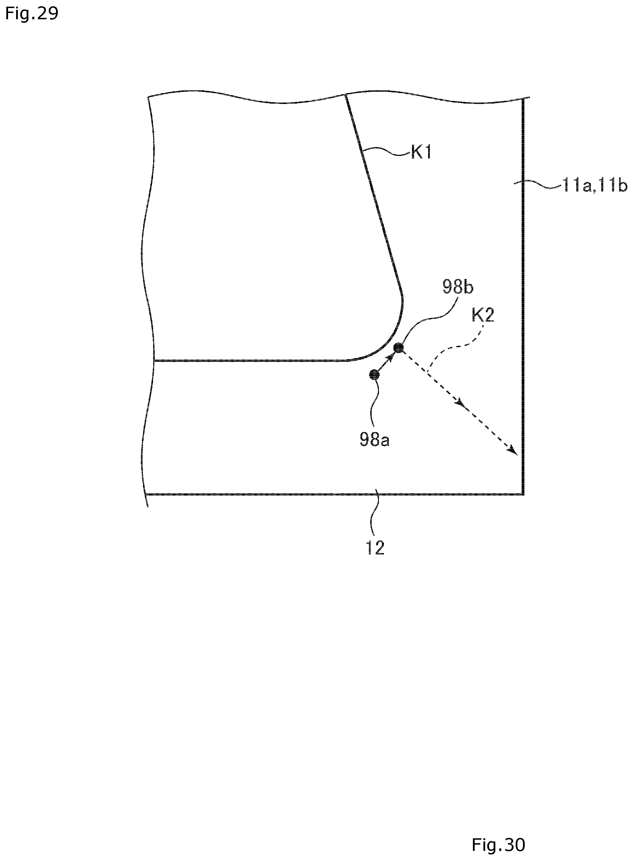

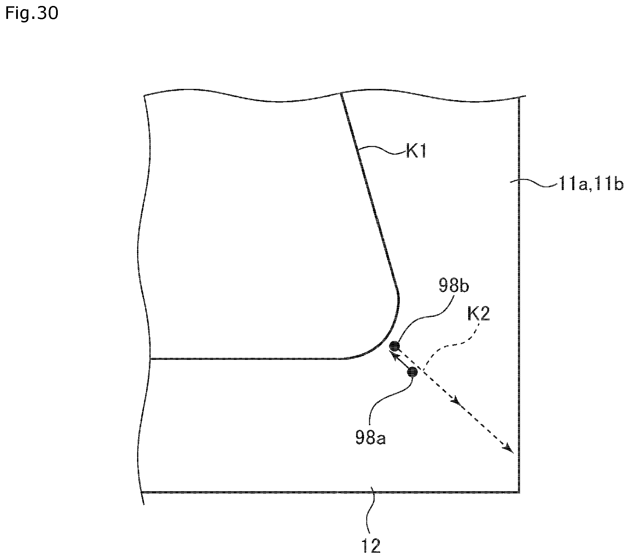

Fig. 25 is a view illustrating an example of a bend-breaking procedure in the bend-breaking process, and Fig. 26 is a view illustrating an example of changing a rolling direction of the bend-breaking cutter wheel 92. Fig. 27 is a view illustrating another example of the change in the rolling direction of the bend-breaking cutter wheel 92, and Fig. 28 is a view illustrating another example of the change in the rolling direction of the bend-breaking cutter wheel 92. Fig. 29 is a view illustrating another example of the change in the rolling direction of the bend-breaking cutter wheel, and Fig. 30 is a view illustrating another example of the change in the rolling direction of the bend-breaking cutter wheel. After the cutting processing is completed for the edge parts 56 (peripheral edge parts) of the glass plates 11a, 11b, the glass plates 11a, 11b subjected to the cutting processing are conveyed from the cutting processing area 20 to the bend-breaking processing area 21 by the glass plate second holder 40b.

After the glass plates 11a, 11b subjected to the cutting process are placed on the bend-breaking processing table 74, the controller transmits a drive signal (ON signal) to each control unit of the holder lifting mechanism 93 (first lifting mechanism), the pressing member lifting mechanism 95 (second lifting mechanism), the sixth servomotor 84 (X-axis servomotor), the seventh servomotor 86 (Y-axis servomotor), the eighth servomotor 89 (X-axis servomotor), and the ninth servomotor 90 (Y-axis servomotor) of the first bend-breaking device 75a and the second bend-breaking device 75b. The control unit of the holder lifting mechanism 93, the control unit of the pressing member lifting mechanism 95, and the control units of the sixth to ninth servomotors 84, 86, 89, 90 that have received the drive signal (ON signal) drive the holder lifting mechanism 93, the pressing member lifting mechanism 95, and the sixth to ninth servomotors 84, 86, 89, 90. A command (signal) is transmitted from the controller to the holder lifting mechanism 93, the pressing member lifting mechanism 95, and the sixth to ninth servomotors 84, 86, 89, 90 so that the first and second bend-breaking devices 75a, 75b travel (move) on the upper surfaces 12 of the glass plates 11a, 11b along a preset traveling track (bend-breaking track).

In the first bend-breaking device 75a driven by the holder lifting mechanism 93, the pressing member lifting mechanism 95, the sixth and seventh servomotors 84, 86, the first bend-breaking jig 83a (bend-breaking jig) is moved in the front-back direction and the width direction (oblique direction) by the X-axis first actuator 85a and the Y-axis first actuator 87a, and the first bend-breaking jig 83a is located at the bend-breaking start position outward in the width direction of the first corner parts 18a of the glass plates 11a, 11b. In the second bend-breaking device 75b driven by the holder lifting mechanism 93, the pressing member lifting mechanism 95, the eighth and ninth servomotors 89, 90, the second bend-breaking jig 83b (bend-breaking jig) is moved in the front-back direction and the width direction (oblique direction) by the X-axis second actuator 85b and the Y-axis second actuator 87b, and the second bend-breaking jig 83b is located at the bend-breaking start position outward in the width direction of the fourth corner part 18d of the glass plates 11a, 11b.

After the first bend-breaking jig 83a of the first bend-breaking device 75a is located at the bend-breaking start position (outward in the width direction) of the first corner part 18a of each of the glass plates 11a, 11b, the first bend-breaking jig 83a moves in the front-back direction and the width direction (oblique direction) by the X-axis first actuator 85a and the Y-axis first actuator 87a as indicated by arrows in Fig. 25, and moves to the rolling direction changing position in the vicinity (nearest) of the outline cutting line K1 among the edge parts 56 of the glass plates 11a, 11b extending outside the outline cutting line K1. After the first bend-breaking jig 83a moves to the rolling direction changing position in the vicinity of the outline cutting line K1, the holder lifting mechanism 93 (first lifting mechanism) operates to lower the bend-breaking cutter holder 91 toward the upper surfaces 12 of the edge parts 56 of the glass plates 11a, 11b (holder lowering means (holder lowering step)).

After the second bend-breaking jig 83b of the second bend-breaking device 75b is located at the bend-breaking start position (outward in the width direction) of the fourth corner part 18d of the glass plates 11a, 11b, as illustrated by arrows in Fig. 25, the second bend-breaking jig 83b moves in the front-back direction and the width direction (oblique direction) by the X-axis second actuator 85b and the Y-axis second actuator 87b, and moves to the rolling direction changing area in the vicinity (nearest) of the outline cutting line K1 among the edge parts 56 of the glass plates 11a, 11b extending outside the outline cutting line K1. After the second bend-breaking jig 83b moves to the rolling direction change area in the vicinity of the outline cutting line K1, the holder lifting mechanism 93 (first lifting mechanism) operates to lower the bend-breaking cutter holder 91 toward the upper surfaces 12 of the edge parts 56 of the glass plates 11a, 11b (holder lowering means (holder lowering step)). Note that the rolling direction change area may be not in the vicinity of the outline cutting line K1 but in the vicinity of the peripheral edges of the glass plates 11a, 11b.

When the bend-breaking cutter holder 91 descends, the bend-breaking cutter wheel 92 is exposed downward from the penetrating part 104 (through hole) formed at the center of the plate 94a and the center of the pressing rubber 94b (pressing member 94). When the bend-breaking cutter wheel 92 is exposed below the penetrating part 104, the bend-breaking cutter wheel 92 abuts on the upper surfaces 12 of the glass plates 11a, 11b in the rolling direction changing area with a predetermined pressing force. At this time, the rolling direction of the bend-breaking cutter wheel 92 is not determined, the peripheral edge 101 of the bend-breaking cutter wheel 92 is directed in one of four directions, and the rolling direction of the bend-breaking cutter wheel 92 does not coincide with the extending direction of the virtual end cut line at the edge parts 56 of the glass plates 11a, 11b.

The controller transmits a travel signal (ON signal) to the control unit of each of the sixth and seventh servomotors 84, 86 so that the bend-breaking cutter wheel 92 travels (moves) in a predetermined direction. The control units of the sixth and seventh servomotors 84, 86 that have received the travel signal (ON signal) drive the sixth and seventh servomotors 84, 86. The X-axis first actuator 85a and the Y-axis first actuator 87a are operated by driving of the sixth and seventh servomotors 84, 86, and the bend-breaking cutter wheel 92 slightly travels (moves) in a predetermined direction, so that a caster effect is exerted on the bend-breaking cutter wheel 92, the bend-breaking cutter wheel 92 rotates in the circumferential direction (the axial direction) (the clockwise direction or the counterclockwise direction) around the cutter holder center axis O2, and the rolling (moving) direction of the peripheral edge 101 of the bend-breaking cutter wheel 92 faces the traveling (moving) direction (the direction in which the virtual end cut line extends) of the first bend-breaking jig 83a (the bend-breaking cutter holder 91) (rolling direction changing means (rolling direction changing step)).

The controller transmits a travel signal to the control unit of each of the eighth and ninth servomotors 89, 90 so that the bend-breaking cutter wheel 92 travels (moves) in a predetermined direction. The control units of the eighth and ninth servomotors 89, 90 that have received the travel signal drive the eighth and ninth servomotors 89, 90. The X-axis second actuator 85b and the Y-axis second actuator 87b are operated by driving of the eighth and ninth servomotors 89, 90, and the bend-breaking cutter wheel 92 slightly travels (moves) in a predetermined direction, so that a caster effect is exerted on the bend-breaking cutter wheel 92, the bend-breaking cutter wheel 92 rotates in the circumferential direction (the axial direction) (the clockwise direction or the counterclockwise direction) around the cutter holder center axis O2, and the rolling (moving) direction of the peripheral edge 101 of the bend-breaking cutter wheel 92 faces the traveling (moving) direction (the direction in which the virtual end cut line extends) of the second bend-breaking jig 83b (the bend-breaking cutter holder 91) (rolling direction changing means (rolling direction changing step)). The travel dimension (movement dimension) of the bend-breaking cutter wheel 92 (first and second bend-breaking jigs 83a, 83b) in a predetermined direction is 0.8 mm to 8 mm, preferably 0.8 mm to 4 mm.

An example of the rolling direction changing operation (rolling direction changing step) of the bend-breaking cutter wheel 92 is, as illustrated in Fig. 26, when the first bend-breaking jig 83a (bend-breaking jig) and the second bend-breaking jig 83b (bend-breaking jig) travel (move) in a circular shape (semicircular shape) from the rolling direction change start point 98a toward the rolling direction change end point 98b on the side of the virtual end cut line (traveling dimension: 0.8 mm to 8 mm, preferably 0.8 mm to 4 mm), the peripheral edge 101 of the bend-breaking cutter wheel 92 turns by 180° to draw a circular trajectory (semicircular trajectory), and the peripheral edge 101 of the cutter wheel 92 is located at the end point of the virtual end cut line (rolling direction change end point 98b), the rolling (moving) direction of the peripheral edge 101 of the bend-breaking cutter wheel 92 is directed to the traveling (moving) direction of the first and second bend-breaking jigs 83a, 83b (direction in which the virtual end cut line extends).

Another example of the rolling direction changing operation (rolling direction changing step) of the bend-breaking cutter wheel 92 is, as illustrated in Figs. 27 and 28, when the first bend-breaking jig 83a (bend-breaking jig) and the second bend-breaking jig 83b (bend-breaking jig) travel (move) in a circular shape (perfect circular shape) from the start point of the virtual end cut line (rolling direction changing start point 98a) toward the end point of the virtual end cut line (rolling direction changing end point 98b) (traveling dimension: 0.8 mm to 8 mm, preferably 0.8 mm to 4 mm), the peripheral edge 101 of the bend-breaking cutter wheel 92 turns by 360° to draw a circular trajectory (perfect circle), and the peripheral edge 101 of the cutter wheel 92 is positioned at the end point of the virtual end cut line (rolling direction changing end point 98b), the rolling (moving) direction of the peripheral edge 101 of the bend-breaking cutter wheel 92 is directed to the traveling (moving) direction of the first and second bend-breaking jigs 83a, 83b (direction in which the virtual end cut line extends). In Fig. 27, the start points (rolling direction change start point 98a and rolling direction change end point 98b) of the virtual end cut line are located at the contact points of the circular trajectory (perfect circle) defined by the first bend-breaking jig 83a and the second bend-breaking jig 83b, and the end cut line K2 extends in the tangential direction of the circular trajectory (perfect circle). In Fig. 28, the start points (the rolling direction change start point 98a and the rolling direction change end point 98b) of the virtual end cut line are located on the circular trajectory (perfect circle) defined by the first bend-breaking jig 83a and the second bend-breaking jig 83b, and the end cut line K2 extends in the radial direction of the circular trajectory (perfect circle).

Another example of the rolling direction changing operation (rolling direction changing step) of the bend-breaking cutter wheel 92 is, as illustrated in Fig. 29, such that at the rolling direction changing position of the edge parts 56 of the glass plates 11a, 11b, the angle formed by the extending direction of the end cut line K2 at the edge parts 56 of the glass plates 11a, 11b and the traveling direction of the first bend-breaking jig 83a (bend-breaking jig) and the second bend-breaking jig 83b (bend-breaking jig) toward the start point of the end cut line K2 (the end point of the virtual end cut line (rolling direction change end point 98b)) becomes 90° (or 90° or less), at the rolling direction change position, the first bend-breaking jig 83a (bend-breaking jig) and the second bend-breaking jig 83b (bend-breaking jig) are caused to slightly travel (traveling dimension: 0.8 mm to 8 mm, preferably 0.8 mm to 4 mm) in a straight line (straight track) from the rolling direction change start point 98a (start point of the virtual end cut line) toward the start point of the end cut line K2 (end point of the virtual end cut line (rolling direction change end point 98b)), the rolling direction of the bend-breaking cutter wheel 92 is changed to the direction in which the virtual end cut line extends, and then at the start point of the end cut line (end point of the virtual end cut line (rolling direction change end point 98b)), the traveling directions of the first bend-breaking jig 83a (bend-breaking jig) and the second bend-breaking jig 83b (bend-breaking jig) are changed to the direction in which the end cut line K2 extends at an angle of 90° (or 90° or less), the first bend-breaking jig 83a (bend-breaking jig) and the second bend-breaking jig 83b (bend-breaking jig) are caused to travel in the direction in which the end cut line K2 extends.

In Fig. 29, the case where the angle formed by the extending direction of the end cut line K2 at the edge parts 56 of the glass plates 11a, 11b and the traveling direction of the first bend-breaking jig 83a (bend-breaking jig) and the second bend-breaking jig 83b (bend-breaking jig) toward the start point of the end cut line K2 (the end point of the virtual end cut line (rolling direction change end point 98b)) is 90° has been described. However, the angle formed by the extending direction of the end cut line K2 and the traveling direction of the first bend-breaking jig 83a (bend-breaking jig) and the second bend-breaking jig 83b (bend-breaking jig) may be 90° or less, such as 45°, 30°, and 15°.

Another example of the rolling direction changing operation (rolling direction changing step) of the bend-breaking cutter wheel 92 includes, as illustrated in Fig. 30, at the rolling direction changing position of the edge parts 56 of the glass plates 11a, 11b, making the first bend-breaking jig 83a (bend-breaking jig) and the second bend-breaking jig 83b (bend-breaking jig) travel (traveling dimension: 0.8 mm to 8 mm, preferably 0.8 mm to 4 mm) slightly in a straight line shape (straight track) from the rolling direction change start point 98a (start point of virtual end cut line) toward the start point of the end cut line (end point of virtual end cut line (rolling direction change end point 98b)) along the end cut line K2 of the edge parts 56 of the glass plates 11a, 11b, or, after the first bend-breaking jig 83a (bend-breaking jig) and the second bend-breaking jig 83b (bend-breaking jig) are caused to slightly travel (traveling dimension: 0.8 mm to 8 mm, preferably 0.8 mm to 4 mm) from the rolling direction change start point 98a (starting point of the virtual end cut line) toward the starting point of the end cut line (ending point of the virtual end cut line (rolling direction change end point 98b)), and the rolling direction of the bend-breaking cutter wheel 92 is changed to the direction in which the virtual end cut line extends, the first bend-breaking jig 83a (bend-breaking jig) and the second bend-breaking jig 83b (bend-breaking jig) are reversed (360° U-turn) at the start point of the end cut line (the end point of the virtual end cut line (the rolling direction change end point 98b)), the traveling directions of the first bend-breaking jig 83a (bend-breaking jig) and the second bend-breaking jig 83b (bend-breaking jig) are changed to the direction in which the end cut line K2 extends, and the first bend-breaking jig 83a (bend-breaking jig) and the second bend-breaking jig 83b (bend-breaking jig) are made to travel in the direction in which the end cut line K2 extends.

In the glass plate processing system 10 (bend-breaking processing method), the first and second bend-breaking jigs 83a, 83b are caused to slightly travel (traveling dimension: 0.8 mm to 8 mm, preferably 0.8 mm to 4 mm) in a predetermined direction on the upper surfaces 12 of the glass plates 11a, 11b in parallel to the upper surfaces 12 of the edge parts 56 of the glass plates 11a, 11b in the rolling direction change area (delineate a circular trajectory or extend linearly (linear trajectory)), so that the bend-breaking cutter wheel 92 exerts a caster effect, the rolling (moving) direction of the peripheral edge 101 of the bend-breaking cutter wheel 92 is changed to the traveling (moving) direction of the first bend-breaking jig 83a (bend-breaking cutter holder 91) (the direction in which the virtual end cut line extends), and the rolling (moving) direction of the peripheral edge 101 of the bend-breaking cutter wheel 92 is changed to the traveling (moving) direction of the second bend-breaking jig 83b (bend-breaking cutter holder 91) (the direction in which the virtual end cut line extends).

After the rolling direction of the peripheral edge 101 of the bend-breaking cutter wheel 92 is changed to the traveling direction of the first and second bend-breaking jigs 83a, 83b (the direction in which the virtual end cut lines extend) by the rolling direction changing means (rolling direction changing step) (after the rolling direction of the bend-breaking cutter wheel 92 becomes the same as the traveling direction of the first and second bend-breaking jigs 83a, 83b), the first bend-breaking jig 83a travels linearly from the vicinity of the outline cutting lines K1 of the glass plates 11a, 11b toward the edges of the glass plates 11a, 11b, and the bend-breaking cutter wheel 92 forms a first (first) end cut line K2 (scribe) in a predetermined area of the edge parts 56 of the glass plates 11a, 11b along the traveling direction of the first bend-breaking jig 83a (end cut line forming means (end cut line forming step)). Moreover, the second bend-breaking jig 83b travels linearly from the vicinity of the outline cutting lines K1 of the glass plates 11a, 11b toward the edges of the glass plates 11a, 11b, and the bend-breaking cutter wheel 92 forms first (first time) end cut lines K2 (scribe) in predetermined areas of the edge parts 56 of the glass plates 11a, 11b along the traveling direction of the second bend-breaking jig 83b (end cut line forming means (end cut line forming step)). The first bend-breaking jig 83a and the second bend-breaking jig 83b travel at the same speed. In the end-cut line forming means (end-cut line forming step), the first and second bend-breaking jigs 83a, 83b may travel linearly from the edges of the glass plates 11a, 11b toward the vicinity of the outline cutting line K1 of the glass plates 11a, 11b, and the bend-breaking cutter wheel 92 may form the end-cut line K2 (scribe) on the edge parts 56 of the glass plates 11a, 11b.

After the first end-cut line K2 is formed at the edge parts 56 of the glass plates 11a, 11b, the holder lifting mechanism 93 (first lifting mechanism) operates to lift the bend-breaking cutter holder 91 from the edge parts 56 of the glass plates 11a, 11b (holder lifting means (holder lifting step)). After the bend-breaking cutter holder 91 is lifted by the holder lifting means (holder lifting step), the first and second bend-breaking jigs 83a, 83b are moved to the end cut line forming area of the edge part 56 of the next glass plate 11a or 11b by the operation of the X-axis first and second actuators 85a, 85b and the Y-axis first and second actuators 87a, 87b (jig moving means (jig moving step)).

After the first and second bend-breaking jigs 83a, 83b are moved to the next end cut line forming area by the jig moving means (jig moving step), the holder lifting mechanism 93 (first lifting mechanism) is operated to lower the bend-breaking cutter holder 91 toward the upper surfaces 12 of the edge parts 56 of the glass plates 11a, 11b (holder lowering means (holder lowering step)), the bend-breaking cutter wheel 92 is exposed downward from the center of the plate 94a and the penetrating part 104 (through hole) formed at the center of the pressing rubber 94b (pressing member 94), and the bend-breaking cutter wheel 92 comes into contact with the upper surfaces 12 of the glass plates 11a, 11b in the rolling direction changing area with a predetermined pressing force.

After the bend-breaking cutter holder 91 is lowered (abuts) on the upper surface 12 of the edge part 56 of the glass plate 11a, 11b in the next rolling direction change area by the holder lowering means (holder lowering step), as described above, the first and second bend-breaking jigs 83a, 83b (bend-breaking jigs) travel (move) in a circular shape to define a circular track, and a caster effect is exerted on the bend-breaking cutter wheel 92, so that the rolling (moving) direction of the peripheral edge 101 of the bend-breaking cutter wheel 92 is directed (rolling direction changing means (rolling direction changing step) in the traveling (moving) direction (direction in which the virtual end cut line extends) of the first and second bend-breaking jigs 83a, 83b (bend-breaking cutter holder 91), the rolling (moving) direction of the peripheral edge 101 of the bend-breaking cutter wheel 92 is changed to the traveling direction (direction in which the virtual end cut line extends) of the first and second bend-breaking jigs 83a, 83b (bend-breaking cutter holder 91).

After the rolling direction of the peripheral edge 101 of the bend-breaking cutter wheel 92 is changed to the traveling direction of the first and second bend-breaking jigs 83a, 83b (the direction in which the virtual end cut lines extend) (After the rolling direction of the bend-breaking cutter wheel 92 becomes the same as the traveling direction of the first and second bend-breaking jigs 83a, 83b), the first and second bend-breaking jigs 83a, 83b linearly travel from the vicinity of the outline cutting lines K1 of the glass plates 11a, 11b toward the edges of the glass plates 11a, 11b, and the bend-breaking cutter wheel 92 forms a second (next) end cut line K2 in an end cut line forming area (predetermined area) of the edge parts 56 of the glass plates 11a, 11b along the traveling direction of the first and second bend-breaking jigs 83a, 83b (end cut line forming means (end cut line forming step)).

After the first (first time) and second (next time) end cut lines K2 are formed, the plate 94a and the pressing rubber 94b (pressing member 94) are lowered toward the upper surfaces 12 of the edge parts 56 of the glass plates 11a, 11b (the edge parts 56 while the first and second end cut lines K2 are formed) by the pressing member lifting mechanism 95 (second lifting mechanism), and the pressing rubber 94b (pressing member 94) presses the edge parts 56 of the glass plates 11a, 11b downward. When the pressing rubber 94b presses the edge part 56, the edge parts 56 of the glass plates 11a, 11b extending between the first and second end cut lines K2 from the main bodies (glass plates 11a, 11b extending inside the outline cutting line K1) of the glass plates 11a, 11b are bend-broken (cut) (bend-breaking processing means (bend-breaking processing step)).

When the edge part 56 is pressed by the pressing rubber 94b, although not illustrated, the support base abuts on the lower surface 13 of the glass plates 11a, 11b and on the outline cutting line K1, the edge parts 56 of the glass plates 11a, 11b are positioned radially outward of the support base, and a part of the support base descends to form a step between the support base and the edge part 56. Edge parts (peripheral edge parts) of the broken (separated) glass plates 11a, 11b remain on the belt conveyor 76.

By repeating the above-described procedure, all the edge parts 56 of the glass plates 11a, 11b on which the end cut lines K2 are formed are bend-broken. In the glass plates 11a, 11b illustrated in Fig. 25, the first to third end cut lines K2 are formed by the first bend-breaking jig 83a, and the first to third end cut lines K2 are formed by the second bend-breaking jig 83b. However, the number of end cut lines K2 is not particularly limited, and the number of end cut lines K2 is determined depending on the sizes (areas) and thickness dimensions of the glass plates 11a, 11b, and the shapes of the main bodies of the glass plates 11a, 11b formed by the outline cutting lines K1.

After the bend-breaking is completed and the glass plates 11a, 11b subjected to the bend-breaking are lifted upward by the glass plate third holder 40c, the controller transmits a drive signal (ON signal) to the control unit of the conveyor drive motor 77. The control unit of the conveyor drive motor 77 that has received the drive signal (ON signal) drives the belt conveyor 76. The belt conveyor 76 moves from one side to the other side in the width direction. By the movement of the belt conveyor 76 in the width direction, the bend-broken edge parts 56 (peripheral edge parts) of the glass plates 11a, 11b remaining on the belt conveyor 76 gradually move from one side to the other side in the width direction, and the edge parts 56 fall from the belt conveyor 76 and are stored (discarded) in a dust box (not illustrated).

After the bend-breaking processing of the glass plates 11a, 11b is completed, the bodies of the glass plates 11a, 11b after the bend-breaking processing are conveyed from the bend-breaking processing area 21 to the grinding processing area 22 by the glass plate third holder 40c, and the bodies of the glass plates 11a, 11b are placed on the grinding processing table 106. After the main bodies of the glass plates 11a, 11b are placed on the grinding processing table 106, the controller transmits a drive signal to the control unit of the vacuum mechanism of the grinding processing table 106 and transmits a retreat signal (ON signal) to the control unit of the first servomotor 34. The control unit of the vacuum mechanism that has received the drive signal drives the vacuum mechanism. The main bodies of the glass plates 11a, 11b are sucked and held by the suction pad 108 (grinding processing table 106) by driving of the vacuum mechanism.

The control unit of the first servomotor 34 that has received the retreat signal (ON signal) drives the first servomotor 34. The rotation of the shaft of the first servomotor 34 causes the first slide block to move in the front-rear direction from the front toward the rear of the first guide frame 30, thereby causing the grinding device 107 to move together with the first traveling frame 32 to the rear in the front-rear direction in the grinding processing area 22, and the grinding device 107 is located outward in the width direction (grinding processing start position) of the first corner part 18a (front side edge) of the main body of the glass plates 11a, 11b. The grinding device 107 moves the peripheral edge parts (side edge, front and rear end edge) of the main bodies of the glass plates 11a, 11b in synchronization with the cutting device 55.

After the grinding device 107 is positioned outward in the width direction (grinding processing start position) of the first corner part 18a of the main bodies of the glass plates 11a, 11b, the controller transmits a stop signal (OFF signal) to the control unit of the first servomotor 34 and transmits a drive signal (ON signal) to the control unit of the tenth servomotor 109. The control unit of the first servomotor 34 that has received the stop signal (OFF signal) stops the first servomotor 34, and the control unit of the tenth servomotor 109 that has received the drive signal (ON signal) drives the tenth servomotor 109. The rotation of the axis of the tenth servomotor 109 causes the slide block 63b to move the feed screw 60b in the width direction from the other side edge 48b of the grinding processing area 22 toward the one side edge 48a, so that the grinding processing table 106 moves in the width direction from the side of the other side edge 48b of the grinding processing area 22 toward the one side edge 48a, and the grinding wheel 116 of the grinding device 107 is located at the first corner part 18a of the main body of the glass plates 11a, 11b. The first corner parts 18a of the main bodies of the glass plates 11a, 11b enter the slits 120 of the cover 118 of the grinding jig 110.

After the grinding wheel 116 of the grinding device 107 is positioned at the first corner part 18a of the glass plates 11a, 11b, the controller transmits a drive signal (ON signal) and an NC control signal to the control units of the eleventh to thirteenth servomotors 111 to 113 and the control unit of the spindle motor 119 of the grinding device 107, transmits a retreat signal (ON signal) and an NC control signal to the control unit of the first servomotor 34, and transmits an NC control signal to the control unit of the tenth servomotor 109. The control units of the eleventh to thirteenth servomotors 111 to 113, the control unit of the spindle motor 119, the control unit of the first servomotor 34, and the control unit of the tenth servomotor 109 that have received the drive signal (ON signal) and the NC control signal drive the eleventh to thirteenth servomotors 111 to 113, the spindle motor 119, the first servomotor 34, and the tenth servomotor 109, respectively, perform contour control motion by NC control in the vicinity of one side edge (one side edge part) of the main bodies of the glass plates 11a, 11b, and the grinding wheel 116 performs grinding processing on the vicinity of one side edge (one side edge part) of the main bodies of the glass plates 11a, 11b (grinding processing means (grinding processing step)).

The control unit of the first servomotor 34 that has received the backward movement signal (ON signal) drives the first servomotor 34 during the grinding processing (during the cutting processing) to move the grinding device 107 backward in the front-rear direction in the grinding processing area 22, and the control unit of the tenth servomotor 109 drives the tenth servomotor 109 during the grinding processing (during the cutting processing) to reciprocate the grinding device 107 in the width direction in the grinding processing area 22. The grinding wheel 116 of the grinding device 107 moves from the first corner part 18a of the glass plate 11a, 11b toward the second corner part 18b while grinding the vicinity of one side edge (one side edge part) of the main body of the glass plate 11a, 11b along the edge part (outline cutting line K1) of the main body of the glass plate 11a, 11b.

After the grinding process of the vicinity of one side edge (one side edge part) of the main bodies of the glass plates 11a, 11b is completed by the grinding wheel 116 of the grinding device 107 and the grinding wheel 116 is positioned at the second corner part 18b of the main bodies of the glass plates 11a, 11b, the grinding processing table 106 moves in the width direction from the side of one side edge part 48a of the grinding processing area 22 toward the side of the other side edge part 48b, and the grinding wheel 116 performs the grinding process of the vicinity of the rear end edge (rear end edge part) of the main bodies of the glass plates 11a, 11b with the movement of the grinding processing table 106 in the width direction (grinding processing means (grinding processing step)).

The control unit of the tenth servomotor 109 drives the tenth servomotor 109 during the grinding processing (during the cutting processing) to move the grinding processing table 106 in the width direction in the grinding processing area 22, and the control unit of the first servomotor 34 drives the first servomotor 34 during the grinding processing (during the cutting processing) to reciprocate the grinding device 107 in the front-rear direction in the grinding processing area 22. The grinding wheel 116 of the grinding device 107 grinds the vicinities (rear end edges) of the rear end edges of the main bodies of the glass plates 11a, 11b along the edge parts (outline cutting lines K1) of the main bodies of the glass plates 11a, 11b, and moves from the second corner parts 18b of the main bodies of the glass plates 11a, 11b toward the third corner parts 18c.

After the grinding process of the vicinities (rear end edges) of the rear end edges of the main bodies of the glass plates 11a, 11b is completed by the grinding wheel 116 of the grinding device 107 and the grinding wheel 116 is positioned at the third corner part 18c of the main bodies of the glass plates 11a, 11b, the grinding device 107 moves forward in the front-rear direction, and the grinding wheel 116 performs the grinding process of the vicinities (second side edges) of the second side edges of the main bodies of the glass plates 11a, 11b with the movement of the grinding device 107 forward in the front-rear direction (grinding processing means (grinding processing step)).

The control unit of the first servomotor 34 drives the first servomotor 34 during the grinding processing (during the cutting processing) to move the grinding device 107 forward in the front-rear direction in the grinding processing area 22, and the control unit of the tenth servomotor 109 drives the tenth servomotor 109 during the grinding processing (during the cutting processing) to reciprocate the grinding processing table 106 in the width direction in the grinding processing area 22. The grinding wheel 116 of the grinding device 107 moves from the third corner part 18c toward the fourth corner part 18d of the main bodies of the glass plates 11a, 11b while grinding the vicinities (second side edges) of the second side edges of the main bodies of the glass plates 11a, 11b along the edge parts (outline cutting lines K1) of the main bodies of the glass plates 11a, 11b.

After the grinding process of the vicinities of the second side edges (second side edges) of the main bodies of the glass plates 11a, 11b is completed by the grinding wheel 116 of the grinding device 107 and the grinding wheel 116 is positioned at the fourth corner part 18d of the main bodies of the glass plates 11a, 11b, the grinding processing table 106 moves in the width direction from the side of the other side edge 48b of the grinding processing area 22 toward the side of the one side edge 48a, and the grinding wheel 116 performs the grinding process of the vicinities of the front end edges (front end edges) of the main bodies of the glass plates 11a, 11b with the movement of the grinding processing table 106 in the width direction (grinding processing means (grinding processing step)).

The control unit of the tenth servomotor 109 drives the tenth servomotor 109 during the grinding processing (during the cutting processing) to move the grinding processing table 106 in the width direction in the grinding processing area 22, and the control unit of the first servomotor 34 drives the first servomotor 34 during the grinding processing (during the cutting processing) to reciprocate the grinding device 107 in the front-rear direction in the grinding processing area 22. The grinding wheel 116 of the grinding device 107 grinds the vicinities (front end edge parts) of the front end edges of the main bodies of the glass plates 11a, 11b along the edge parts (outline cutting lines K1) of the main bodies of the glass plates 11a, 11b, and moves from the fourth corner parts 18d of the main bodies of the glass plates 11a, 11b toward the first corner parts 18a. When the grinding processing in the vicinity of the front end edge (front end edge part) of the main bodies of the glass plates 11a, 11b is completed by the grinding wheel 116 of the grinding device 107, the grinding device 107 moves outward in the width direction (grinding process start position) of the first corner part 18a (front end edge) of the main bodies of the glass plates 11a, 11b and stands by.

In the grinding processing area 22, for example, the outermost edge (in the illustrated glass plate 11a, one side edge 14) (positioning first reference L1 (virtual positioning first reference line)) located on the outermost side in the width direction of one side edge 14 extending in the front-back direction on one side in the width direction of the large-sized (large-area) glass plate 11a having a large area of the upper surface 12 and the lower surface 13 to be processed first by the first positioning unit (first positioning step) is positioned (matched) with the outermost edge (in the illustrated glass plate 11b, one side edge 14) located on the outermost side in the width direction of one side edge 14 extending in the front-back direction on one side in the width direction of the small-sized (small-area) glass plate 11b having a small area of the upper surface 12 and the lower surface 13 to be processed later, and the glass plates 11a, 11b having different areas of the upper surface 12 and the lower surface 13 are positioned, In a case where the front-rear direction center 01 (center line L2 extending in the width direction by dividing the dimension of the glass plate 11a in the front-back direction by 2) of the side edge 14 extending in the front-back direction on one side in the width direction of the large-size glass plate 11a to be processed first by the second positioning means (second positioning step) is positioned (matched) at a position (positioning second reference L2 (virtual positioning second reference line)) of the front-rear direction center 01 (center line L2 extending in the width direction by dividing the dimension of the glass plate 11a in the front-back direction by 2) of the side edge 14 extending in the front-back direction on one side in the width direction of the small-size glass plate 11b to be processed later, and the glass plates 11a, 11b having different areas of the upper surface 12 and the lower surface 13 are positioned, and then grinding processing of the glass plate 11b having different areas to be processed later is performed, a movement distance of the grinding device 107 until reaching the side edge 14 of the large-sized glass plate 11a (movement distance in the width direction of the grinding processing table 106) and a movement distance of the grinding device 107 until reaching the side edge 14 of the small-sized glass plate 11b (movement distance in the width direction of the grinding processing table 106) become equal, and a movement distance until the grinding device 107 returns from the outermost edge (side edge 14) of the large-sized glass plate 11a to the outside in the width direction of the glass plate 11a and a movement distance until the grinding device 107 returns from the outermost edge (side edge 14) of the small-sized glass plate 11b to the outside in the width direction of the glass plate 11b become equal. The movement distance of the grinding device 107 until reaching the outermost edge (side edge 14) of the small-size glass plate 11b is shortened, the movement distance of the grinding device 107 until returning from the outermost edge (side edge 14) of the small-size glass plate 11b to the outside in the width direction of the glass is shortened, the arrival time (non-processing time) until the grinding device 107 reaches the outermost edge (side edge 14) of the small-size glass plate 11b is shortened, and the return time until the grinding device 107 returns from the outermost edge (side edge 14) of the small-size glass plate 11b to the outside in the width direction of the glass plate.

After the grinding process of the main bodies of the glass plates 11a, 11b is completed, the main bodies of the glass plates 11a, 11b after the grinding process are conveyed from the grinding processing area 22 to the unloading area 23 by the glass plate fourth holder 40d. In the unloading area 23, the main bodies of the glass plates 11a, 11b subjected to the cutting processing, the bend-breaking processing, and the grinding processing are moved forward from the rear end part toward the front end part of the unloading area 23 by the unloading conveyor 123, and the main bodies of the glass plates 11a, 11b subjected to the processing are unloaded from the unloading area 23.

When the main bodies of the glass plates 11a, 11b subjected to the respective processing are located on the unloading conveyor 123 in the unloading area 23, the main bodies of the glass plates 11a, 11b subjected to the grinding processing are located on the grinding processing table 106 in the grinding processing area 22, the main bodies of the glass plates 11a, 11b subjected to the bend-breaking processing are located on the bend-breaking processing table 74 in the bend-breaking processing area 21, the glass plates 11a, 11b subjected to the cutting processing are located on the cutting processing table 54 in the cutting processing area 20, and the glass plates 11a, 11b before the processing positioned by the first positioning means (first positioning step) and the second positioning means (second positioning step) are located on the loading conveyor 43 in the loading area 19. As described above, in the glass plate processing system 10, the plurality of glass plates are sequentially conveyed from the loading area 19 toward the unloading area 23, and the processing of the plurality of glass plates 11a, 11b is continuously performed.

In the first and second bend-breaking jigs 83a, 83b (bend-breaking jigs), the cutter wheel axis O3 of the bend-breaking cutter wheel 92 is eccentric outward in the radial direction with respect to the cutter holder center axis O2 of the bend-breaking cutter holder 91 (holder main body 96), and the bend-breaking cutter wheel 92 has a caster effect. Therefore, when the first and second bend-breaking jigs 83a, 83b (bend-breaking jigs) only travel (move) in a circular shape from the vicinity of the start point of the end cut line K2 to draw a circular trajectory (when the bend-breaking jigs only slightly travel (move) in a predetermined direction from the vicinity of the start point of the end cut line K2), the bend-breaking cutter wheel 92 rotates in the circumferential direction (around the axis) of the cutter holder center axis O2, The rolling (rotating) direction of the peripheral edge 101 of the bend-breaking cutter wheel 92 is directed to the traveling (moving) direction (direction in which the virtual end cut line extends) of the first and second bend-breaking jigs 83a, 83b (bend-breaking cutter holder 91), and the rolling direction of the peripheral edge 101 of the bend-breaking cutter wheel 92 can be quickly and easily changed.

In the first and second bend-breaking jigs 83a, 83b (bend-breaking jigs), when the first and second bend-breaking jigs are parallel to the upper surfaces 12 of the edge parts 56 of the glass plates 11a, 11b and form a circular trajectory from the vicinity of the start point of the end cut line K2 (by slightly traveling in a predetermined direction from the vicinity of the start point of the end cut line K2 on the upper surface 12), the bend-breaking cutter wheel 92 abutting on the upper surfaces 12 of the edge parts 56 of the glass plates 11a, 11b rotates in the circumferential direction (around the axis) of the cutter holder center axis O2, and the rolling direction of the peripheral edge 101 of the bend-breaking cutter wheel 92 is the same as the traveling (moving) direction of the first and second bend-breaking jigs 83a, 83b (bend-breaking cutter holder 91), the rolling direction of the peripheral edge 101 of the bend-breaking cutter wheel 92 can be made to coincide with the traveling direction (direction in which virtual end cut line extends at edge parts 56 of glass plates 11a, 11b) of the first and second bend-breaking jigs 83a and 83b (bend-breaking jigs), and the rolling (rotating) direction of the peripheral edge 101 of the bend-breaking cutter wheel 92 and the traveling direction of the first and second bend-breaking jigs 83a, 83b (bend-breaking jigs) can be made the same in an initial action in a series of movements of forming the end cut line K2 at the edge parts 56 of the glass plates 11a, 11b.

In the first and second bend-breaking jigs 83a, 83b (bend-breaking jigs), in the end cut line forming areas of the edge parts 56 of the glass plates 11a, 11b to be processed, while the rolling direction of the peripheral edge 101 of the bend-breaking cutter wheel 92 is caused to coincide with the traveling direction (Direction in which virtual end cut line of edge parts 56 of glass plates 11a, 11b extends) of the first and second bend-breaking jigs 83a, 83b, the end cut lines K2 can be put in the end cut line forming areas, and the plurality of end cut lines K2 can be efficiently formed in the end cut line forming areas of the edge parts 56 of the glass plates 11a, 11b in a short time. In the first and second bend-breaking jigs 83a, 83b (bend-breaking jigs), the bend-breaking cutter wheel 92 itself is rotated in the direction (around the axis) around the cutter holder center axis O2 of the bend-breaking cutter holder 91 (around the rotation center), the rotation control axis for rotating the bend-breaking cutter wheel 92 itself is set as the cutter holder center axis O2 of the bend-breaking cutter holder 91, and the angle of the rotation control axis is adjusted to the rolling direction of the bend-breaking cutter wheel 92 (Moving direction of bend-breaking jigs 83a, 83b), whereby an error due to eccentricity can be minimized.

In the first and second bend-breaking jigs 83a, 83b (bend-breaking jigs), it is not necessary to install a θ-axis servomotor installed in the glass plate processing system disclosed in Patent Literature 1 or a transmission member (a pulley, a belt, or the like) that transmits rotational force of the θ-axis servomotor to a bend-breaking cutter holder, and it is possible to achieve downsizing, energy saving, and cost reduction of the glass plate processing system 10. Furthermore, it is not necessary to make the rolling direction of the peripheral edge 101 of the bend-breaking cutter wheel 92 the same as the extending direction of the virtual end cut line of the edge part 56 of the glass plates 11a, 11b (traveling direction of first and second bend-breaking jigs 83a, 83b (bend-breaking jigs)) by rotating the θ-axis servomotor in the bend-breaking process, and it is not necessary to change the rolling direction of the peripheral edge 101 of the bend-breaking cutter wheel 92 using the θ-axis servomotor every time the end cut line K2 is formed. Therefore, it is possible to shorten the time and improve the efficiency of the bend-breaking process in the glass plate processing system 10.

In the first and second bend-breaking jigs 83a, 83b (bend-breaking jigs), the pressing rubber 94b of the pressing member 94 is disposed in the vicinity of the circumferential direction of the bend-breaking cutter holder 91, and the pressing rubber 94b is lowered by the pressing member lifting mechanism 95 (second lifting mechanism) from the vicinity of the circumferential direction of the bend-breaking cutter holder 91 toward the upper surface 12 of the edge part 56 of the glass plate 11a, 11b, so that the edge part 56 of the glass plate 11a or 11b can be reliably pressed by the pressing rubber 94b, and the edge part 56 of the glass plate 11a, 11b on which the end cut line K2 is formed can be reliably bend-broken by the pressing rubber 94b.

In the first and second bend-breaking jigs 83a, 83b (bend-breaking jigs), after the end cut lines K2 are formed on the edge parts 56 of the glass plates 11a, 11b by the peripheral edge 101 of the bend-breaking cutter wheel 92, the pressing rubber 94b of the pressing member 94 is lowered without greatly traveling (moving) the first and second bend-breaking jigs 83a, 83b (bend-breaking jigs), so that the edge parts 56 of the glass plates 11a, 11b on which the end cut lines K2 are formed can be bend-broken, and the bend-breaking processing can be efficiently performed in a short time.

The glass plate processing system 10 (bend-breaking processing method) includes a rolling direction changer (rolling direction changing step) that draws circular trajectories of first and second bend-breaking jigs 83a, 83b (bend-breaking jigs) from the vicinity of the start point of the end cut line K2 in parallel to the upper surface 12 of the edge parts 56 of the glass plates 11a, 11b (slightly travels in a predetermined direction from the vicinity of the start point of the end cut line K2 on the upper surface 12), rotates the bend-breaking cutter wheel 92 abutting on the upper surfaces 12 of the edge parts 56 of the glass plates 11a, 11b in the circumferential direction (around the axis) of the cutter holder center axis O2, and changes the rolling (rotating) direction of the peripheral edge 101 of the bend-breaking cutter wheel 92 to the traveling (moving) direction of the first and second bend-breaking jigs 83a, 83b (bend-breaking jigs); and after the rolling direction of the peripheral edge 101 of the bend-breaking cutter wheel 92 is changed to the traveling direction of the first and second bend-breaking jigs 83a, 83b (bend-breaking jigs), the peripheral edge 101 of the bend-breaking cutter wheel 92 has an end-cut line forming means (end-cut line forming step) that forms an end-cut line K2 at the edge parts 56 of the glass plates 11a, 11b along the traveling direction of the first and second bend-breaking jigs 83a, 83b (bend-breaking jigs), and thus the bend-breaking cutter wheel 92 is caused to travel (move) in a circular shape from the vicinity of the start point of the end-cut line K2 to draw a circular trajectory (the bend-breaking jig is caused to slightly travel (move) in a predetermined direction from the vicinity of the start point of the end-cut line K2), by rotating the bend-breaking cutter wheel 92 in the direction around the cutter holder center axis O2 (around the axis), the rolling direction of the peripheral edge 101 of the bend-breaking cutter wheel 92 can be quickly and easily changed, and the rolling (rotating) direction of the peripheral edge 101 of the bend-breaking cutter wheel 92 can be directed to the travelling (moving) direction of the first and second bend-breaking jigs 83a (bend-breaking cutter holder 91) (the direction in which the virtual end cut line extends).

In the glass plate processing system 10 (bend-breaking processing method), the first and second bend-breaking jigs 83a, 83b (bend-breaking jigs) are drawn in parallel to the upper surfaces 12 of the edge parts 56 of the glass plates 11a, 11b from the vicinities of the start points of the end cut lines (slightly traveled in a predetermined direction from the vicinities of the start points of the end cut lines K2 on the upper surfaces 12), so that the bend-breaking cutter wheel 92 abutting on the upper surfaces 12 of the edge parts 56 of the glass plates 11a, 11b can be rotated in the direction (around the axis) around the cutter holder center axis O2, and thus the rolling (rotating) direction of the peripheral edge 101 of the bend-breaking cutter wheel 92 can be matched with the traveling direction (Direction in which virtual end cut line extends at edge parts 56 of glass plates 11a, 11b) of the first and second bend-breaking jigs 83a, 83b (bend-breaking jigs), and the rolling direction of the peripheral edge 101 of the bend-breaking cutter wheel 92 and the traveling direction of the first and second bend-breaking jigs 83a, 83b (bend-breaking jigs) can be made the same in the initial movement in the series of movements of forming the end cut line K2 in the edge parts 56 of the glass plates 11a, 11b. In the glass plate processing system 10 (bend-breaking processing method), the bend-breaking cutter wheel 92 itself is rotated in a direction (around an axis) around the cutter holder center axis O2 of the bend-breaking cutter holder 91 (around a rotation center), a rotation control axis for rotating the bend-breaking cutter wheel 92 itself is set as the cutter holder center axis O2 of the bend-breaking cutter holder 91, and an angle of the rotation control axis is adjusted to a rolling direction of the bend-breaking cutter wheel 92 (Moving direction of bend-breaking jigs 83a, 83b), whereby an error due to eccentricity can be minimized.

The glass plate processing system 10 (bend-breaking processing method) includes: holder lifting means (holder lifting step) for lifting the bend-breaking cutter holder 91 from the upper surfaces 12 of the glass plates 11a, 11b by the holder lifting mechanism 93 (first lifting mechanism) after forming the first end-cut line K2 in the predetermined end-cut line forming area of the edge parts 56 of the glass plates 11a, 11b by the end-cut line forming means (end-cut line forming step); and jig moving means (jig moving step) for moving the first and second bend-breaking jigs 83a, 83b (bend-breaking jigs) to the next end-cut line forming area of the edge parts 56 of the glass plates 11a, 11b after lifting the bend-breaking cutter holder 91 by the holder lifting means (holder lifting step), and, after the first and second bend-breaking jigs 83a, 83b (bend-breaking jigs) are moved to the next end cut line forming area by the jig moving means (jig moving step), the bend-breaking cutter holder 91 is lowered toward the upper surface 12 of the edge part 56 of the glass plate 11a, 11b extending to the next end cut line forming area by the holder lifting mechanism 93, and after the bend-breaking cutter holder is lowered by the holder lowering means (holder lowering step), the first and second bend-breaking jigs 83a, 83b (bend-breaking jigs) are drawn a circular locus from the vicinity of the start point of the end cut line in parallel with the upper surface 12 of the edge part 56 of the glass plate 11a, 11b (slightly traveled in a predetermined direction from the vicinity of the start point of the end cut line K2 on the upper surface 12), after the rolling (rotating) direction of the peripheral edge 101 of the bend-breaking cutter wheel 92 is changed to the traveling (moving) direction of the first and second bend-breaking jigs 83a, 83b (bend-breaking jigs) and the rolling direction of the peripheral edge 101 of the bend-breaking cutter wheel 92 is changed to the traveling direction of the first and second bend-breaking jigs 83a, 83b (bend-breaking jigs) by the rolling direction changing means (rolling direction changing step), the first and second bend-breaking jigs 83a, 83b (bend-breaking jigs) are caused to travel in a predetermined direction in the next end cut line forming area, and the end cut line K2 is formed on the edge part 56 of the glass plate 11a, 11b in the next end cut line forming area by the bend-breaking cutter wheel 92. Therefore, in each end cut line forming area in the edge part 56 of the glass plate 11a, 11b to be processed, while the rolling (rotating) direction of the peripheral edge 101 of the bend-breaking cutter wheel 92 is caused to coincide with the traveling direction (Direction in which virtual end cut line of edge parts 56 of glass plates 11a, 11b extends) of the first and second bend-breaking jigs 83a, 83b (bend-breaking jigs), the end cut lines K2 can be put in the end cut line forming areas, and the plurality of end cut lines K2 can be efficiently formed at the edge parts 56 of the glass plates 11a, 11b in a short time.

In the glass plate processing system 10 (bend-breaking processing method), it is not necessary to install a θ-axis servomotor installed in the glass plate processing system disclosed in Patent Literature 1 or a transmission member (a pulley, a belt, or the like) that transmits a rotational force of the θ-axis servomotor to a bend-breaking cutter holder, and miniaturization, energy saving, and cost reduction of the glass plate processing system 10 can be achieved. Furthermore, it is not necessary to make the rolling direction of the peripheral edge 101 of the bend-breaking cutter wheel 92 the same as the extending direction of the virtual end cut line of the edge part 56 of the glass plates 11a, 11b (traveling direction of first and second bend-breaking jigs 83a, 83b (bend-breaking jigs)) by rotating the θ-axis servomotor in the bend-breaking process, and it is not necessary to change the rolling direction of the peripheral edge 101 of the bend-breaking cutter wheel 92 using the θ-axis servomotor every time the end cut line K2 is formed. Therefore, it is possible to shorten the time and improve the efficiency of the bend-breaking process in the glass plate processing system 10.

In the glass plate processing system 10 (bend-breaking processing method), the pressing rubber 94b of the pressing member 94 is disposed in the vicinity of the bend-breaking cutter holder 91 in the circumferential direction, and the pressing rubber 94b is lowered from the vicinity of the bend-breaking cutter holder 91 in the circumferential direction toward the upper surface 12 of the edge parts 56 of the glass plates 11a, 11b by the pressing member lifting mechanism 95 (second lifting mechanism), so that the edge parts 56 of the glass plates 11a, 11b can be reliably pressed by the pressing rubber 94b, and the edge parts 56 of the glass plates 11a, 11b on which the end cut lines K2 are formed can be reliably bend-broken by the pressing rubber 94b.

In the glass plate processing system 10 (bend-breaking processing method), after the end cut line K2 is formed on the edge parts 56 of the glass plates 11a, 11b by the peripheral edge 101 of the bend-breaking cutter wheel 92, the pressing rubber 94b of the pressing member 94 is lowered without greatly traveling (moving) the first and second bend-breaking jigs 83a, 83b (bend-breaking jigs), so that the edge parts 56 of the glass plates 11a, 11b on which the end cut line K2 is formed can be bend-broken, and the bend-breaking can be efficiently performed in a short time.

The glass plate processing system 10 (bend-breaking processing method) causes a position (positioning first reference L1 (virtual positioning first reference line)) of an outermost edge (In the illustrated glass plate 11a, one side edge 14) located outermost in the width direction among one side edge 14 extending in the front-back direction on one side in the width direction of a large-sized (large-area) glass plate 11a having large areas of an upper surface 12 and a lower surface 13 to be processed first by a first positioning unit (first positioning step) to coincide with a position (positioning first reference L1 (virtual positioning first reference line)) of an outermost edge (In the illustrated glass plate 11b, one side edge 14) located outermost in the width direction among one side edge 14 extending in the front-back direction on one side in the width direction of a small-sized (small-area) glass plate 11b having small areas of the upper surface 12 and the lower surface 13 to be processed later, and, glass plates 11a, 11b having different areas of an upper surface 12 and a lower surface 13 are positioned, and a position (positioning second reference (virtual positioning second reference line)) of a center O1 (center line L2 extending in a width direction by dividing a dimension in the front-rear direction of the glass plate 11a by 2) in a front-rear direction of a side edge 14 extending in the front-rear direction on one side in a width direction of the large-sized glass plate 11a processed first by a second positioning unit (second positioning step) coincides with a position (positioning second reference L2 (virtual positioning second reference line)) of a center O1 (center line L2 extending in the width direction by dividing a dimension in the front-rear direction of the glass plate 11b by 2) in a front-rear direction of a side edge 14 extending in the front-rear direction on one side in the width direction of the small-sized glass plate 11b processed later, and, after the glass plates 11a, 11b with different sizes having different areas of the upper surface 12 and the lower surface 13 are positioned, the cutting processing is performed on the small-sized glass plate 11b (glass plates 11b with different areas) to be processed later. Therefore, a movement distance of the cutting device 55 (a movement distance in the width direction of the cutting processing table 54) until reaching the outermost edge (side edge 14) of the large-sized (large-area) glass plate 11a with large areas of the upper surface 12 and the lower surface 13 is equal to a movement distance of the cutting device 55 (a movement distance in the width direction of the cutting processing table 54) until reaching the outermost edge (side edge 14) of the small-sized (small-area) glass plate 11b with small areas of the upper surface 12 and the lower surface 13, the movement distance (movement distance in the width direction of the cutting processing table 54) from the outermost edge (side edge 14) of the large-sized glass plate 11a to the return of the cutting device 55 to the outside in the width direction of the glass plate 11a is equal to the movement distance (movement distance in the width direction of the cutting processing table 54) from the outermost edge (side edge 14) of the small-sized glass plate 11b to the return to the outside in the width direction of the glass plate 11b, and as compared with the glass plate processing system of the prior art, the movement distance of the cutting device 55 until reaching the outermost edge (side edge 14) of the small-sized glass plate 11b can be shortened, and the movement distance of the cutting device 55 from the outermost edge (side edge 14) of the small-sized glass plate 11b to the return to the outside in the width direction of the glass plate 11b can be shortened, It is possible to shorten the arrival time (non-processing time) until the cutting device 55 reaches the outermost edge (side edge 14) of the small-size glass plate 11b, and it is possible to shorten the return time until the cutting device 55 returns from the outermost edge (side edge 14) of the small-size glass plate 11b to the outside in the width direction of the glass plate 11b.

The glass plate processing system 10 (bend-breaking processing method) causes a position (positioning first reference L1 (virtual positioning first reference line)) of an outermost edge (In the illustrated glass plate 11a, one side edge 14) located outermost in the width direction among one side edge 14 extending in the front-back direction on one side in the width direction of a large-sized (large-area) glass plate 11a having large areas of an upper surface 12 and a lower surface 13 to be processed first by a first positioning unit (first positioning step) to coincide with a position (positioning first reference L1 (virtual positioning first reference line)) of an outermost edge (In the illustrated glass plate 11b, one side edge 14) located outermost in the width direction among one side edge 14 extending in the front-back direction on one side in the width direction of a small-sized (small-area) glass plate 11b having small areas of the upper surface 12 and the lower surface 13 to be processed later, and the glass plates 11a, 11b having different areas of the upper surface 12 and the lower surface 13 are positioned, and a position (positioning second reference L2 (virtual positioning second reference line)) of a center O1 (center line L2 extending in the width direction by dividing a dimension of the glass plate 11a in the front-rear direction by 2) of the side edge 14 extending in the front-rear direction on one side in the width direction of the large-sized glass plate 11a processed first by the second positioning unit (second positioning step) coincides with a position (positioning second reference L2 (virtual positioning second reference line)) of a center O1 (center line L2 extending in the width direction by dividing a dimension of the glass plate 11a in the front-rear direction by 2) of the side edge 14 extending in the front-rear direction on one side in the width direction of the small-sized glass plate 11b processed later, and after the glass plates 11a, 11b having different sizes in areas of the upper surface 12 and the lower surface 13 are positioned, grinding processing of the small-sized glass plate 11b (glass plates 11b having different areas) to be processed later is performed. Therefore, a movement distance of the grinding device 107 until reaching the outermost edge (side edge 14)4 of the large-sized (large-area) glass plate 11a having large areas of the upper surface 12 and the lower surface 13 (a movement distance in the width direction of the grinding processing table 106) and a movement distance of the grinding device 107 until reaching the outermost edge (side edge 14) of the small-sized (small-area) glass plate 11b having small areas of the upper surface 12 and the lower surface 13 (a movement distance in the width direction of the grinding processing table 106) are equal, a movement distance (movement distance in the width direction of the grinding processing table 106) from the outermost edge (side edge 14) of the large-sized glass plate 11a until the grinding device 107 returns outward in the width direction of the glass plate 11a from the outermost edge (side edge 14) of the large-sized glass plate 11a is equal to a movement distance (movement distance in the width direction of the grinding processing table 106) from the outermost edge (side edge 14) of the small-sized glass plate 11b until the grinding device 107 returns outward in the width direction of the small-sized glass plate 11b, and the movement distance of the grinding device 107 from the outermost edge (side edge 14) of the small-sized glass plate 11b until the grinding device returns outward in the width direction of the small-sized glass plate 11b can be shortened as compared with the glass plate processing system of the prior art, It is possible to shorten the arrival time (non-processing time) until the grinding device 107 reaches the side edge 14 of the small-size glass plate 11b, and it is possible to shorten the return time until the grinding device 107 returns from the outermost edge (side edge 14) of the small-size glass plate 11b to the outside in the width direction of the glass plate 11 b. The glass plate processing system 10 can quickly perform the cutting processing and the grinding processing on the small-sized glass plate 11b, and can shorten the cycle time of the cutting processing and the grinding processing.

### Reference Signs List

10 glass plate processing system
11a large-sized glass plate
11b small-sized glass plate
12 upper surface
13 lower surface
14 one side edge
15 other side edge
16 front end edge
17 trailing edge
18a to 18d first to fourth corner parts
19 loading area
20 cutting processing area
21 bend-breaking processing area
22 grinding processing area
23 unloading area
24 conveyance mechanism
25 system stand
26a, 26b first and second pillars
27 fixed frame
28 first moving unit (first moving means)
29 second moving unit (second moving means)
30 first guide frame
31 first guide rail
32 first traveling frame
33 first guide shoe
34 first servomotor
35 second guide frame
36 second guide rail
37 second traveling frame
38 second guide shoe
39 second servomotor
40a to 40d glass plate first to fourth holders
41 pad placing plate
42 suction pad
43 loading conveyor
44 stopper
45 roller
45a roller
46 roller lifting mechanism
47 moving mechanism
48a one side edge
48b other side edge
49 axis
50 rod
51 third servomotor
52 moving arm
53 abutting member
54 cutting processing table
55 cutting device
56 edge part (peripheral edge part)
57a, 57b base lane
58a first moving mechanism
58b second moving mechanism
59a, 59b traveling guide rail
60a, 60b feed screw
61 fourth servomotor
62a, 62b guide shoe
63a, 63b slide block (housing nut)
64 cutting jig
65 air cylinder
66 fifth servomotor
67 cutting cutter wheel
68 cutting cutter holder
69 cutter lifting shaft
70 cutter lifting and lowering guide
71 support shaft
72 bracket
73 timing belt
74 bend-breaking processing table
75 bend-breaking device
75a first bend-breaking device
75b second bend-breaking device
76 belt conveyor
77 conveyor drive motor
78 belt
79 pulley
80 carrier roller
81 conveyor frame
82 suspension frame
83a first bend-breaking jig
83b second bend-breaking jig
84 sixth servomotor (X-axis servomotor)
85a X-axis first actuator
85b X-axis second actuator
86 seventh servomotor (Y-axis servomotor)
87a Y-axis first actuator
87b Y-axis second actuator
88a X-axis first actuator frame
88b X-axis second actuator frame
89 eighth servomotor (X-axis servomotor)
90 ninth servomotor (Y-axis servomotor)
91 bend-breaking cutter holder
92 bend-breaking cutter wheel
93 holder lifting mechanism (first lifting mechanism)
94 pressing member
94a plate
94b pressing rubber
95 pressing member lifting mechanism (second lifting mechanism)
96 holder main body
97 holder head
98a rolling direction change start point
98b rolling direction change end point
99 bearing
100 rolling shaft
101 peripheral edge
102 connecting part
103 bracket
104 penetrating part
105 connecting member
106 grinding processing table
107 grinding device
108 suction pad
109 tenth servomotor
110 grinding jig
111 eleventh servomotor
112 twelfth servomotor
113 thirteenth servomotor
114 grinding wheel lifting screw
115 grinding wheel cutting screw
116 grinding wheel
117 grinding holder
118 cover
119 spindle motor
120 slit
121 motor housing
122 bracket
123 unloading conveyor
125 bend-breaking device
126 bend-breaking jig
127 first lifting mechanism
128 pressing roller
129 second lifting mechanism
130 bend-breaking cutter wheel
131 bend-breaking cutter holder
132 θ-axis servomotor
K1 outline cutting line (cut line)
K2 end cut line
L1 positioning first reference (virtual positioning first reference line)
L2 positioning second reference (virtual positioning second reference line) (center line)
O1 center of side edge in front-back direction
O2 cutter holder center axis
O3 cutter wheel axis
S separation dimension (eccentric dimension)

## Claims

1. A bend-breaking jig (83a, 83b) installed in a bend-breaking device (75a, 75b) that bend-breaks an edge part of a glass plate to be processed, the bend-breaking jig (83a, 83b) comprising:
a bend-breaking cutter wheel (92) that forms an end cut line (scribe) on an edge part of the glass plate; and
a bend-breaking cutter holder (91) that is positioned above the bend-breaking cutter wheel (92) and supports the bend-breaking cutter wheel (92),
said bend-breaking cutter holder (91) includes a holder main body (96) including a connecting part, and a holder head (97) attached to a distal end of the holder main body (96),
said holder head (97) is connected to the holder main body 96 via a bearing (99),
wherein a cutter wheel axis extending in an up-down direction of the bend-breaking cutter wheel (92) is eccentric radially outward with respect to a cutter holder center axis extending in an up-down direction of the bend-breaking cutter holder (91), and the bend-breaking cutter wheel (92) is rotatable by 360° in a direction around the cutter wheel axis with respect to the bend-breaking cutter holder (91), and
when the bend-breaking jig (83a, 83b) travels in a predetermined direction on an upper surface of the edge part of the glass plate in parallel with the upper surface, the bend-breaking cutter wheel (92) abutting on the upper surface of the edge part of the glass plate rotates in the direction around the cutter wheel axis, and a rolling direction of the bend-breaking cutter wheel (92) becomes identical with a traveling direction of the bend-breaking jig (83a, 83b),
said bend-breaking jig (83a, 83b) further comprising: a pressing member that presses the edge part of the glass plate on which the end cut line is formed; and a second lifting mechanism (95) that lifts and lowers the pressing member,
wherein after the end cut line is formed on the edge part of the glass plate by the bend-breaking cutter wheel (92), the pressing member is lowered toward the upper surface of the edge part of the glass plate by the second lifting mechanism (95), and the pressing member presses the edge part of the glass plate downward to bend-break the edge part of the glass plate from a main body of the glass plate, and
**characterised in that**:
the pressing member includes a penetrating part opened at a center of the pressing member,
said bend-breaking cutter wheel (92) is positioned at the penetrating part of the pressing member, and in the bend-breaking jig (83a, 83b), when the bend-breaking cutter holder (91) is lowered toward the upper surface of the edge part of the glass plate by the second lifting mechanism (95), the bend-breaking cutter wheel (92) is exposed downward from the penetrating part of the pressing member.

2. The bend-breaking jig (83a, 83b) according to claim 1, further comprising a first lifting mechanism (93) that lifts and lowers the bend-breaking cutter holder (91) in an up-down direction, wherein, when an end cut line is formed on the edge part of the glass plate, the bend-breaking cutter holder (91) is lowered toward the upper surface of the edge part of the glass plate by the first lifting mechanism (93) and the bend-breaking cutter wheel (92) abuts on the upper surface of the edge part of the glass plate, and after the bend-breaking jig (83a, 83b) travels in the predetermined direction and the rolling direction of the bend-breaking cutter wheel (92) becomes identical with the traveling direction of the bend-breaking jig (83a, 83b), the bend-breaking jig (83a, 83b) travels in the predetermined direction so that the bend-breaking cutter wheel (92) forms the end cut line on the edge part of the glass plate along the traveling direction of the bend-breaking jig (83a, 83b).

3. The bend-breaking jig (83a, 83b) according to claim 2, wherein the bend-breaking jig (83a, 83b) repeats: a lifting operation in which the bend-breaking cutter holder (91) is lifted from the upper surface of the edge part of the glass plate by the first lifting mechanism (93) after the end cut line is formed for a first time in a predetermined area of the edge part of the glass plate; a moving operation in which the bend-breaking jig (83a, 83b) is moved to a next end cut line forming area of the edge part of the glass plate after the bend-breaking cutter holder (91) is lifted; a lowering operation in which the bend-breaking cutter holder (91) is lowered toward the upper surface of the edge part of the glass plate by the first lifting mechanism (93) after the bend-breaking jig (83a, 83b) is moved to the next end cut line forming area; a rolling direction changing operation in which the bend-breaking jig (83a, 83b) travels in a predetermined direction and a rolling direction of the bend-breaking wheel cutter changes to a traveling direction of the bend-breaking jig (83a, 83b) after the bend-breaking cutter holder (91) is lowered; and an end cut line forming operation in which the bend-breaking jig (83a, 83b) travels in the predetermined direction so that the bend-breaking cutter wheel (92) forms the end cut line on the edge part of the glass plate along the traveling direction of the bend-breaking jig (83a, 83b) after the rolling direction of the bend-breaking cutter wheel (92) becomes identical with the traveling direction of the bend-breaking jig (83a, 83b).

4. The bend-breaking jig (83a, 83b) according to claim 3, wherein the rolling direction changing operation changes the rolling direction of the bend-breaking cutter wheel (92) to a direction in which a virtual end cut line of the edge part of the glass plate extends by causing the bend-breaking jig (83a, 83b) to travel toward a direction of a start point of the end cut line at a rolling direction changing position in a vicinity of the edge part of the glass plate including an outline cutting line of a main body of the glass plate or a rolling direction changing position in a vicinity of the edge part of the glass plate including an edge of the glass plate.

5. The bend-breaking jig (83a, 83b) according to claim 4, wherein the rolling direction changing operation changes the rolling direction of the bend-breaking cutter wheel (92) to the direction in which the virtual end cut line of the edge part of the glass plate extends by causing the bend-breaking jig (83a, 83b) to draw a circular trajectory from a rolling direction change start point toward the start point of the end cut line at the rolling direction changing position.

6. The bend-breaking jig (83a, 83b) according to claim 4, wherein the rolling direction changing operation causes the bend-breaking jig (83a, 83b) to travel in a straight line from a rolling direction change start point toward the start point of the end cut line at the rolling direction changing position so that an angle formed by a direction in which the end cut line of the edge part of the glass plate extends and the traveling direction of the bend-breaking jig (83a, 83b) toward the start point of the end cut line becomes 90° or less, and after the rolling direction of the bend-breaking cutter wheel (92) is changed to the direction in which the virtual end cut line extends, the traveling direction of the bend-breaking jig (83a, 83b) is changed to the direction in which the end cut line extends at an angle of 90° or less at the start point of the end cut line, and the bend-breaking jig (83a, 83b) is caused to travel in the direction in which the end cut line extends.

7. The bend-breaking jig (83a, 83b) according to claim 4, wherein the rolling direction changing operation causes the bend-breaking jig (83a, 83b) to travel along the end cut line of the edge part of the glass plate at the rolling direction changing position from a rolling direction change start point toward the start point of the end cut line, or causes the bend-breaking jig (83a, 83b) to travel on the end cut line from the rolling direction change start point toward the start point of the end cut line at the rolling direction changing position, and after the rolling direction of the bend-breaking cutter wheel (92) is changed to the direction in which the virtual end cut line extends, reverses the bend-breaking jig (83a, 83b) at the start point of the end cut line to change the traveling direction of the bend-breaking jig (83a, 83b) to the direction in which the end cut line extends, and causes the bend-breaking jig (83a, 83b) to travel in the direction in which the end cut line extends.

8. The bend-breaking jig (83a, 83b) according to claim **7,** wherein the pressing member is formed of: a plate parallel to an upper surface of the glass plate; and a pressing rubber molded in a truncated hemispherical shape with a head cut off from a surface parallel to a bottom surface and fixed to a lower surface of the plate, and the penetrating part is formed at a center of the plate and a center of the pressing rubber.

9. A bend-breaking processing method of bend-breaking an edge part of a glass plate to be processed using a bend-breaking device (75a, 75b) in which a bend-breaking jig (83a, 83b) is installed,
the bend-breaking jig (83a, 83b) including a bend-breaking cutter wheel (92) that forms an end cut line (scribe) at the edge part of the glass plate, and a bend-breaking cutter holder (91) that is positioned above the bend-breaking cutter wheel (92) and supports the bend-breaking cutter wheel (92),
said bend-breaking cutter holder (91) includes a holder main body (96) including a connecting part, and a holder head (97) attached to a distal end of the holder main body (96),
said holder head (97) is connected to the holder main body 96 via a bearing (99),
a cutter wheel axis extending in an up-down direction of the bend-breaking cutter wheel (92) being eccentric radially outward with respect to a cutter holder center axis extending in an up-down direction of the bend-breaking cutter holder (91), and the bend-breaking cutter wheel (92) being rotatable by 360° in a direction around the cutter wheel axis with respect to the bend-breaking cutter holder (91),
the bend-breaking processing method comprising: a rolling direction changing step of causing the bend-breaking jig (83a, 83b) to travel in a predetermined direction on an upper surface of the edge part of the glass plate in parallel with the upper surface, rotating the bend-breaking cutter wheel (92) abutting on the upper surface of the edge part of the glass plate in the direction around the cutter wheel axis, and changing a rolling direction of the bend-breaking cutter wheel (92) to a traveling direction of the bend-breaking jig (83a, 83b); and an end cut line forming step of forming, by the bend-breaking cutter wheel (92), an end cut line on the edge part of the glass plate along the traveling direction of the bend-breaking jig (83a, 83b) after the rolling direction of the bend-breaking cutter wheel (92) is changed to the traveling direction of the bend-breaking jig (83a, 83b),
wherein the bend-breaking jig (83a, 83b) includes a pressing member that presses the edge part of the glass plate on which the end cut line is formed, and a second lifting mechanism (95) that lifts and lowers the pressing member,
the bend-breaking processing method further comprising a bend-breaking processing step of, after forming the end cut line on the edge part of the glass plate by the bend-breaking cutter wheel (92), lowering the pressing member toward the upper surface of the edge part of the glass plate by the second lifting mechanism (95) and pressing the edge part of the glass plate downward by the pressing member to bend-break the edge part of the glass plate from a main body of the glass plate, and
**characterised in that**:
the pressing member includes a penetrating part opened at a center of the pressing member, the bend-breaking cutter wheel (92) is positioned at the penetrating part of the pressing member, and in the holder lowering step, when the bend-breaking cutter holder (91) is lowered toward the upper surface of the edge part of the glass plate by the first lifting mechanism (93), the bend-breaking cutter wheel (92) is exposed downward from the penetrating part of the pressing member.

10. The bend-breaking processing method according to claim **9,** wherein the bend-breaking jig (83a, 83b) includes a first lifting mechanism (93) that lifts and lowers the bend-breaking cutter holder (91) in an up-down direction, the bend-breaking processing method includes a holder lowering step of lowering the bend-breaking cutter holder (91) toward the upper surface of the edge part of the glass plate by the first lifting mechanism (93) and causing the bend-breaking cutter wheel (92) to abut on the upper surface of the edge part of the glass plate before the rolling direction changing step, and in the rolling direction changing step, the bend-breaking jig (83a, 83b) is caused to travel on the upper surface of the edge part of the glass plate in a predetermined direction parallel to the upper surface to change the rolling direction of the bend-breaking cutter wheel (92) to the traveling direction of the bend-breaking jig (83a, 83b) after the bend-breaking cutter wheel (92) is caused to abut on the upper surface of the edge part of the glass plate in the holder lowering step.

11. The bend-breaking processing method according to claim 10, further comprising: a holder lifting step of lifting the bend-breaking cutter holder (91) from the upper surface of the glass plate by the first lifting mechanism (93) after the end cut line is formed for a first time in a predetermined area of the edge part of the glass plate in the end cut line forming step; and a jig moving step of moving the bend-breaking jig (83a, 83b) to a next end cut line forming area of the edge part of the glass plate after the bend-breaking cutter holder (91) is lifted in the holder lifting step, wherein in the holder lowering step, the bend-breaking cutter holder (91) is lowered toward the upper surface of the edge part of the glass plate extending to the next end cut line forming area by the first lifting mechanism (93) after the bend-breaking jig (83a, 83b) is moved to the next end cut line forming area in the jig moving step, in the rolling direction changing step, the bend-breaking jig (83a, 83b) is caused to travel in a predetermined direction on the upper surface of the edge part of the glass plate in the next end cut line forming area, and the rolling direction of the bend-breaking cutter wheel (92) is changed to the traveling direction of the bend-breaking jig (83a, 83b) after the bend-breaking cutter holder (91) is lowered in the holder lowering step, and in the end cut line forming step, the bend-breaking jig (83a, 83b) is caused to travel in a predetermined direction in the next end cut line forming area, and an end cut line is formed on the edge part of the glass plate in the next end cut line forming area by the bend-breaking cutter wheel (92) after the rolling direction of the bend-breaking cutter wheel (92) is changed to the traveling direction of the bend-breaking jig (83a, 83b) in the rolling direction changing step.

12. The bend-breaking processing method according to claim 11, wherein in the rolling direction changing step, the rolling direction of the bend-breaking cutter wheel (92) is changed to a direction in which a virtual end cut line of the edge part of the glass plate extends by causing the bend-breaking jig (83a, 83b) to travel toward a direction of a start point of the end cut line in a rolling direction changing area in a vicinity of the edge part of the glass plate including an outline cutting line of a main body of the glass plate or at a rolling direction changing position in a vicinity of the edge part of the glass plate including an edge of the glass plate.

13. The bend-breaking processing method according to claim 11:
wherein in the rolling direction changing step, the rolling direction of the bend-breaking cutter wheel (92) is changed to the direction in which the virtual end cut line of the edge part of the glass plate extends by causing the bend-breaking jig (83a, 83b) to draw a circular trajectory from a rolling direction change start point toward the start point of the end cut line at the rolling direction changing position; or
wherein in the rolling direction changing step, the bend-breaking jig (83a, 83b) is caused to travel in a straight line from a rolling direction change start point toward the start point of the end cut line at the rolling direction changing position so that an angle formed by a direction in which the end cut line of the edge part of the glass plate extends and the traveling direction of the bend-breaking jig (83a, 83b) toward the start point of the end cut line becomes 90° or less, and after the rolling direction of the bend-breaking cutter wheel (92) is changed to the direction in which the virtual end cut line extends, the traveling direction of the bend-breaking jig (83a, 83b) is changed to the direction in which the end cut line extends at an angle of 90° or less at the start point of the end cut line, and the bend-breaking jig (83a, 83b) is caused to travel in the direction in which the end cut line extends; or
wherein in the rolling direction changing step, the bend-breaking jig (83a, 83b) is caused to travel along the end cut line of the edge part of the glass plate at the rolling direction changing position from a rolling direction change start point toward the start point of the end cut line, or is caused to travel on the end cut line from the rolling direction change start point toward the start point of the end cut line at the rolling direction changing position, and after the rolling direction of the bend-breaking cutter wheel (92) is changed to the direction in which the virtual end cut line extends, the bend-breaking jig (83a, 83b) is reversed at the start point of the end cut line to change the traveling direction of the bend-breaking jig (83a, 83b) to the direction in which the end cut line extends, and is caused to travel in the direction in which the end cut line extends.

14. The bend-breaking processing method according to any one of claims 11 to 13,
wherein the pressing member is formed of: a plate parallel to an upper surface of the glass plate; and a pressing rubber molded in a truncated hemispherical shape with a head cut off from a surface parallel to a bottom surface and fixed to a lower surface of the plate, and the penetrating part is formed at a center of the plate and a center of the pressing rubber.

## Patentansprüche

1. Biegebrechspannvorrichtung (83a, 83b), die in einer Biegebrechvorrichtung (75a, 75b) installiert ist, die einen Randteil einer zu bearbeitenden Glasplatte biegebricht, wobei die Biegebrechspannvorrichtung (83a, 83b) umfasst:
ein Biegeschneidwerkzeugrad (92), das eine Endschnittlinie (Reißnadel) an einem Randteil der Glasplatte ausbildet; und
einen Biegeschneidwerkzeughalter (91), der über dem Biegeschneidwerkzeugrad (92) angeordnet ist und das Biegeschneidwerkzeugrad (92) trägt,
der Biegeschneidwerkzeughalter (91) einen Halterhauptkörper (96), der einen Verbindungsteil beinhaltet, und einen Halterkopf (97)beinhaltet, der an einem distalen Ende des Halterhauptkörpers (96) befestigt ist,
der Halterkopf (97) über ein Lager (99) mit dem Halterhauptkörper (96) verbunden ist,
wobei eine Schneidwerkzeugradachse, die sich in einer Aufwärts-Abwärts-Richtung des Biegebrechschneidwerkzeugs (92) erstreckt, in Bezug auf eine Schneidwerkzeughaltermittelachse, die sich in einer Aufwärts-Abwärts-Richtung des Biegebrechschneidwerkzeughalters (91) erstreckt, radial nach außen exzentrisch ist, und das Biegebrechschneidwerkzeugrad (92) in Bezug auf den Biegebrechschneidwerkzeughalter (91) um 360° in einer Richtung um die Schneidwerkzeugradachse drehbar ist, und
wenn sich die Biegebrechspannvorrichtung (83a, 83b) in einer vorbestimmten Richtung auf einer oberen Oberfläche des Randteils der Glasplatte parallel zu der oberen Oberfläche bewegt, sich das Biegebrechschneidwerkzeugrad (92), das an der oberen Oberfläche des Randteils der Glasplatte anliegt, in der Richtung um die Schneidwerkzeugradachse dreht, und eine Rollrichtung des Biegebrechschneidwerkzeugrads (92) identisch mit einer Bewegungsrichtung der Biegebrechspannvorrichtung (83a, 83b) wird,
wobei die Biegebrechspannvorrichtung (83a, 83b) ferner umfasst: ein Druckelement, das den Randteil der Glasplatte drückt, auf dem die Endschnittlinie ausgebildet ist; und einen zweiten Hebemechanismus (95), der das Druckelement anhebt und absenkt,
wobei nach dem Ausbilden der Endschnittlinie auf dem Randteil der Glasplatte durch das Biegebrechschneidwerkzeugrad (92) das Druckelement durch den zweiten Hebemechanismus (95) in Richtung der oberen Oberfläche des Randteils der Glasplatte abgesenkt wird und das Druckelement den Randteil der Glasplatte nach unten drückt, um den Randteil der Glasplatte von einem Hauptkörper der Glasplatte zu biegebrechen, und
**dadurch gekennzeichnet, dass**:
das Druckelement einen in einer Mitte des Druckelements geöffneten durchdringenden Teil beinhaltet,
das Biegebrechschneidwerkzeugrad (92) an dem durchdringenden Teil des Druckelements positioniert ist, und in der Biegebruchspannvorrichtung (83a, 83b), wenn der Biegebrechschneidwerkzeughalter (91) durch den zweiten Hebemechanismus (95) in Richtung der oberen Oberfläche des Randteils der Glasplatte abgesenkt wird, das Biegebrechschneidwerkzeugrad (92) von dem durchdringenden Teil des Druckelements nach unten freigelegt wird.

2. Biegebruchvorrichtung (83a, 83b) nach Anspruch 1, ferner umfassend einen ersten Hebemechanismus (93), der den Biegebrechschneidwerkzeughalter (91) in einer Aufwärts-Abwärts-Richtung anhebt und absenkt, wobei, wenn eine Endschnittlinie auf dem Randteil der Glasplatte ausgebildet wird, der Biegebrechschneidwerkzeughalter (91) durch den ersten Hebemechanismus (93) in Richtung der oberen Oberfläche des Randteils der Glasplatte abgesenkt wird und das Biegebrechschneidwerkzeugrad (92) an der oberen Oberfläche des Randteils der Glasplatte anliegt, und nachdem sich die Biegebrechspannvorrichtung (83a, 83b) in der vorbestimmten Richtung bewegt und die Rollrichtung des Biegebrechschneidwerkzeugrads (92) mit der Bewegungsrichtung der Biegebrechspannvorrichtung (83a, 83b) identisch wird, sich die Biegebrechspannvorrichtung (83a, 83b) in der vorbestimmten Richtung bewegt, sodass das Biegebrechschneidwerkzeugrad (92) die Endschnittlinie an dem Randteil der Glasplatte entlang der Bewegungsrichtung der Biegebrechspannvorrichtung (83a, 83b) ausbildet.

3. Biegebrechspannvorrichtung (83a, 83b) nach Anspruch 2, wobei die Biegebruchspannvorrichtung (83a, 83b) wiederholt: einen Hebevorgang, bei dem der Biegebrechschneidwerkzeughalter (91) von der oberen Oberfläche des Randteils der Glasplatte durch den ersten Hebemechanismus (93) angehoben wird, nachdem die Endschnittlinie ein erstes Mal in einem vorbestimmten Bereich des Randteils der Glasplatte ausgebildet wurde; einen Bewegungsvorgang, bei dem die Biegebrechspannvorrichtung (83a, 83b) zu einem nächsten Endschnittlinienausbildungsbereich des Randteils der Glasplatte bewegt wird, nachdem der Biegebrechschneidwerkzeughalter (91) angehoben wurde; einen Absenkvorgang, bei dem der Biegebrechschneidwerkzeughalter (91) in Richtung der oberen Oberfläche des Randteils der Glasplatte durch den ersten Hebemechanismus (93) abgesenkt wird, nachdem die Biegebrechspannvorrichtung (83a, 83b) zu dem nächsten Endschnittlinienausbildungsbereich bewegt wurde; einen Rollrichtungsänderungsvorgang, bei dem sich die Biegebrechspannvorrichtung (83a, 83b) in einer vorbestimmten Richtung bewegt und sich eine Rollrichtung des Biegebrechschneidwerkzeugrads in eine Bewegungsrichtung der Biegebrechspannvorrichtung (83a, 83b) ändert, nachdem der Biegebrechschneidwerkzeughalter (91) abgesenkt wurde; und einen Endschnittlinienausbildungsvorgang, bei dem sich die Biegebrechspannvorrichtung (83a, 83b) in der vorbestimmten Richtung bewegt, sodass das Biegebrechschneidwerkzeugrad (92) die Endschnittlinie auf dem Randteil der Glasplatte entlang der Bewegungsrichtung der Biegebrechspannvorrichtung (83a, 83b) ausbildet, nachdem die Rollrichtung des Biegebrechschneidwerkzeugrads (92) mit der Bewegungsrichtung der Biegebrechspannvorrichtung (83a, 83b) identisch wird.

4. Biegebrechspannvorrichtung (83a, 83b) nach Anspruch 3, wobei der Rollrichtungsänderungsvorgang die Rollrichtung des Biegebrechschneidwerkzeugrads (92) in eine Richtung ändert, in der sich eine virtuelle Endschnittlinie des Randteils der Glasplatte erstreckt, indem die Biegebrechspannvorrichtung (83a, 83b) veranlasst wird, sich in Richtung eines Startpunkts der Endschnittlinie an einer Rollrichtungsänderungsposition in der Nähe des Randteils der Glasplatte, die eine Umrissschnittlinie eines Hauptkörpers der Glasplatte umfasst, oder an einer Rollrichtungsänderungsposition in der Nähe des Randteils der Glasplatte, die einen Rand der Glasplatte umfasst, zu bewegen.

5. Biegebruchspannvorrichtung (83a, 83b) nach Anspruch 4, wobei der Rollrichtungsänderungsvorgang die Rollrichtung des Biegebrechschneidwerkzeugrads (92) in die Richtung ändert, in der sich die virtuelle Endschnittlinie des Randteils der Glasplatte erstreckt, indem die Biegebrechspannvorrichtung (83a, 83b) veranlasst wird, eine kreisförmige Trajektorie von einem Startpunkt für die Änderung der Rollrichtung zu dem Startpunkt der Endschnittlinie an der Position für die Änderung der Rollrichtung zu ziehen.

6. Biegebrechspannvorrichtung (83a, 83b) nach Anspruch 4, wobei der Rollrichtungsänderungsvorgang veranlasst, dass sich die Biegebrechspannvorrichtung (83a, 83b) in einer geraden Linie von einem Rollrichtungsänderungsstartpunkt zu dem Startpunkt der Endschnittlinie an der Rollrichtungsänderungsposition bewegt, sodass ein Winkel, der durch eine Richtung ausgebildet, in der sich die Endschnittlinie des Randteils der Glasplatte erstreckt und die Bewegungsrichtung der Biegebrechspannvorrichtung (83a, 83b) in Richtung des Startpunktes der Endschnittlinie 90° oder weniger beträgt, und nachdem die Rollrichtung des Biegebrechschneidwerkzeugrads (92) in die Richtung geändert wurde, in der sich die virtuelle Endschnittlinie erstreckt, die Bewegungsrichtung der Biegebrechspannvorrichtung (83a, 83b) in die Richtung geändert wird, in der sich die Endschnittlinie in einem Winkel von 90° oder weniger an dem Startpunkt der Endschnittlinie erstreckt, und die Biegebrechspannvorrichtung (83a, 83b) veranlasst wird, sich in die Richtung zu bewegen, in der sich die Endschnittlinie erstreckt.

7. Biegebrechspannvorrichtung (83a, 83b) nach Anspruch 4, wobei der Rollrichtungsänderungsvorgang veranlasst, dass sich die Biegebrechspannvorrichtung (83a, 83b) entlang der Endschnittlinie des Randteils der Glasplatte an der Rollrichtungsänderungsposition von einem Rollrichtungsänderungsstartpunkt zu dem Startpunkt der Endschnittlinie bewegt, oder veranlasst, dass sich die Biegebrechspannvorrichtung (83a, 83b) an der Rollrichtungsänderungsposition auf der Endschnittlinie von dem Rollrichtungsänderungsstartpunkt zu dem Startpunkt der Endschnittlinie bewegt, und nachdem die Rollrichtung des Biegebrechschneidwerkzeugrads (92) in die Richtung geändert wurde, in der sich die virtuelle Endschnittlinie erstreckt, die Biegebrechspannvorrichtung (83a, 83b) an dem Startpunkt der Endschnittlinie umkehrt, um die Bewegungsrichtung der Biegebrechspannvorrichtung (83a, 83b) in die Richtung zu ändern, in der sich die Endschnittlinie erstreckt, und veranlasst, dass sich die Biegebrechspannvorrichtung (83a, 83b) in die Richtung bewegt, in der sich die Endschnittlinie erstreckt.

8. Biegebrechspannvorrichtung (83a, 83b) nach Anspruch 7, wobei das Druckelement ausgebildet ist aus: einer Platte parallel zu einer oberen Oberfläche der Glasplatte; und einem Druckgummi, das in einer abgestumpften halbkugelförmigen Form mit einem Kopf geformt ist, der von einer Oberfläche parallel zu einer unteren Oberfläche abgeschnitten und an einer unteren Oberfläche der Platte befestigt ist, und wobei der durchdringende Teil in einer Mitte der Platte und einer Mitte des Druckgummis ausgebildet ist.

9. Biegebrechbearbeitungsverfahren zum Biegebrechen eines Randteils einer zu bearbeitenden Glasplatte unter Verwendung einer Biegebrechvorrichtung (75a, 75b), in der eine Biegebrechspannvorrichtung (83a, 83b) installiert ist, wobei die Biegebrechspannvorrichtung (83a, 83b) ein Biegebrechschneidwerkzeugrad (92), das eine Endschnittlinie (Reißnadel) an dem Randteil der Glasplatte ausbildet, und einen Biegebrechschneidwerkzeugradhalter (91) beinhaltet, der über dem Biegebrechschneidwerkzeugrad (92) angeordnet ist und das Biegebrechschneidwerkzeugrad (92) trägt,
der Biegeschneidwerkzeughalter (91) einen Halterhauptkörper (96), der einen Verbindungsteil beinhaltet, und einen Halterkopf (97) beinhaltet, der an einem distalen Ende des Halterhauptkörpers (96) befestigt ist,
der Halterkopf (97) über ein Lager (99) mit dem Halterhauptkörper 96 verbunden ist,
eine Schneidwerkzeugradachse, die sich in einer Aufwärts-Abwärts-Richtung des Biegebrechschneidwerkzeugs (92) erstreckt, in Bezug auf eine Schneidwerkzeughaltermittelachse, die sich in einer Aufwärts-Abwärts-Richtung des Biegebrechschneidwerkzeughalters (91) erstreckt, radial nach außen exzentrisch ist, und das Biegebrechschneidwerkzeugrad (92) in Bezug auf den Biegebrechschneidwerkzeughalter (91) um 360° in einer Richtung um die Schneidwerkzeugradachse drehbar ist,
das Biegebrechbearbeitungsverfahren umfasst: einen Schritt des Änderns der Rollrichtung des Veranlassens der Biegebrechspannvorrichtung (83a, 83b), sich in einer vorbestimmten Richtung auf einer oberen Oberfläche des Randteils der Glasplatte parallel zu der oberen Oberfläche zu bewegen, des Drehens des Biegebrechschneidwerkzeugrads (92), das an der oberen Oberfläche des Randteils der Glasplatte anliegt, in der Richtung um die Schneidwerkzeugradachse, und das Ändern einer Rollrichtung des Biegebrechschneidwerkzeugrads (92) in eine Bewegungsrichtung der Biegebrechspannvorrichtung (83a, 83b);
und einen Endschnittlinienbildungsschritt des Ausbildens einer Endschnittlinie auf dem Randteil der Glasplatte entlang der Bewegungsrichtung der Biegebruchspannvorrichtung (83a, 83b) durch das Biegebrechschneidwerkzeugrad (92), nachdem die Rollrichtung des Biegebrechschneidwerkzeugrads (92) in die Bewegungsrichtung der Biegebruchspannvorrichtung (83a, 83b) geändert wurde,
wobei die Biegebrechspannvorrichtung (83a, 83b) ein Druckelement, das den Randteil der Glasplatte drückt, auf dem die Endschnittlinie ausgebildet ist; und einen zweiten Hebemechanismus (95) beinhaltet, der das Druckelement anhebt und absenkt,
das Biegebrechbearbeitungsverfahren ferner einen Biegebrechbearbeitungsschritt umfasst, bei dem nach dem Ausbilden der Endschnittlinie auf dem Randteil der Glasplatte durch das Biegebrechschneidwerkzeugrad (92) das Druckelement durch den zweiten Hebemechanismus (95) in Richtung der oberen Oberfläche des Randteils der Glasplatte abgesenkt wird und der Randteil der Glasplatte durch das Druckelement nach unten gedrückt wird, um den Randteil der Glasplatte von einem Hauptkörper der Glasplatte biegezubrechen, und
**dadurch gekennzeichnet, dass**:
das Presselement einen durchdringenden Teil beinhaltet, der in einer Mitte des Druckelementes geöffnet ist, das Biegebrechschneidwerkzeugrad (92) an dem durchdringenden Teil des Druckelementes positioniert ist, und in dem Schritt des Absenkens des Halters, wenn der Biegebrechschneidwerkzeugradhalter (91) durch den ersten Hebemechanismus (93) in Richtung der oberen Oberfläche des Randteils der Glasplatte abgesenkt wird, das Biegebrechschneidwerkzeugrad (92) von dem durchdringenden Teil des Druckelementes nach unten freigelegt wird.

10. Biegebrechbearbeitungsverfahren nach Anspruch 9, wobei die Biegebrechspannvorrichtung (83a, 83b) einen ersten Hebemechanismus (93) beinhaltet, der den Biegebrechschneidwerkzeughalter (91) in einer Aufwärts-Abwärts-Richtung anhebt und absenkt, das Biegebrechbearbeitungsverfahren einen Halterabsenkungsschritt des Absenkens des Biegebrechschneidwerkzeughalters (91) in Richtung der oberen Oberfläche des Randteils der Glasplatte durch den ersten Hebemechanismus (93) und des Veranlassens, dass das Biegebrechschneidwerkzeugrad (92) an der oberen Oberfläche des Randteils der Glasplatte vor dem Rollrichtungsänderungsschritt anliegt, beinhaltet und in dem Schritt des Änderns der Rollrichtung die Biegebrechspannvorrichtung (83a, 83b) veranlasst wird, sich auf der oberen Oberfläche des Randteils der Glasplatte in einer vorbestimmten Richtung parallel zu der oberen Oberfläche zu bewegen, um die Rollrichtung des Biegebrechschneidwerkzeugrads (92) in die Bewegungsrichtung der Biegebrechspannvorrichtung (83a, 83b) zu ändern, nachdem das Biegebrechschneidwerkzeugrad (92) veranlasst wurde, in dem Schritt zum Absenken des Halters an der oberen Oberfläche des Randteils der Glasplatte anzuliegen.

11. Biegebrechbearbeitungsverfahren nach Anspruch 10, das ferner umfasst: einen Schritt des Anhebens des Halters zum Anheben des Biegebrechschneidwerkzeughalters (91) von der oberen Oberfläche der Glasplatte durch den ersten Hebemechanismus (93), nachdem die Endschnittlinie zum ersten Mal in einem vorbestimmten Bereich des Randteils der Glasplatte in dem Schritt des Ausbildens der Endschnittlinie ausgebildet wurde; und einen Spannvorrichtungsbewegungsschritt des Bewegens der Biegebrechspannvorrichtung (83a, 83b) zu einem nächsten Endschnittlinienausbildungsbereich des Randteils der Glasplatte, nachdem der Biegebrechschneidwerkzeughalter (91) in dem Halteranhebungsschritt angehoben wurde, wobei in dem Halterabsenkungsschritt der Biegebrechschneidwerkzeughalter (91) in Richtung der oberen Oberfläche des Randteils der Glasplatte, die sich zu dem nächsten Endschnittlinienausbildungsbereich erstreckt, durch den ersten Hebemechanismus (93) abgesenkt wird, nachdem die Biegebrechspannvorrichtung (83a, 83b) zu dem nächsten Endschnittlinienausbildungsbereich in dem Spannvorrichtungsbewegungsschritt bewegt wird, in dem Rollrichtungsänderungsschritt die Biegebrechspannvorrichtung (83a, 83b) veranlasst wird, sich in einer vorbestimmten Richtung auf der oberen Oberfläche des Randteils der Glasplatte in dem nächsten Endschnittlinienausbildungsbereich zu bewegen, und die Rollrichtung des Biegebrechschneidwerkzeugrads (92) in die Bewegungsrichtung der Biegebrechspannvorrichtung (83a, 83b) geändert wird, nachdem der Biegebrechschneidwerkzeughalter (91) in dem Halterabsenkungsschritt abgesenkt wurde, und in dem Endschnittlinienausbildungsschritt die Biegebrechspannvorrichtung (83a, 83b) veranlasst wird, sich in einer vorbestimmten Richtung in den nächsten Endschnittlinienausbildungsbereich zu bewegen, und eine Endschnittlinie auf dem Randteil der Glasplatte in dem nächsten Endschnittlinienausbildungsbereich durch das Biegebrechschneidwerkzeugrad (92) ausgebildet wird, nachdem die Rollrichtung des Biegebrechschneidwerkzeugrads (92) zu der Bewegungsrichtung der Biegebrechspannvorrichtung (83a, 83b) in dem Rollrichtungsänderungsschritt geändert wurde.

12. Biegebrechbearbeitungsverfahren nach Anspruch 11, wobei in dem Rollrichtungsänderungsschritt die Rollrichtung des Biegebrechschneidwerkzeugrads (92) in eine Richtung geändert wird, in der sich eine virtuelle Endschnittlinie des Randteils der Glasplatte erstreckt, indem veranlasst wird, dass sich die Biegebrechspannvorrichtung (83a, 83b) in Richtung eines Startpunkts der Endschnittlinie in einem Rollrichtungsänderungsbereich in der Nähe des Randteils der Glasplatte, der eine Umrissschnittlinie eines Hauptkörpers der Glasplatte beinhaltet, oder an einer Rollrichtungsänderungsposition in der Nähe des Randteils der Glasplatte, der einen Rand der Glasplatte beinhaltet, bewegt.

13. Biegebrechbearbeitungsverfahren nach Anspruch 11:
wobei in dem Rollrichtungsänderungsschritt die Rollrichtung des Biegebrechschneidwerkzeugrads (92) in die Richtung geändert wird, in der sich die virtuelle Endschnittlinie des Randteils der Glasplatte erstreckt, indem die Biegebrechspannvorrichtung (83a, 83b) veranlasst wird, eine kreisförmige Trajektorie von einem Startpunkt für die Änderung der Rollrichtung zu dem Startpunkt der Endschnittlinie an der Position für die Änderung der Rollrichtung zu ziehen; oder
wobei in dem Rollrichtungsänderungsschritt veranlasst wird, dass sich die Biegebrechspannvorrichtung (83a, 83b) in einer geraden Linie von einem Rollrichtungsänderungsstartpunkt zu dem Startpunkt der Endschnittlinie an der Rollrichtungsänderungsposition bewegt, sodass ein Winkel, der durch eine Richtung ausgebildet, in der sich die Endschnittlinie des Randteils der Glasplatte erstreckt und die Bewegungsrichtung der Biegebrechspannvorrichtung (83a, 83b) in Richtung des Startpunktes der Endschnittlinie 90° oder weniger beträgt, und nachdem die Rollrichtung des Biegebrechschneidwerkzeugrads (92) in die Richtung geändert wurde, in der sich die virtuelle Endschnittlinie erstreckt, die Bewegungsrichtung der Biegebrechspannvorrichtung (83a, 83b) in die Richtung geändert wird, in der sich die Endschnittlinie in einem Winkel von 90° oder weniger an dem Startpunkt der Endschnittlinie erstreckt, und die Biegebrechspannvorrichtung (83a, 83b) veranlasst wird, sich in die Richtung zu bewegen, in der sich die Endschnittlinie erstreckt; oder
wobei in dem Rollrichtungsänderungsschritt veranlasst wird, dass sich die Biegebrechspannvorrichtung (83a, 83b) entlang der Endschnittlinie des Randteils der Glasplatte an der Rollrichtungsänderungsposition von einem Rollrichtungsänderungsstartpunkt zu dem Startpunkt der Endschnittlinie bewegt, oder veranlasst wird, sich an der Rollrichtungsänderungsposition auf der Endschnittlinie von dem Rollrichtungsänderungsstartpunkt zu dem Startpunkt der Endschnittlinie zu bewegen, und nachdem die Rollrichtung des Biegebrechschneidwerkzeugrads (92) in die Richtung geändert wurde, in der sich die virtuelle Endschnittlinie erstreckt, die Biegebrechspannvorrichtung (83a, 83b) an dem Startpunkt der Endschnittlinie umgekehrt wird, um die Bewegungsrichtung der Biegebrechspannvorrichtung (83a, 83b) in die Richtung zu ändern, in der sich die Endschnittlinie erstreckt, und veranlasst wird, sich in die Richtung zu bewegen, in der sich die Endschnittlinie erstreckt.

14. Biegebrechbearbeitungsverfahren nach einem der Ansprüche 11 bis 13,
wobei das Druckelement ausgebildet ist aus: einer Platte parallel zu einer oberen Oberfläche der Glasplatte; und einem Druckgummi, das in einer abgestumpften halbkugelförmigen Form mit einem Kopf geformt ist, der von einer Oberfläche parallel zu einer unteren Oberfläche abgeschnitten und an einer unteren Oberfläche der Platte befestigt ist, und wobei der durchdringende Teil in einer Mitte der Platte und einer Mitte des Druckgummis ausgebildet ist.

## Revendications

1. Gabarit de fracture (83a, 83b) installé dans un dispositif de fracture (75a, 75b) qui fracture une partie de bord d'une plaque de verre à traiter, le gabarit de fracture (83a, 83b) comprenant :
une molette de coupe de fracture (92) qui forme une ligne de coupe d'extrémité (rainure) sur une partie de bord de la plaque de verre ; et
un support de coupe de fracture (91) qui est positionné au-dessus de la molette de coupe de fracture (92) et qui supporte la molette de coupe de fracture (92),
ledit support de coupe de fracture (91) inclut un corps principal de support (96) incluant une partie de raccordement, et une tête de support (97) fixée à une extrémité distale du corps principal de support (96),
ladite tête de support (97) est raccordée au corps principal de support (96) par l'intermédiaire d'un palier (99),
dans lequel un axe de molette de coupe s'étendant dans une direction haut-bas de la molette de coupe de fracture (92) est excentré radialement vers l'extérieur par rapport à un axe central de support de coupe s'étendant dans une direction haut-bas du support de coupe de fracture (91), et la molette de coupe de fracture (92) peut tourner de 360° dans une direction autour de l'axe de molette de coupe de fracture par rapport au support de coupe de fracture (91), et
lorsque le gabarit de fracture (83a, 83b) se déplace dans une direction prédéterminée sur une surface supérieure de la partie de bord de la plaque de verre parallèlement à la surface supérieure, la molette de coupe de fracture (92) en butée sur la surface supérieure de la partie de bord de la plaque de verre tourne dans la direction autour de l'axe de molette de coupe, et une direction de roulement de la molette de coupe de fracture (92) devient identique à une direction de déplacement du gabarit de fracture (83a, 83b),
ledit gabarit de fracture (83a, 83b) comprenant en outre : un élément de pression qui presse une partie de bord de la plaque de verre sur laquelle la ligne de coupe d'extrémité est formée ; et un deuxième mécanisme de levage (95) qui lève et abaisse l'élément de pression,
dans lequel, après que la ligne de coupe d'extrémité a été formée sur la partie de bord de la plaque de verre par la molette de coupe de fracture (92), l'élément de pression est abaissé vers la surface supérieure de la partie de bord de la plaque de verre par le deuxième mécanisme de levage (95), et l'élément de pression presse la partie de bord de la plaque de verre vers le bas pour fracturer la partie de bord de la plaque de verre à partir du corps principal de la plaque de verre, et
**caractérisé en ce que** :
l'élément de pression inclut une partie pénétrante ouverte au centre de l'élément de pression,
ladite molette de coupe de fracture (92) est positionnée au niveau de la partie pénétrante de l'élément de pression, et dans le gabarit de fracture (83a, 83b), lorsque le support de coupe de fracture (91) est abaissé vers la surface supérieure de la partie de bord de la plaque de verre par le deuxième mécanisme de levage (95), la molette de coupe de fracture (92) est exposée vers le bas à partir de la partie pénétrante de l'élément de pression.

2. Gabarit de fracture (83a, 83b) selon la revendication 1, comprenant en outre un premier mécanisme de levage (93) qui lève et abaisse le support de coupe de fracture (91) dans une direction haut-bas, dans lequel, lorsqu'une ligne de coupe d'extrémité est formée sur la partie de bord de la plaque de verre, le support de coupe de fracture (91) est abaissé vers la surface supérieure de la partie de bord de la plaque de verre par le premier mécanisme de levage (93) et la molette de coupe de fracture (92) vient en butée sur la surface supérieure de la partie de bord de la plaque de verre, et après que le gabarit de fracture (83a, 83b) s'est déplacé dans la direction prédéterminée et que la direction de roulement de la molette de coupe de fracture (92) devient identique à la direction de déplacement du gabarit de fracture (83a, 83b), le gabarit de fracture (83a, 83b) se déplace dans la direction prédéterminée de sorte que la molette de coupe de fracture (92) forme la ligne de coupe d'extrémité sur la partie de bord de la plaque de verre le long de la direction de déplacement du gabarit de fracture (83a, 83b) .

3. Gabarit de fracture (83a, 83b) selon la revendication 2, dans lequel le gabarit de fracture (83a, 83b) répète : une opération de levage dans laquelle le support de coupe de fracture (91) est levé à partir de la surface supérieure de la partie de bord de la plaque de verre par le premier mécanisme de levage (93) après que la ligne de coupe d'extrémité a été formée une première fois dans une région prédéterminée de la partie de bord de la plaque de verre ; une opération de déplacement dans laquelle le gabarit de fracture (83a, 83b) est déplacé jusqu'à une région de formation de ligne de coupe d'extrémité suivante de la partie de bord de la plaque de verre après que le support de coupe de fracture (91) a été levé ; une opération d'abaissement dans laquelle le support de coupe de fracture (91) est abaissé vers la surface supérieure de la partie de bord de la plaque de verre par le premier mécanisme de levage (93) après que le gabarit de fracture (83a, 83b) a été déplacé jusqu'à la région de formation de ligne de coupe d'extrémité suivante ; une opération de changement de direction de roulement dans laquelle le gabarit de fracture (83a, 83b) se déplace dans une direction prédéterminée et une direction de roulement de la molette de coupe de fracture change pour suivre la direction de déplacement du gabarit de fracture (83a, 83b) après que le support de coupe de fracture (91) a été abaissé ; et une opération de formation de ligne de coupe d'extrémité dans laquelle le gabarit de fracture (83a, 83b) se déplace dans la direction prédéterminée de sorte que la molette de coupe de fracture (92) forme la ligne de coupe d'extrémité sur la partie de bord de la plaque de verre le long de la direction de déplacement du gabarit de fracture (83a, 83b) après que la direction de roulement de la molette de coupe de fracture (92) est devenue identique à la direction de déplacement du gabarit de fracture (83a, 83b).

4. Gabarit de fracture (83a, 83b) selon la revendication 3, dans lequel l'opération de changement de direction de roulement change la direction de roulement de la molette de coupe de fracture (92) en une direction dans laquelle une ligne de coupe d'extrémité virtuelle de la partie de bord de la plaque de verre s'étend en amenant le gabarit de fracture (83a, 83b) à se déplacer vers une direction d'un point de début de la ligne de coupe d'extrémité à une position de changement de direction de roulement à proximité de la partie de bord de la plaque de verre incluant une ligne de coupe de contour d'un corps principal de la plaque de verre ou une position de changement de direction de roulement à proximité de la partie de bord de la plaque de verre incluant un bord de la plaque de verre.

5. Gabarit de fracture (83a, 83b) selon la revendication 4, dans lequel l'opération de changement de direction de roulement change la direction de roulement de la molette de coupe de fracture (92) en direction dans laquelle s'étend la ligne de coupe d'extrémité virtuelle de la partie de bord de la plaque de verre en amenant le gabarit de fracture (83a, 83b) à tracer une trajectoire circulaire à partir d'un point de début de changement de direction de roulement vers le point de début de la ligne de coupe d'extrémité à la position de changement de direction de roulement.

6. Gabarit de fracture (83a, 83b) selon la revendication 4, dans lequel l'opération de changement de direction de roulement amène le gabarit de fracture (83a, 83b) à se déplacer en ligne droite à partir d'un point de début de changement de direction de roulement vers le point de début de la ligne de coupe d'extrémité à la position de changement de direction de roulement, de sorte qu'un angle formé par une direction dans laquelle s'étend la ligne de coupe d'extrémité de la partie de bord de la plaque de verre et la direction de déplacement du gabarit de fracture (83a, 83b) vers le point de début de la ligne de coupe d'extrémité devient de 90° ou moins, et après que la direction de roulement de la molette de coupe de fracture (92) a été changée en direction dans laquelle s'étend la ligne de coupe d'extrémité virtuelle, la direction de déplacement du gabarit de fracture (83a, 83b) est changée en direction dans laquelle s'étend la ligne de coupe d'extrémité à un angle de 90° ou moins au point de début de la ligne de coupe d'extrémité, et le gabarit de fracture (83a, 83b) est amené à se déplacer dans la direction dans laquelle s'étend la ligne de coupe d'extrémité.

7. Gabarit de fracture (83a, 83b) selon la revendication 4, dans lequel l'opération de changement de direction de roulement amène le gabarit de fracture (83a, 83b) à se déplacer le long de la ligne de coupe d'extrémité de la partie de bord de la plaque de verre à la position de changement de direction de roulement à partir d'un point de début de changement de direction de roulement vers le point de début de la ligne de coupe d'extrémité, ou amène le gabarit de fracture (83a, 83b) à se déplacer sur la ligne de coupe d'extrémité à partir du point de début de changement de direction de roulement vers le point de début de la ligne de coupe d'extrémité à la position de changement de direction de roulement, et après que la direction de roulement de la molette de coupe de fracture (92) a été changée en direction dans laquelle s'étend la ligne de coupe d'extrémité virtuelle, inverse le gabarit de fracture (83a, 83b) au point de début de la ligne de coupe d'extrémité afin de changer la direction de déplacement du gabarit de fracture (83a, 83b) en direction dans laquelle s'étend la ligne de coupe d'extrémité, et amène le gabarit de fracture (83a, 83b) à se déplacer dans la direction dans laquelle s'étend la ligne de coupe d'extrémité.

8. Gabarit de fracture (83a, 83b) selon la revendication 7, dans lequel l'élément de pression est formé : d'une plaque parallèle à une surface supérieure de la plaque de verre ; et d'un caoutchouc de pression moulé en forme d'hémisphère tronqué avec une tête coupée à partir d'une surface parallèle à une surface de base et fixé à une surface inférieure de la plaque, et la partie pénétrante est formée au centre de la plaque et au centre du caoutchouc de pression.

9. Procédé de traitement de fracture consistant à fracturer une partie de bord d'une plaque de verre à traiter à l'aide d'un dispositif de fracture (75a, 75b) dans lequel est installé un gabarit de fracture (83a, 83b),
le gabarit de fracture (83a, 83b) incluant une molette de coupe de fracture (92) qui forme une ligne de coupe d'extrémité (rainure) au niveau de la partie de bord de la plaque de verre, et un support de coupe de fracture (91) qui est positionné au-dessus de la molette de coupe de fracture (92) et qui supporte la molette de coupe de fracture (92),
ledit support de coupe de fracture (91) inclut un corps principal de support (96) incluant une partie de raccordement, et une tête de support (97) fixée à une extrémité distale du corps principal de support (96),
ladite tête de support (97) étant raccordée au corps principal de support (96) par l'intermédiaire d'un palier (99),
un axe de molette de coupe s'étendant dans une direction haut-bas de la molette de coupe de fracture (92) étant excentré radialement vers l'extérieur par rapport à un axe central de support de coupe s'étendant dans une direction haut-bas du support de coupe de fracture (91), et la molette de coupe de fracture (92) pouvant tourner de 360° dans une direction autour de l'axe de molette de coupe par rapport au support de molette de coupe de fracture (91),
le procédé de traitement de fracture comprenant : une étape de changement de direction de roulement consistant à amener le gabarit de fracture (83a, 83b) à se déplacer dans une direction prédéterminée sur une surface supérieure de la partie de bord de la plaque de verre en parallèle avec la surface supérieure, faire tourner la molette de coupe de fracture (92) en butée sur la surface supérieure de la partie de bord de la plaque de verre dans la direction autour de l'axe de molette de coupe, et changer la direction de roulement de la molette de coupe de fracture (92) en une direction de déplacement du gabarit de fracture (83a, 83b) ; et une étape de formation de ligne de coupe d'extrémité consistant à former, à l'aide de la molette de coupe de fracture (92), une ligne de coupe d'extrémité sur la partie de bord de la plaque de verre le long de la direction de déplacement du gabarit de fracture (83a, 83b) après que la direction de roulement de la molette de coupe de fracture (92) a été changée en direction de déplacement du gabarit de fracture (83a, 83b),
dans lequel le gabarit de fracture (83a, 83b) inclut un élément de pression qui presse une partie de bord de la plaque de verre sur laquelle la ligne de coupe d'extrémité est formée, et un deuxième mécanisme de levage (95) qui lève et abaisse l'élément de pression,
le procédé de traitement de fracture comprenant en outre une étape de traitement de fracture consistant, après la formation de la ligne de coupe d'extrémité sur la partie de bord de la plaque de verre à l'aide de la molette de coupe de fracture (92), à abaisser l'élément de pression vers la surface supérieure de la partie de bord de la plaque de verre par le deuxième mécanisme de levage (95) et à presser la partie de bord de la plaque de verre vers le bas à l'aide de l'élément de pression afin de fracturer la partie de bord de la plaque de verre à partir du corps principal de la plaque de verre, et
**caractérisé en ce que** :
l'élément de pression inclut une partie pénétrante ouverte au centre de l'élément de pression, la molette de coupe de fracture (92) est positionnée au niveau de la partie pénétrante de l'élément de pression, et dans l'étape d'abaissement de support, lorsque le support de coupe de fracture (91) est abaissé vers la surface supérieure de la partie de bord de la plaque de verre par le premier mécanisme de levage (93), la molette de coupe de fracture (92) est exposée vers le bas à partir de la partie pénétrante de l'élément de pression.

10. Procédé de traitement de fracture selon la revendication 9, dans lequel le gabarit de fracture (83a, 83b) inclut un premier mécanisme de levage (93) qui lève et abaisse le support de coupe de fracture (91) dans une direction haut-bas, le procédé de traitement de fracture inclut une étape d'abaissement de support consistant à abaisser le support de coupe de fracture (91) vers la surface supérieure de la partie de bord de la plaque de verre par le premier mécanisme de levage (93) et amener la molette de coupe de fracture (92) à venir en butée sur la surface supérieure de la partie de bord de la plaque de verre avant l'étape de changement de direction de roulement, et dans l'étape de changement de direction de roulement, le gabarit de fracture (83a, 83b) est amené à se déplacer sur la surface supérieure de la partie de bord de la plaque de verre dans une direction prédéterminée parallèle à la surface supérieure afin de changer la direction de roulement de la molette de coupe de fracture (92) en direction de déplacement du gabarit de fracture (83a, 83b) après que la molette de coupe de fracture (92) a été amenée à venir en butée sur la surface supérieure de la partie de bord de la plaque de verre dans l'étape d'abaissement de support.

11. Procédé de traitement de fracture selon la revendication 10, comprenant en outre : une étape de levage de support consistant à lever le support de coupe de fracture (91) à partir de la surface supérieure de la plaque de verre par le premier mécanisme de levage (93) après que la ligne de coupe d'extrémité a été formée une première fois dans une région prédéterminée de la partie de bord de la plaque de verre dans l'étape de formation de ligne de coupe d'extrémité ; et une étape de déplacement de gabarit consistant à déplacer le gabarit de fracture (83a, 83b) jusqu'à une région de formation de ligne de coupe d'extrémité suivante de la partie de bord de la plaque de verre après que le support de coupe de fracture (91) a été levé dans l'étape de levage de support, dans lequel, dans l'étape d'abaissement de support, le support de coupe de fracture (91) est abaissé vers la surface supérieure de la partie de bord de la plaque de verre s'étendant jusqu'à la région de formation de ligne de coupe d'extrémité suivante par le premier mécanisme de levage (93) après que le gabarit de fracture (83a, 83b) a été déplacé jusqu'à la région de formation de ligne de coupe d'extrémité suivante dans l'étape de déplacement de gabarit, dans l'étape de changement de direction de roulement, le gabarit de fracture (83a, 83b) est amené à se déplacer dans une direction prédéterminée sur la surface supérieure de la partie de bord de la plaque de verre dans la région de formation de ligne de coupe d'extrémité suivante, et la direction de roulement de la molette de coupe de fracture (92) est changée en direction de déplacement du gabarit de fracture (83a, 83b) après que le support de coupe de fracture (91) a été abaissé dans l'étape d'abaissement de support, et dans l'étape de formation de ligne de coupe d'extrémité, le gabarit de fracture (83a, 83b) est amené à se déplacer dans une direction prédéterminée dans la région de formation de ligne de coupe d'extrémité suivante, et une ligne de coupe d'extrémité est formée sur la partie de bord de la plaque de verre dans la région de formation de ligne de coupe d'extrémité suivante par la molette de coupe de fracture (92) après que la direction de roulement de la molette de coupe de fracture (92) a été changée en direction de déplacement du gabarit de fracture (83a, 83b) dans l'étape de changement de direction de roulement.

12. Procédé de traitement de fracture selon la revendication 11, dans lequel, dans l'étape de changement de direction de roulement, la direction de roulement de la molette de coupe de fracture (92) est changée en une direction dans laquelle s'étend une ligne de coupe d'extrémité virtuelle de la partie de bord de la plaque de verre en amenant le gabarit de fracture (83a, 83b) à se déplacer vers une direction d'un point de début de la ligne de coupe d'extrémité dans une région de changement de direction de roulement à proximité de la partie de bord de la plaque de verre incluant une ligne de découpe de contour d'un corps principal de la plaque de verre ou à unde position de changement de direction de roulement à proximité de la partie de bord de la plaque de verre incluant un bord de la plaque de verre.

13. Procédé de traitement de fracture selon la revendication 11 :
dans lequel, dans l'étape de changement de direction de roulement, la direction de roulement de la molette de coupe de fracture (92) est changée en direction dans laquelle s'étend la ligne de coupe d'extrémité virtuelle de la partie de bord de la plaque de verre en amenant le gabarit de fracture (83a, 83b) à tracer une trajectoire circulaire à partir d'un point de début de changement de direction de roulement vers le point de début de la ligne de coupe d'extrémité à la position de changement de direction de roulement ; ou
dans lequel, dans l'étape de changement de direction de roulement, le gabarit de fracture (83a, 83b) est amené à se déplacer en ligne droite à partir d'un point de début de changement de direction de roulement vers le point de début de la ligne de coupe d'extrémité à la position de changement de direction de roulement, de sorte qu'un angle formé par une direction dans laquelle s'étend la ligne de coupe d'extrémité de la partie de bord de la plaque de verre et la direction de déplacement du gabarit de fracture (83a, 83b) vers le point de début de la ligne de coupe d'extrémité devient de 90° ou moins, et après que la direction de roulement de la molette de coupe de fracture (92) a été changée en direction dans laquelle s'étend la ligne de coupe d'extrémité virtuelle, la direction de déplacement du gabarit de fracture (83a, 83b) est changée en direction dans laquelle s'étend la ligne de coupe d'extrémité à un angle de 90° ou moins au point de début de la ligne de coupe d'extrémité, et le gabarit de fracture (83a, 83b) est amené à se déplacer dans la direction dans laquelle s'étend la ligne de coupe d'extrémité ; ou
dans lequel, dans l'étape de changement de direction de roulement, le gabarit de fracture (83a, 83b) est amené à se déplacer le long de la ligne de coupe d'extrémité de la partie de bord de la plaque de verre à la position de changement de direction de roulement à partir d'un point de début de changement de direction de roulement vers le point de début de la ligne de coupe d'extrémité, ou est amenée à se déplacer sur la ligne de coupe d'extrémité à partir du point de début de changement de direction de roulement vers le point de début de la ligne de coupe d'extrémité à la position de changement de direction de roulement, et après que la direction de roulement de la molette de coupe de fracture (92) a été changée en direction dans laquelle s'étend la ligne de coupe d'extrémité virtuelle, le gabarit de fracture (83a, 83b) est inversé au point de début de la ligne de coupe d'extrémité afin de changer la direction de déplacement du gabarit de fracture (83a, 83b) en direction dans laquelle s'étend la ligne de coupe d'extrémité, et est amené à se déplacer dans la direction dans laquelle s'étend la ligne de coupe d'extrémité.

14. Procédé de traitement de fracture selon l'une quelconque des revendications 11 à 13,
dans lequel l'élément de pression est formé : d'une plaque parallèle à une surface supérieure de la plaque de verre ; et d'un caoutchouc de pression moulé en forme d'hémisphère tronqué avec une tête coupée à partir d'une surface parallèle à une surface de base et fixé à une surface inférieure de la plaque, et la partie pénétrante est formée au centre de la plaque et au centre du caoutchouc de pression.
